(19) **Europäisches Patentamt / European Patent Office / Office européen des brevets**

(11) **EP 4 693 938 A1**

(12) **EUROPEAN PATENT APPLICATION**
published in accordance with Art. 153(4) EPC

(43) Date of publication:
**11.02.2026 Bulletin 2026/07**

(21) Application number: **24792868.2**

(22) Date of filing: **21.03.2024**

(51) International Patent Classification (IPC):
**H04B 7/06** (2006.01)       **H04B 17/364** (2015.01)
**H04B 17/373** (2015.01)       **H04L 5/00** (2006.01)
**H04L 27/26** (2006.01)

(52) Cooperative Patent Classification (CPC):
**H04B 7/06; H04B 17/364; H04B 17/373;
H04L 5/00; H04L 27/26**

(86) International application number:
**PCT/KR2024/003548**

(87) International publication number:
**WO 2024/219681 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.04.2023 KR 20230052310
05.12.2023 KR 20230174692**

(71) Applicant: **Samsung Electronics Co., Ltd.
Suwon-si, Gyeonggi-do 16677 (KR)**

(72) Inventors:
• **JEON, Younghyun
  Suwon-si Gyeonggi-do 16677 (KR)**
• **JANG, Seokju
  Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND DEVICE FOR ESTIMATING AND PREDICTING CHANNEL OF SECONDARY CELL IN WIRELESS COMMUNICATION SYSTEM**

(57)     The present disclosure relates to a 5G or 6G communication system for supporting higher data transmission rates. According to various embodiments of the disclosure, the present invention comprises the steps of: compressing channel information about a primary cell on the basis of channel status information (CSI) feedback received from a terminal; performing CSI recovery on compressed channel information about the secondary cell on the basis of the compressed channel information; performing the CSI recovery, and then acquiring predicted CSI of each of the primary cell and the secondary cell; generating a beamforming weight for the primary cell on the basis of the predicted CSI of the primary cell; and generating a beamforming weight for the secondary cell on the basis of the predicted CSI of the secondary cell.

FIG.29

**Description**

[Technical Field]

The disclosure relates to a wireless or mobile communication system and, specifically, to a method of compressing channel state information (CSI) of a primary cell (PCell) with low complexity by using, as pre-knowledge, a CSI feedback of a UE in a wireless or mobile communication system. The disclosure also relates to an apparatus and a method for effectively performing estimation and prediction of channel information or a compressed channel parameter of a secondary cell (SCell), based on compressed channel information or a compressed channel parameter of a PCell, in a wireless communication or mobile communication system.

[Background Art]

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a "beyond 4G network" communication system or a "post long term evolution (post LTE)" system.

The 5G communication system is considered to be implemented in ultrahigh frequency bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems.

In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multipoints (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed. With the advance of wireless communication systems as described above, various services can be provided, and accordingly there is a need for schemes to smoothly provide these services. In particular, there is a need for a technology to support services newly requested in a wireless communication system.

To satisfy the demand for wireless data traffic, a 5G system (or NR (new radio or next radio) system) has been commercialized to provide users with a service having a high data rate via the 5G system, further to 4G. Further, it is expected to be capable of providing various wireless communication services for diverse purposes, including a service through the Internet of Things (IoT) or a service requiring a high reliability for a specific purpose. Currently, the open radio access network (O-RAN), which has been established by network operators and equipment providers in the field of a mixed system including the 4G and 5G systems, has defined a new network element (NE) and interface standards and presented an O-RAN structure, based on the existing 3GPP standards.

[Disclosure of Invention]

[Technical Problem]

Based on the above discussions, the disclosure provides a method for compressing channel information of a PCell with low complexity by using CSI feedback of a UE in a wireless or mobile communication system, and an apparatus and method for estimating and predicting a channel of an SCell, based on compressed channel information or compressed channel parameter of a PCell.

More specifically, the disclosure provides a method for compressing channel information of a PCell with low complexity by extracting information for compressing SRS channel information by a User Equipment (UE) from a low resolution CSI feedback, such as a type 1 CSI codebook.

In addition, the disclosure provides a method and an apparatus for, in case that which a base station is unable to obtain channel information of an SCell (e.g., in case that a UE does not support an uplink carrier aggregation (UL CA) or a sounding reference signal (SRS) carrier antenna switching function), recovering channel information of the SCell from SRS uplink channel information obtained in a primary cell (PCell), and performing integrated channel prediction for the PCell and the SCell, based on the recovered channel information of the SCell, in a wireless communication system.

In addition, the disclosure provides a method and an apparatus for solving a problem that the SRS update cycle is delayed due to SRS resource division between carriers, by using a technique proposed by the disclosure, even in a case where a base station is capable of obtaining channel information of an SCell in a wireless communication system (for example, in a case where a function such as SRS antenna switching for multiple carrier components (CCs) is supported).

In addition, the disclosure provides a base station device including a distributed unit (DU) and a radio unit (RU) to effectively predict a channel of an SCell in a wireless communication system.

[Solution to Problem]

According to various embodiments disclosed herein, A method performed by a base station in a wireless communication system, the method comprising: compressing channel information of a primary cell, based on channel status information (CSI) feedback received from a UE; performing CSI recovery for compressed channel information of a secondary cell, based on the compressed channel information; after performing the CSI recovery, obtaining predicted CSI of each of the primary cell and the secondary cell; generating a beamforming weight for the primary cell, based on the predicted CSI of the primary cell; and generating a beamforming weight for the secondary cell, based on the predicted CSI of the secondary cell.

According to various embodiments disclosed herein, A base station in a wireless communication system, comprising: a transceiver; and at least one processor coupled to the transceiver, wherein the at least one processor is configured to: compress channel information of a primary cell, based on a channel status information (CSI) feedback received from a UE; based on the compressed channel information, perform CSI recovery for the compressed channel information of a secondary cell; after performing the CSI recovery, obtain predicted CSI of each of the primary cell and the secondary cell; generate a beamforming weight for the primary cell, based on the predicted CSI of the primary cell; and generate a beamforming weight for the secondary cell, based on the predicted CSI of the secondary cell.

[Advantageous Effects of Invention]

An apparatus and a method according to various embodiments of the disclosure are able to obtain channel information of an SCell without SRS resource waste, even when a function such as UL SRS antenna switching in a TDD band is not supported.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 illustrates a wireless communication system according to various embodiments of the disclosure.
FIG. 2 illustrates a structure of a base station in a wireless communication system according to various embodiments of the disclosure.
FIG. 3 illustrates a structure of a UE in a wireless communication system according to various embodiments of the disclosure.
FIG. 4 illustrates a structure of a communication unit in the wireless communication system according to various embodiments of the disclosure.
FIG. 5 illustrates a structure of resources in a time-frequency domain in a wireless communication system according to various embodiments of the disclosure.
FIG. 6 illustrates a concept of a method of estimating a channel of a secondary cell (SCell) according to various embodiments of the disclosure.
FIG. 7 illustrates a configuration of carrier aggregation (CA) and time division duplex (TDD) C-band according to various embodiments of the disclosure.
FIG. 8 illustrates frequency characteristics according to a signal path between a base station and a UE in relation to various embodiments of the disclosure.
FIG. 9A illustrates a structure for generating a compressed channel and estimating and predicting channel information of a PCell and an SCell in relation to various embodiments of the disclosure;
FIG. 9B illustrates a structure for generating a compressed channel and estimating and predicting channel information of a PCell and an SCell in connection with various embodiments of the disclosure.
FIG. 10A illustrates a structure for generating a compressed channel and estimating and predicting channel information of a PCell and an SCell according to various embodiments of the disclosure.
FIG. 10B illustrates a structure for generating a compressed channel and estimating and predicting channel information of a PCell and an SCell in relation to various embodiments of the disclosure.

FIG. 11 illustrates a channel structure including a bandwidth of a PCell and an SCell related to various embodiments of the disclosure.

FIG. 12A illustrates reciprocity of an angle/delay domain between an uplink channel and a downlink channel of a PCell and reciprocity of an angle/delay domain between a PCell and an SCell having different frequency bands, according to various embodiments of the disclosure.

FIG. 12B illustrates a process of extracting a spatial domain basis to facilitate compression of the spatial domain of an SRS channel, from beam index information of a partially parsed spatial domain of Type 1 PMI by using the angle/delay domain reciprocity between the uplink and the downlink.

FIG. 12C illustrates a process of extracting the remaining main basis from channel signal components excluding the signal components of the basis of type 1 CSI feedback extracted from the SRS channel.

FIG. 13 illustrates a method for predicting a channel of an SCell, based on a sounding reference signal (SRS) according to various embodiments of the disclosure.

FIG. 14 illustrates a method for predicting a channel of an SCell, based on a precoding matrix indicator (PMI) according to various embodiments of the disclosure.

FIG. 15 illustrates a channel prediction method considering a PCell according to various embodiments of the disclosure.

FIG. 16 illustrates a channel prediction method considering a PCell and an SCell according to various embodiments of the disclosure.

FIG. 17 illustrates a spatial domain compression method according to various embodiments of the disclosure.

FIG. 18 illustrates a channel state information (CSI) recovery method according to various embodiments of the disclosure.

FIG. 19 illustrates a CSI recovery and channel prediction operation of a base station according to various embodiments of the disclosure.

FIG. 20 illustrates a CSI recovery and channel prediction method based on an SRS according to various embodiments of the disclosure.

FIG. 21 illustrates a CSI recovery and channel prediction method based on an SRS according to various embodiments of the disclosure.

FIG. 22 illustrates a method for compression of spatial domain and frequency domain according to various embodiments of the disclosure.

FIG. 23 illustrates a CSI recovery and channel prediction method based on a PMI according to various embodiments of the disclosure.

FIG. 24 illustrates a CSI recovery and channel prediction method based on a PMI according to various embodiments of the disclosure.

FIG. 25 illustrates a concept of a method for estimating a current state by using a Kalman filter according to various embodiments of the disclosure.

FIG. 26 illustrates a configuration of a base station related to various embodiments of the disclosure.

FIG. 27A illustrates a configuration of a base station that performs a method for estimating and predicting a channel of an SCell according to various embodiments of the disclosure.

FIG. 27B illustrates a configuration of a base station that performs a method for estimating and predicting a channel of an SCell according to various embodiments of the disclosure.

FIG. 28A illustrates a configuration of a base station for performing a method for estimating and predicting a channel of an SCell, based on channel information secured in a PCell, according to various embodiments of the disclosure.

FIG. 28B illustrates a configuration of a base station which performs a method of estimating and predicting a channel of an SCell without SRS information of the SCell, based on at least one of an SRS or a PMI of a PCell, according to various embodiments of the disclosure.

FIG. 29 illustrates a channel prediction method for a PCell and an SCell according to various embodiments of the disclosure.

FIG. 30 illustrates a channel prediction method for an SCell according to various embodiments of the disclosure.

[Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

The present disclosure described below relates to a method and an apparatus for predicting a channel of a secondary cell (SCell) in a wireless communication system, based on channel information (e.g., channel state information (CSI)) of a primary cell (PCell). Here, multiple serving cells (e.g., a PCell and multiple SCells) constituting carrier aggregation (CA) may be aggregated together to provide services for the UE. For example, the PCell may perform at least one of the following operations: radio resource control (RRC) connection configuration/re-configuration, a random access (RA) procedure, radio link monitoring (RLM), a handover procedure, or transmission of a physical channel (including at least one of, e.g., a physical downlink control channel (PDCCH), a physical downlink shared channel (PDSCH), a physical uplink control channel (PUCCH), or a physical uplink shared channel (PUSCH). The SCell may be activated or deactivated, and the activation or deactivation of the SCell may be performed through medium access control (MAC) layer signaling. In addition, the SCell may transmit a physical channel (including at least one of a PDSCCH, a PDSCH, or a PUSCH).

The disclosure relates to a method and an apparatus for predicting a channel of an SCell, based on channel information of a PCell, in case that the wireless communication system includes a plurality of serving cells as described above and a base station is unable to obtain a channel information of the SCell. For example, the case in which the base station is unable to obtain channel information of the SCell may refer to the case in which the UE does not support an uplink (UL) CA or a sounding reference signal (SRS) carrier antenna-switching function. However, the disclosure is not limited to the case in which the base station is unable to obtain channel information of the SCell. For example, even when the base station is able to obtain channel information of the SCell (e.g., in the case of supporting an SRS carrier antenna switching function for multiple carrier components (CCs)), the technique proposed by the disclosure may be applied. According to the method proposed by the disclosure, a problem in which the SRS update cycle is slowed down by resource division may be alleviated.

Specifically, the base station may recover a channel of the SCell, based on a precoding matrix indicator (PMI) or a sounding reference signal (SRS) uplink channel information obtained in the PCell. In addition, the base station may perform integrated channel prediction for the PCell and the SCell, based on the information of the recovered channel of the SCell. In addition, the base station may derive a beamforming weight value suitable for each cell, based on channel information of the PCell and the SCell. Therefore, the base station may obtain more accurate time-varying channel information of a PCell and an SCell in a situation in which a UE is moving, thereby increasing a massive MIMO gain of the PCell and the SCell. Hereinafter, specific operations for the base station to integrally perform channel prediction for a PCell and an SCell will be described.

In addition, according to an embodiment of the disclosure, in a situation in which only PCell SRS information is obtainable, a massive multiple-input and multiple-output (MIMO) unit (MMU) having a 32T32R or 64T64R antenna structure supporting 5G NR broadband TDD bands supporting multiple component carriers (CCs) of CA may support an SRS-based multiple user (MU) MIMO function for both a PCell and an SCell in view of DL CA, even in a situation in which there is no UE supporting SRS via UL CA or supporting UL SRS antenna switching.

A device and a method according to various embodiments of the disclosure may obtain channel information of an SCell without SRS resource waste, even when a function such as UL SRS antenna switching in a TDD band is not supported.

According to a device and a method according to various embodiments of the disclosure, in a situation where high resolution CSI feedback information of only one cell with respect to a PCell or SCell is obtainable in a 32T32R or 64T64R massive MIMO (multiple-input and multiple-output) unit supporting a 5G NR wideband FDD band or TDD band supporting multiple CCs, supporting of a multiple user (MU) MIMO function layer based on high resolution CSI for the entire multiple CCs including the PCell and SCell from the DL CA viewpoint may be possible.

In the following description, terms referring to signals (e.g., message, information, preamble, signaling, sequence, and stream), terms referring to resources (e.g., symbol, slot, subframe, radio frame (RF), subcarrier, resource element (RE), resource block (RB), bandwidth part (BWP), and occasion), terms for operation states (e.g., step, operation, and procedure), terms referring to data (e.g., information, bit, symbol, and codeword), terms referring to channels, terms referring to control information (e.g., downlink control information (DCI), medium access control control element (MAC CE), and radio access control (RRC) signaling), terms referring to network entities, terms referring to device elements, and the like are illustratively used for the sake of convenience. Therefore, the disclosure is not limited by the terms as described below, and other terms referring to subjects having equivalent technical meanings may be used.

In the following description, the terms "physical channel" and "signal" may be interchangeably used with the term "data" or "control signal". For example, the term "PDSCH" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

Furthermore, as used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

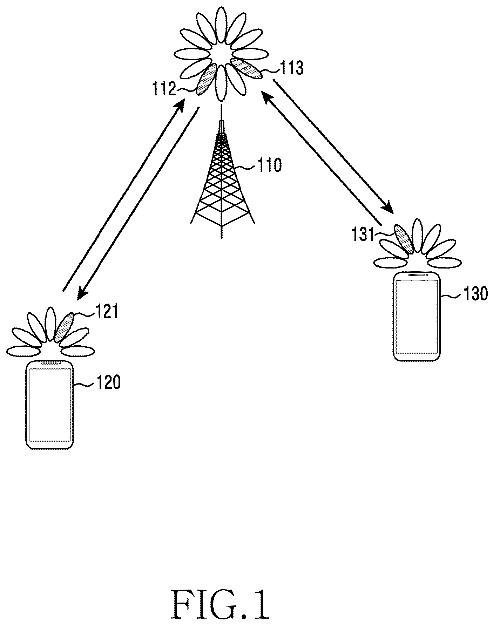

FIG. 1 illustrates a wireless communication system according to various embodiments of the disclosure. FIG. 1 illustrates a base station 110, a UE 120, and a UE 130 as some nodes using a wireless channel in the wireless communication system. Although FIG. 1 illustrates only one base station, other base stations identical or similar to the base station 110 may be further included.

The base station 110 is a network infrastructure that provides the UEs 120 and 130 with radio access. The base station 110 has coverage defined as a certain geographical area, based on a distance over which a signal can be transmitted. In addition to the term "base station", the base station 110 may be referred to as not only "base station" but also "access point (AP)", "eNodeB (eNB)", "5th generation node (5G node)", "next generation nodeB (gNB)", "wireless point", "transmission/reception point (TRP)", or other terms having equivalent technical meanings.

Each of the UE 120 and the UE 130 is a device used by a user and performs communication with the base station 110 through a wireless channel. A link directed from the base station 110 to the UE 120 or the UE 130 is referred to as a downlink (DL), and a link directed from the UE 120 or the UE 130 to the base station 110 is referred to as an uplink (UL). In addition, although not illustrated in FIG. 1, according to an embodiment, the terminal 120 and the terminal 130 may perform communication with each other through a wireless channel. A link (device-to-device link, D2D) between the terminal 120 and the terminal 130 is called a sidelink, and a sidelink may be used together with a PC5 interface. In some cases, at least one of the UE 120 and the UE 130 may be operated without a user's involvement. That is, at least one of the UE 120 and the UE 130 may be a device configured to perform machine type communication (MTC) without being carried by the user. In addition to the term "user equipment (UE)", each of the UE 120 and the UE 130 may also referred to as "terminal", "mobile station", "subscriber station", "remote terminal", "wireless terminal", "user device", or other terms having equivalent technical meanings.

The base station 110, the UE 120, and the UE 130 may transmit and receive wireless signals in millimeter wave (mmWave) bands (e.g., 28GHz, 30GHz, 38GHz, and 60GHz). In this regard, in order to improve a channel gain, the base station 110, the UE 120, and the UE 130 may perform beamforming. Here, beamforming may include transmission beamforming and reception beamforming. That is, the base station 110, the UE 120, and the UE 130 may apply directivity to transmission signals or reception signals. To this end, the base station 110 and the UEs 120 and 130 may select serving beams 121 and 131 through a beam search or beam management procedure. After the serving beams 121 and 131 are selected, subsequent communication may be performed through resources having a quasi-co-located (QCL) relation with resources used for transmission of the serving beams 121 and 131.

If large-scale characteristics of a channel, via which a symbol on a first antenna port has been transferred, can be inferred from a channel via which a symbol on a second antenna port has been transferred, it may be evaluated that the first antenna port and the second antenna port are in a QCL relationship. For example, the large-scale characteristics may include at least one of delay spread, Doppler spread, Doppler shift, average gain, average delay, and spatial receiver parameter.

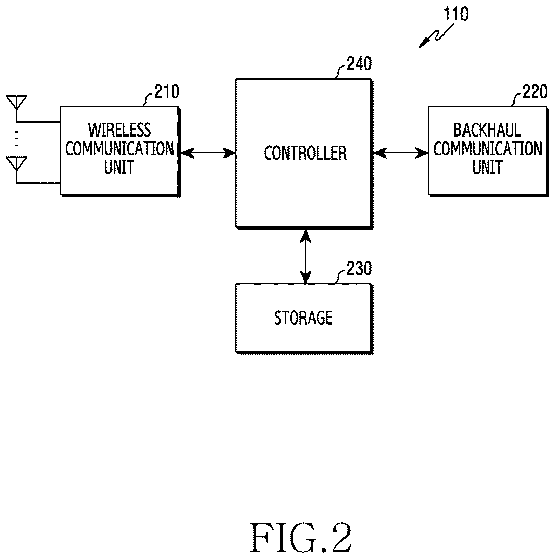

FIG. 2 illustrates a structure of a base station in a wireless communication system according to various embodiments of the disclosure. The structure illustrated in FIG. 2 may be understood as a structure of the base station 110. As used herein, such terms as "... unit" and "-er" refer to a unit configured to process at least one function or operation, and may be implemented as hardware, software, or a combination of hardware and software. Referring to FIG. 2, the base station includes a wireless communication unit 210, a backhaul communication unit 220, a storage 230, and a controller 240.

The wireless communication unit 210 performs functions for transmitting/receiving signals through a radio channel. For example, the wireless communication unit 210 performs functions of conversion between baseband signals and bitstrings according to the physical layer specifications of the system. For example, during data transmission, the wireless communication unit 210 encodes and modulates a transmitted bitstring to generate complex symbols. In addition, during data reception, the wireless communication unit 210 demodulates and decodes a baseband signal to reconstruct a received bitstring.

Furthermore, the wireless communication unit 210 up-converts a baseband signal to an RF band signal, transmits the same through an antenna, and down-converts an RF band signal received through the antenna to a baseband signal. To this end, the wireless communication unit 210 may include a transmission filter, a reception filter, an amplifier, a mixer, an oscillator, a digital to analog converter (DAC), an analog to digital converter (ADC), and the like. In addition, the wireless communication unit 210 may include multiple transmission/reception paths. Furthermore, the wireless communication unit 210 may include at least one antenna array including multiple antenna elements.

In terms of hardware, the wireless communication unit 210 may include a digital unit and an analog unit, and the analog unit may include multiple sub-units according to operation power, frequencies, etc. The digital unit may be implemented by at least one processor (e.g., digital signal processor (DSP)).

The wireless communication unit 210 transmits and receives signals as described above. Accordingly, all or part of the wireless communication unit 210 may be referred to as a "transmitter", a "receiver", or a "transceiver". In addition, as used in the following description, the meaning of "transmission and reception performed through a radio channel" includes the meaning that the above-described processing is performed by the wireless communication unit 210.

The backhaul communication unit 220 provides an interface for performing communication with other nodes in the network. That is, the backhaul communication unit 220 converts a bitstring, transmitted from the base station to any other node, for example, any other access node, any other base station, an upper node, or a core network, into a physical signal, and converts a physical signal, received from any other node, into a bitstring.

The storage 230 may store basic programs, application programs, and data, such as configuration information, for operation of the main base station. The storage 230 may include a volatile memory, a nonvolatile memory, or a combination of a volatile memory and a nonvolatile memory. In addition, the storage 230 provides the stored data at the request of the controller 240.

The controller 240 controls the overall operation of the base station. For example, the controller 240 transmits/receives signals through the wireless communication unit 210 or the backhaul communication unit 220. In addition, the controller 240 records data in the storage 230 and reads the data from the storage 240. Furthermore, the controller 240 may perform functions of protocol stacks required by communication specifications. According to another embodiment, the protocol stacks may be included in the wireless communication unit 210. To this end, the controller 240 may include at least one processor. For example, the controller 240 may control the base station to perform operations according to various embodiments described below.

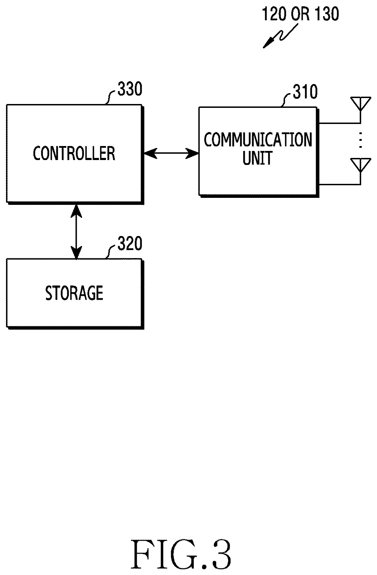

FIG. 3 illustrates a structure of a UE in a wireless communication system according to various embodiments of the disclosure. The structure illustrated in FIG. 3 may be understood as a structure of the UE 120. As used herein, such terms as "... unit" and "... er" refer to a unit configured to process at least one function or operation, and may be implemented as hardware, software, or a combination of hardware and software. Referring to FIG. 3, the UE may include a communication unit 310, a storage 320, and a controller 330.

The communication unit 310 performs functions for transmitting/receiving signals through a radio channel. For example, the communication unit 310 performs functions of conversion between baseband signals and bitstrings according to the physical layer specifications of the system. For example, during data transmission, the communication unit 310 encodes and modulates a transmitted bitstring to generate complex symbols. In addition, during data reception, the communication unit 310 demodulates and decodes a baseband signal to restore a received bitstring. In addition, the communication unit 310 up-converts a baseband signal to an RF band signal, transmits the same through an antenna, and down-converts an RF band signal received through the antenna to a baseband signal. For example, the communication unit 310 may include a transmission filter, a reception filter, an amplifier, a mixer, an oscillator, a DAC, an ADC, and the like.

In addition, the communication unit 310 may include multiple transmission/reception paths. Moreover, the communication unit 310 may include at least one antenna array including multiple antenna elements. In terms of hardware, the communication unit 310 may include a digital circuit and an analog circuit (e.g., a radio frequency integrated circuit (RFIC)). The digital circuit and the analog circuit may be implemented as a single package. In addition, the communication unit 310 may include multiple RF chains. Furthermore, the communication unit 310 may perform beamforming.

The communication unit 310 transmits and receives signals as described above. Accordingly, all or part of the communication unit 310 may be referred to as a "transmitter", a "receiver", or a "transceiver". In addition, as used in the following description, the meaning of "transmission and reception performed through a radio channel" includes the meaning that the above-described processing is performed by the communication unit 310.

The storage 320 stores basic programs, application programs, and data, such as configuration information, for operation of the main base station. The storage 320 may include a volatile memory, a nonvolatile memory, or a combination of a volatile memory and a nonvolatile memory. In addition, the storage 320 provides the stored data at the request of the controller 330.

The controller 330 controls the overall operation of the UE. For example, the controller 330 transmits and receives signals via the communication unit 310. In addition, the controller 330 records data in the storage 320 and reads the data from the storage 320. In addition, the controller 330 may perform functions of protocol stacks required by communication specifications. To this end, the controller 330 may include at least one processor or micro-processor, or may be a part of a processor. In addition, a part of the communication unit 310 and the controller 330 may be referred to as a communication processor (CP). For example, the controller 330 may control the UE to perform operations according to various embodiments described below.

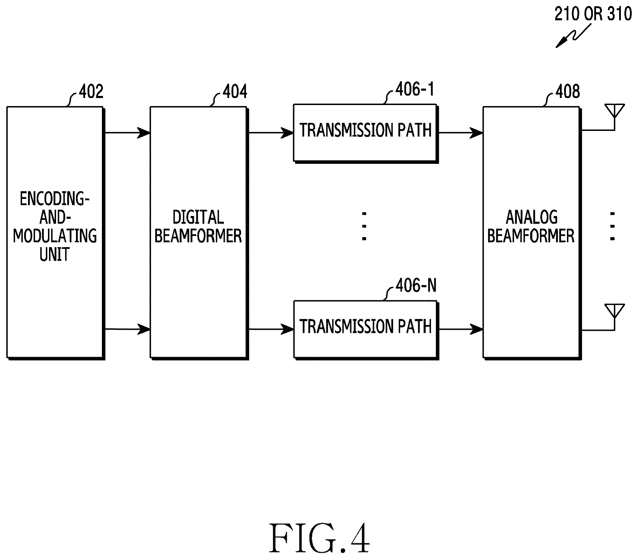

FIG. 4 illustrates a structure of a communication unit in a wireless communication system according to various embodiments of the disclosure. FIG. 4 illustrates an example of a detailed structure of the wireless communication unit 210 of FIG. 2 or the communication unit 310 of FIG. 3. Specifically, FIG. 4 illustrates elements for performing beamforming, as a part of the wireless communication unit 210 of FIG. 2 or the communication unit 310 of FIG. 3.

Referring to FIG. 4, the wireless communication unit 210 or the communication unit 310 includes an encoding-and-modulating unit 402, a digital beamformer 404, a plurality of transmission paths 406-1 to 406-N, and an analog beamformer 408.

The encoder and modulator 402 perform channel encoding. For channel encoding, at least one of a low density parity check (LDPC) code, a convolution code, and a polar code may be used. The encoding-and-modulating unit 402 generates modulation symbols by performing constellation mapping.

The digital beamformer 404 performs beamforming for a digital signal (e.g., modulation symbols). To this end, the digital beamformer 404 multiplies modulation symbols by beamforming weights. Here, the beamforming weights are used to change a magnitude and a phase of a signal, and may be referred to as "precoding matrix", "precoder", or the like. The digital beamformer 404 outputs digital-beamformed modulation symbols to the plurality of transmission paths 406-1 to 406-N. According to a multiple input multiple output (MIMO) transmission technique, the modulation symbols may be multiplexed, or the same modulation symbol may be provided to the plurality of transmission paths 406-1 to 406-N.

The multiple transmission paths 406-1 to 406-N convert digital beamformedsignals into analog-signals. To this end, each of the multiple transmission paths 406-1 to 406-N may include an inverse fast Fourier transform (IFFT) operator, a cyclic prefix (CP) inserter, a DAC, and an up-converter. The CP inserter is designed for an orthogonal frequency division multiplexing (OFDM) method, and may be excluded in a case where a different physical layer method (e.g., filter bank multi-carrier (FBMC)) is applied. That is, the multiple transmission paths 406-1 to 406-N provide independent signal processing processes to multiple streams generated via digital beamforming. However, depending on an implementation scheme, some elements of the multiple transmission paths 406-1 to 406-N may be used in common.

The analog beamformer 408 performs beamforming on an analog signal. To this end, the digital beamformer 404 multiplies analog signals by beamforming weights. In this case, the beamforming weights are used to change the magnitude and phase of a signal. Specifically, according to a connection structure between the multiple transmission paths 406-1 to 406-N and antennas, the analog beamformer 440 may be configured in various manners. For example, each of the multiple transmission paths 406-1 to 406-N may be connected to one antenna array. As another example, the multiple transmission paths 406-1 to 406-N may be connected to one antenna array. As another example, the multiple transmission paths 406-1 to 406-N may be adaptively connected to one antenna array or may be connected to two or more antenna arrays.

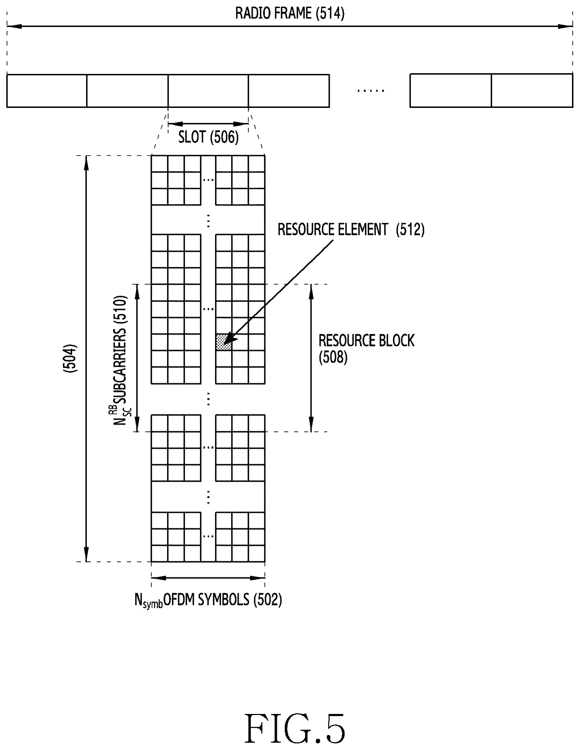

FIG. 5 illustrates a structure of resources in a time-frequency domain in a wireless communication system according to various embodiments of the disclosure. FIG. 5 illustrates a basic structure of a time-frequency domain which is a radio resource area used to transmit data or control channels in a downlink or uplink. Hereinafter, in the disclosure, orthogonal frequency division multiplexing (OFDM) defined by time-frequency resources is exemplified as a resource structure, but resource structure types of various schemes, such as TDM, FDM, CDM, or SC-FDMA, capable of segmentation based on time and frequency may be defined.

Referring to FIG. 5, the horizontal axis indicates a time domain, and the vertical axis indicates a frequency domain. A minimum transmission unit in the time domain is an OFDM symbol, and Nsymb number of OFDM symbols 502 constitute one slot 506. For example, in LTE or NR systems, the length of a subframe may be defined as 1.0 ms, and the length of a radio frame 514 may be defined as 10 ms. A minimum transmission unit in the frequency domain is a subcarrier, and a carrier bandwidth configuring a resource grid is configured by NBW number of subcarriers 504.

A basic unit of resources in the time-frequency domain is a resource element (hereinafter, "RE") 512, and may be represented by an OFDM symbol index and a subcarrier index. A resource block may include multiple resource elements. In LTE systems, a resource block (RB) (or physical resource block, hereinafter, referred to as "PRB") is defined as Nsymb number of consecutive OFDM symbols in the time domain and NSCRB number of consecutive subcarriers in the frequency domain. In NR systems, a resource block (RB) 508 may be defined as NSCRB number of consecutive subcarriers 510 in the frequency domain. The one RB 508 includes NSCRB number of REs 512 on the frequency axis. In general, a minimum transmission unit of data is an RB, and NSCRB indicating the number of subcarriers is 12. The frequency domain may include common resource blocks (CRBs). A physical resource block (PRB) may be defined in a bandwidth part (BWP) in the frequency domain. CRB and PRB numbers may be determined according to a subcarrier spacing. A data transmission rate (data rate) may increase in proportion to the number of RBs scheduled to a terminal.

In the following, channel information according to various embodiments may be obtained by various methods. The base station may obtain channel information before performing a channel estimation procedure. The obtained channel information is stored in a buffer. The buffer may include an SRS buffer or a CSI buffer. The SRS buffer may store a reception value for SRSs or channel estimation values based on an SRS. The CSI buffer may include pieces of CSI received from the UE. In addition, the channel information may include noise information.

Channel information may be obtained by various methods. According to various embodiments of the disclosure, the base station may perform channel estimation, based on SRSs received from the UE. In a TDD system, channel reciprocity may be assumed. That is, a downlink channel may be estimated from an uplink signal. The base station may perform SRS-based channel estimation in the TDD system. In this case, an SRS transmission period, the position of a resource on which an SRS is transmitted (e.g., a time resource or a frequency resource), the number of antennas of the UE transmitting an SRS, and whether beamforming of an SRS is performed (e.g., SRS resource indicator (SRI)) may be determined based on SRS configuration information transmitted by the base station to the UE. The base station may determine an SRS configuration for the UE to perform smooth channel estimation.

According to various embodiments of the disclosure, the base station may perform channel estimation, based on CSI received from the UE. The base station may transmit a cell-specific reference signal (CRS) or CSI-reference signal (RS) signal to the UE. The UE may generate CSI, based on received CSI or CSI-RSs. The CSI may include various parameters. The CSI may include at least one of a CSI-RS resource indicator (CRI), a rank indicator (RI), a precoding matrix indicator (PMI), a channel quality indicator (CQI), or a layer indicator (Li). The CRI indicates a resource of a CSI-RS related to a preferred beam. The RI indicates information related to a rank of a channel, and denotes the number of streams received by the UE through the same resource. The PMI may indicate a precoding matrix recommended to the base station when layers, the number of which is notified by the RI, are used. The PMI is a value reflecting a spatial characteristic of a channel, and the UE may indicate the recommended precoding matrix in a form of an index. The precoding matrix may be stored in each of the base station and the UE in a form of a codebook including multiple complex weights. The CQI indicates a modulation scheme and a code rate relating to PDSCH transmission which may be received at a block error rate (BLER) equal to or smaller than a predetermined value, when the RI and PMI recommended by the UE are used.

The base station may perform channel estimation, based on CSI received from the UE. In order to more correctly predict parameters required for channel estimation, the base station may configure CSI in a required method. A CSI configuration may include at least one of a CSI measurement configuration, a CSI report configuration, and a CSI-RS configuration. The base station may adaptively generate a CSI configuration according to a required channel estimation method and transmit the generated CSI configuration to the UE through RRC signaling.

In the case of an LTE system, while a CRS is an always transmitted signal (always-on signal), CSI may be periodically or aperiodically reported. In addition, a CSI-RS may also be periodically or aperiodically transmitted. The base station may predict a channel from periodically received CSI, and according to an embodiment, may request aperiodic CSI reporting as needed (e.g., CSI reporting on a physical uplink shared channel (PUSCH)). In a case of an NR system, CSI and a CSI-RS have more flexible designs. That is, a CSI-RS may be periodically, semipersistently, or aperiodically transmitted. In addition, the base station may configure the UE to periodically, semi-statically, or aperiodically report CSI. The base station may predict a channel, based on a periodic CSI-RS and a periodic CSI report, and according to an embodiment, may reconfigure a CSI-RS and a CSI report as needed. That is, in the disclosure, periodic transmission and periodic reporting are described as an example, but these merely correspond to an example, and CSI-RS transmission and CSI reporting may be configured in various methods.

The base station (e.g., gNB or eNB) has difficulty in obtaining channel information on all time-frequency resources, and thus may receive only CSI for a partial resource area. For example, a CRS of LTE is transmitted over all bands, but supports only up to four antennas. Therefore, smooth channel estimation is difficult in an 8Tx or more antenna environment after LTE Release 10, and a CSI-RS is also not transmitted over all bands. That is, the base station obtains only sampled channel information specified by some times (e.g., a unit of slots) or some frequencies (e.g., a unit of RBs) among all resources, and thus accurate channel estimation is difficult.

UEs may continuously move in a radio environment. In order to provide a robust communication environment to such UEs, the base station performing scheduling is required to predict a more correct channel state. In the current 3GPP specifications, scheduling is performed, based on an SRS transmitted by a terminal (e.g., satisfaction of channel reciprocity in time division duplex (TDD)) or based on CSI reported by a terminal (e.g., frequency division duplex (FDD) satisfaction). However, such an SRS or CSI is not updated at every transmission time interval (TTI) as a scheduling unit, and thus may not be accurate. Moreover, continuously transmitting an SRS or frequently reporting CSI imposes a burden on a terminal. Therefore, a method is required for a base station to predict or estimate the current channel state more accurately, from periodically or intermittently obtained channel information, until next channel information is acquired.

Furthermore, the disclosure proposes a method for predicting or estimating a channel of an SCell from channel information of a PCell. In particular, in case that a base station cannot acquire channel information, it may be important to predict or estimate a channel of an SCell, based on channel information of PCell. More specifically, the channel estimation technique proposed below in the disclosure includes a technique using SRS channel information or PMI (e.g., Type 1 PMI channel information through Type 1 codebook with low CSI accuracy or eType 2 PMI channel information through enhanced type 2 (eType 2) codebook with high CSI accuracy). However, channel estimation according to various embodiments of the disclosure is not limited to the above example. A network entity other than a base station, or a separate computational device provided in the base station may perform channel estimation according to various embodiments described below, or in distributed deployment or distributed MIMO, a CU or equipment connected to the CU may also perform channel estimation. Although an example of estimating a downlink channel from a base station to a UE will be described, it is obvious that channel estimation of the disclosure is also appliable to channel estimation of an uplink channel from a UE to a base station or channel estimation of a sidelink channel between UEs. Hereinafter, the term "Type 1" may be called "Type I", "type 1", or "a first type". Also, the term "Type 2" may be called "Type II", "type 2", or "a second type".

The channel estimation method according to various embodiments of the disclosure may relate to a method for estimating integrated channel information of a PCell and an SCell, based on channel information acquired from the PCell. "Predicting a channel state" may be replaced with obtaining or acquiring, calculating, identifying, predicting, or estimating a channel state, or any other term having a meaning equivalent thereto. Also, as used in embodiments of the disclosure, a PCell may be called "P cell" or "primary cell", and an SCell may be called "S cell" or "secondary cell".

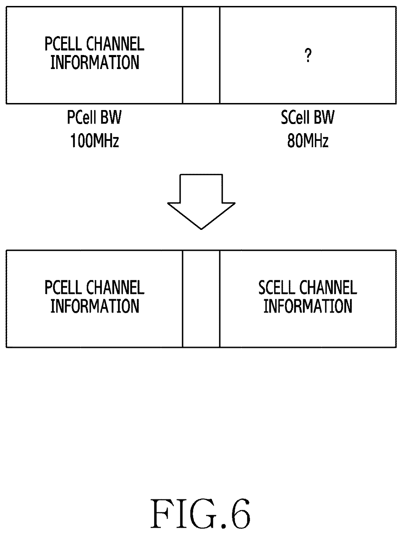

FIG. 6 illustrates a concept of a channel estimation method of an SCell according to various embodiments of the disclosure.

Referring to FIG. 6, a channel including a PCell having a 100 MHz bandwidth, a bandwidth gap, and an SCell having an 80 MHz bandwidth may be described as an example of a technique for SCell channel prediction in the disclosure. The frequency-selective uplink channel information of the PCell may be obtained by a channel estimation algorithm (for example, a minimum mean square error (MMSE)/Wiener filter) using a pilot or SRS in the frequency domain in a layer 1 (L1) modem. In this case, if the SRS is not supported in the SCell, the base station may have difficulty in obtaining the frequency-selective channel information of the SCell. In addition, although it is possible to estimate SCell channel information by using SRS supported by the PCell and by performing frequency domain outerpolation(extrapolation) on the frequency domain channel information of the PCell, it is difficult to estimate channel information of the SCell over a wide adjacent band by using only the frequency domain channel information of PCell. Even when a highcomplexity Wiener filter or matrix completion algorithm is performed, direct channel estimation in the frequency domain with regard to the SCell based on the channel information of the frequency domain of the channel PCell may have a low accuracy. For example, even in case that the RBs adjacent to the PCell BW are estimated with high channel estimation accuracy, a problem of a severe deterioration of the channel estimation accuracy of the RBs corresponding to the frequency domain of the SCell BW that are distant from the PCell BW may occur. Therefore, a method of simply estimating a frequency domain channel of the SCell by simple interpolation or outerpolation(extrapolation) , based on the channel information of PCell in the frequency domain, may not allow for acquisition of high-resolution channel information, and thus, may not be able to provide a multiple user (MU)-MIMO beamforming (BF) gain in the SCell. For example, in the case of Ap (aperiodic)-CSI based on Type 1 PMI, the bit payload is small, so CSI reporting for multiple CCs including an SCell is possible. However, since the channel information has a low resolution (low resolution), it may be difficult to obtain accurate channel information for the SCell. Therefore, it may be difficult to obtain a multiple user (MU)-MIMO beamforming (BF) gain in an SCell.

As in the case of SRS, in case that the cell supporting high-resolution CSI in a massive MIMO unit is limited to a single PCell due to the bit overhead problem, if MU-MIMO is supported, many more MU-MIMO layers than required layers may be supported for each radio resource. Therefore, in case that the channel information is accurate, it may have an advantage of maximizing the transmission efficiency compared to SU-MIMO with a maximum of 4 layers. However, there may be a problem in that such transmission efficiency may be obtained only in one cell of a PCell. Because the 3GPP NR standard has a large bit payload (several hundred bits) compared to Type2 PMI or eType2 PMI Type 1 PMI (for example, a maximum of 12 bits) of the 3GPP NR standard, the 3GPP standard defines that a CSI report is possible for multiple CCs. However, even in the case of a strong-field UE, a situation in which a CSI report is possible for only a single carrier component (CC) may occur due to a UE capability restriction related to eType 2 PMI or a restriction of a field situation in which the UE is located. In addition, estimating and predicting high resolution CSI information of an SCell from eType2 CSI report information of a PCell may be used as useful channel information in terms of MU-MIMO.

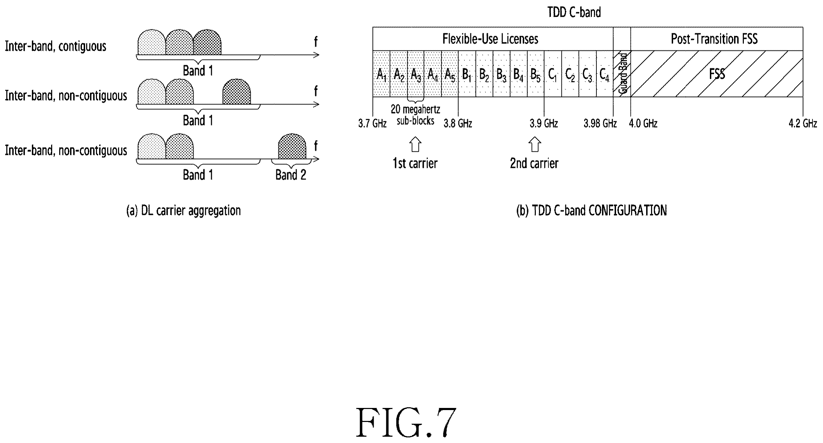

FIG. 7 illustrates configuration of carrier aggregation and TDD (time division duplex) C-band according to various embodiments of the disclosure.

Referring to FIG. 7, an example of configuration of carrier components (CCs) in intra-band contiguous and non-contiguous or inter-band non-contiguous aggregation, in relation to CA, may be described. CA may be used in both FDD (frequency division duplex) and TDD, and FIG. 7 may illustrate an example in TDD. The UE may have DL and UL (downlink) resources allocated thereto in aggregation resources including multiple CCs. In this case, the CCs may have different bandwidths. In addition, a CC may refer to each aggregated carrier. For example, in LTE Release 10, the bandwidth of a CC may have one value among 1.4, 3, 5, 10, 15, or 20 MHz, and a maximum of five component carriers may be aggregated, so that the maximum aggregated bandwidth may be 100 MHz. The number of aggregated carriers in FDD may be different in DL and UL. However, the number of UL CCs may be the same as or smaller than the number of DL CCs. The bandwidths of the respective CCs may also be different. In contrast, in the case of TDD, the number of CCs and the bandwidth of each CC may be the same in the DL and the UL.

Using adjacent CCs in the same operating frequency band may be referred to as intra-band contiguous aggregation. In the case of non-contiguous allocation, the CCs may belong to intra-band contiguous aggregation in which the CCs belong to the same operating frequency band while having a gap therebetween. Alternatively, the CCs may belong to inter-band contiguous aggregation in which the CCs belong to different operating frequency bands. In addition, the C-band using the TDD scheme may refer to a band having a frequency range of 3.7 GHz to 4.2 GHz. The C-band may be configured by a band (e.g., 3.7 GHz to 3.98 GHz) that may be used in the NR communication system and a fixed satellite service (FSS) band (e.g., 4.0 GHz to 4.2 GHz) that may be used for satellite communication. In this case, in case that respective CCs are adjacent to each other in the C-band, a channel of another adjacent CC may be predicted based on the channel information of an adjacent CC according to the reciprocity of the channels.

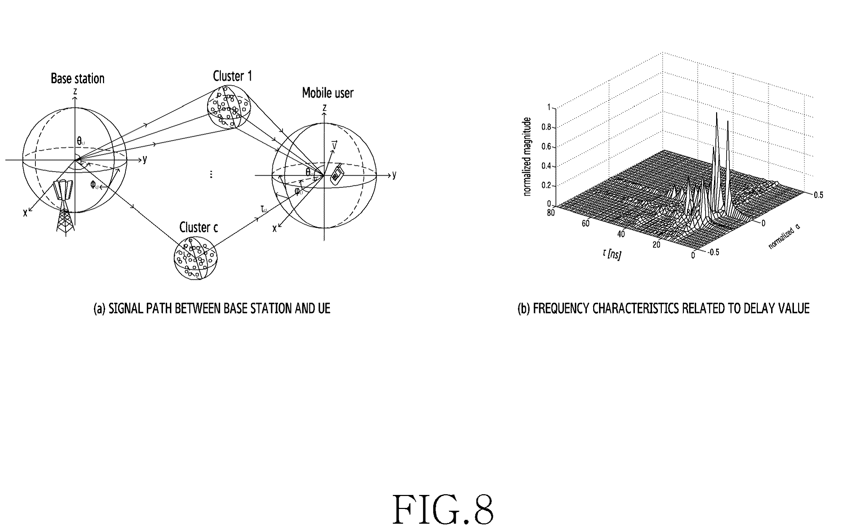

FIG. 8 illustrates a frequency characteristic according to a signal path between a base station and a UE related to various embodiments of the disclosure.

Referring to FIG. 8, a frequency response characteristic according to a radio communication path between a base station and a UE may be explained. Part (a) of FIG. 8 is a diagram illustrating multiple wireless communication paths between a base station and a UE. According to an embodiment, there may be a situation in which a UE reports CSI for a radio channel, and a base station receives the CSI and performs channel estimation. In this case, the radio channel 850 is dependent on a radio wave path through which a signal is transmitted, and such a radio wave path may be dependent on a spatial direction formed with the antenna k of the transmitter. A signal radiated from one antenna may be provided to a receiver through one or more paths in the air. In addition, the radio channel in each path may be time-frequency dependent. Referring to FIG. 8, a base station and a UE may each have multiple transmission and reception antennas, and multiple paths may be formed in a channel between the base station and the UE, and one of the paths is indicated as path p in the drawing.

That is, a wireless channel may be determined by an antenna k, a time t, and a frequency f and a Doppler parameter. A wireless channel may be expressed in the form of a tensor, matrix, or vector corresponding to a multi-dimensional array. The single-input single-output (SISO) channel formed between the kth antenna among multiple antennas of the base station and the UE having a single antenna may be expressed as a time-varying channel as in Equation 1 below. Downlink channel estimation in FDD may be determined by a UE, based on downlink CSI-RS, and uplink channel estimation in TDD may be determined by the base station, based on the downlink CSI-RS. In the following description of a system model, regardless of the channel estimation method for FDD PMI and the TDD SRS channel estimation method, a time-variant channel parameter prediction is described as an embodiment of channel information prediction through a more general channel system model. According to an embodiment, a wireless channel may be expressed by a vector, and may be expressed as in Equation 1 below.

[Equation 1]

$$h_k(f,t) = \sum_{p=1}^{P} \gamma_{p,k} \cdot e^{-j2\pi(f\tau_p - v_p t)}$$

In Equation 1, $h_q(f,t)$ may indicate a predicted channel estimation value for time-frequency resource (t,f) in a kth antenna. $\tau_p$ may denote a delay parameter for path p, $v_p$ may denote a Doppler parameter for path p, and $\gamma_{p,q}$ may denote a complex weight for antenna k on path p. The Doppler parameter may have a property proportional to the moving speed of UE.

According to an embodiment, it may be assumed that $\tau_p$ and $v_p$ are applied equally regardless of the antenna k, and $\gamma_{p,q}$ is applied differently for each antenna.

In consideration of P reflectors or delay clusters, there may be $N_i$ sub-paths including a Doppler value $v_{p,i}$ in each cluster. In this case, a cluster-based channel model may be expressed by Equation 2 below.

[Equation 2]

$$h_k(f,t) = \sum_{p=1}^{P} e^{-j2\pi f\tau_p} \sum_{i=1}^{N_i} \gamma_{k,p,i} e^{j2\pi v_{p,i} t}$$

In case that an extended Kalman filter (EKF) which is one type of the Kalman filter is applied to Equation 2, the cluster-based channel model (e.g., Equation 2) may be expressed as Equation 3 or Equation 4 below. In this case, Equation 3 may include the cluster mean Doppler value $\bar{v}_p$, and Equation 4 may not include the cluster mean Doppler value $\bar{v}_p$. Therefore, on an assumption that the Doppler spread in the cluster is 0, the mathematical expressions 3 and 4 in the channel model may be the same.

[Equation 3]

$$v_{p,i} = \bar{v}_p + \Delta v_{p,i} \text{ and } \Delta v_{p,i} \approx 0$$

$$h_k(f,t) = \sum_{p=1}^{P} e^{-j2\pi f \tau_p} e^{j2\pi \bar{v}_p t} \sum_{i=1}^{N_i} \gamma_{k,p,i}$$

$$= \sum_p \gamma'_{k,p} e^{-j2\pi(f\tau_p - \bar{v}_p t)}$$

[Equation 4]

$$h_k(f,t) = \sum_{p=1}^{P} e^{-j2\pi f \tau_p} \sum_{i=1}^{N_i} \gamma_{k,p,i} e^{j2\pi(\bar{v}_p + \Delta v_{p,i})t}$$

$$= \sum_p \gamma'_{k,p}(t) e^{-j2\pi f \tau_p}$$

In Equation 3 and Equation 2 above, $\tau_p$ may denote a cluster path delay value, $\gamma'_{k,p}$ may denote a cluster path weight value, and $\gamma'_{k,p}(t)$ may denote a cluster time-varying weight value.

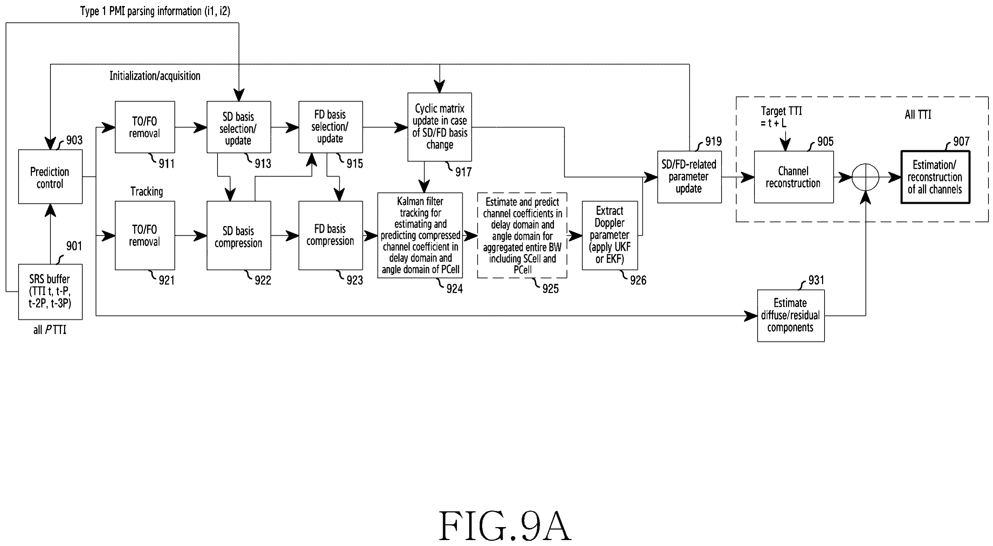

FIG. 9A illustrates a structure for generating a compressed channel and estimating and predicting channel information of a PCell and an SCell in relation to various embodiments of the disclosure.

Referring to FIG. 9A, the base station may generate a channel in which the channel information of the PCell is compressed with low complexity, by using type 1 CSI feedback. In addition, a method for estimating and predicting SCell channel information by integrally considering the bandwidth (BW) of the PCell and SCell channels using the channel parameters associated with the compressed channel may be described.

More specifically, operation blocks for performing calculation to estimate and predict channel information for the PCell and the SCell by applying a Kalman filter (e.g., a linear Kalman filter, an extended Kalman filter, or an unscented Kalman filter) based on SRS information and PMI information are illustrated. However, the above-described order and operations are merely for the sake of convenience and the disclosure is not limited thereto. Various embodiments of the disclosure may also include a case in which, if the technical features of the disclosure are included, some of the steps illustrated in FIG. 9A are omitted or the order thereof is changed.

In step 901, the base station may include SRS information in an SRS buffer, and may include Type 1 PMI information in a PMI buffer, for each time point or transmission time interval (TTI) based on the received CSI.

In step 903, the base station may perform control for CSI prediction. Specifically, in step 901, the base station may perform a prediction control operation, based on whether channel information for a previous SRS resource has been obtained, whether PMI report (e.g., CSI feedback) information has been obtained, a basis (e.g., a beam parameter) of the spatial domain and a basis (e.g., a path parameter) of the frequency domain updated in step 919, and SRS-based compressed channel information at each time point.

In step 911, the base station may perform a removal operation for a time offset (TO) and a frequency offset (FO) for an SRS, according to predictive control.

In step 913, in case that there is no PMI dictionary information, the base station may perform a TO/FO removal operation for the SRS, and then perform a sequential search (full search) to extract a sufficient number of SD basis (spatial basis). In step 913, in case that there is PMI dictionary information, the base station may preferentially obtain information on the SD basis (spatial basis) from CSI parsing information (e.g., i1, i2) extracted from low resolution CSI feedback or from CSI parsing information (e.g., i1, i2) extracted from high resolution CSI feedback and may then, instead of performing an unnecessary full search based on SRS signals, perform SRS-based sequential partial search for the remaining principal bases excluding the SD basis (spatial basis) secured from the PMI, so as to reduce the complexity in obtaining the SD basis (spatial basis) in the spatial domain. In steps 922 and 923, the base station may extract spatial compression information for the SRS channel with low complexity by using PMI pre-knowledge of the downlink in TDD and FDD, respectively. In addition, the base station may extract the remaining spatial domain (SD) basis through additional signal processing from the SRS channel information, and may use the extracted SD basis to generate compressed channel information.

In step 915, after performing spatial domain compression in step 913, the base station may perform 2D grid search on the spatially compressed channel to extract a frequency domain basis corresponding to the spatial compression basis as a pair.

In step 917, the base station may determine a rotation matrix or a cyclic matrix reflecting the transformation of the coordinate axis according to the basis transformation, by referring to the change of the SD basis and the FD basis extracted from different slots determined in step 913 or 917 and the PMI periodically reported. A rotation matrix may refer to a matrix that is reflected in step 924 including a tracking operation for coefficients of an effective channel to which spatial/frequency compression is applied, so that effective channel coefficients having been mapped to the coordinate axes of the previous spatial/frequency compression basis are suitably mapped to the coordinate axes of a newly changed spatial/frequency compression basis. The rotation matrix may be reflected in the form of a correlation matrix of a sub-matrix corresponding to the basis vector set extracted and used in the previous step and a sub-matrix corresponding to the basis vector set extracted and used in the next step. The rotation matrix may perform a role of helping to implement a practical low-complexity channel estimation and prediction by tracking the coefficients through a Kalman filter, which is performed in a reduced dimension, based on the coefficients of the current effective channel to which spatial/frequency compression has been applied in step 924, with regard to the coordinate axes of the current basis. Of course, the description of the rotation matrix is not limited to the above example.

In step 921, the base station may perform an operation of removing the TO/FO according to the predicted control.

In step 924, the base station may track a gamma value (i.e., the previous path weight value). Specifically, the base station may perform Kalman filter tracking for estimating and predicting compressed channel coefficients in the delay domain and angle domain of a PCell.

In step 925, the base station may estimate a compressed (angle/delay) channel gain for the aggregated BW (SCell + PCell).

In step 926, the base station may update the current state, based on an EKF for the delay parameter and an EKF for the Doppler parameter, after tracking the gamma value.

In step 931, the base station may perform an adaptive sample and hold residual (A-SHRes) operation according to the predicted control. The A-SHRes may refer to an adaptive residual, and may include an operation of estimating a regression coefficient, based on a difference between an estimated regression equation and an actual observed value.

In step 905, the base station may obtain a reconstruction value for channel information for each target TTI (e.g., TTI=t+L) by using the compressed channel parameters updated in step 917, the spatial domain (SD) basis, and the frequency domain (FD) basis information.

In step 907, by using a digital signal processor (DSP) and/or a pre-coding field-programmable gate array (FPGA), the base station may perform signal processing for channel prediction, so as to synthesize the reconstruction value described above and the residual channel information obtained in step 931.

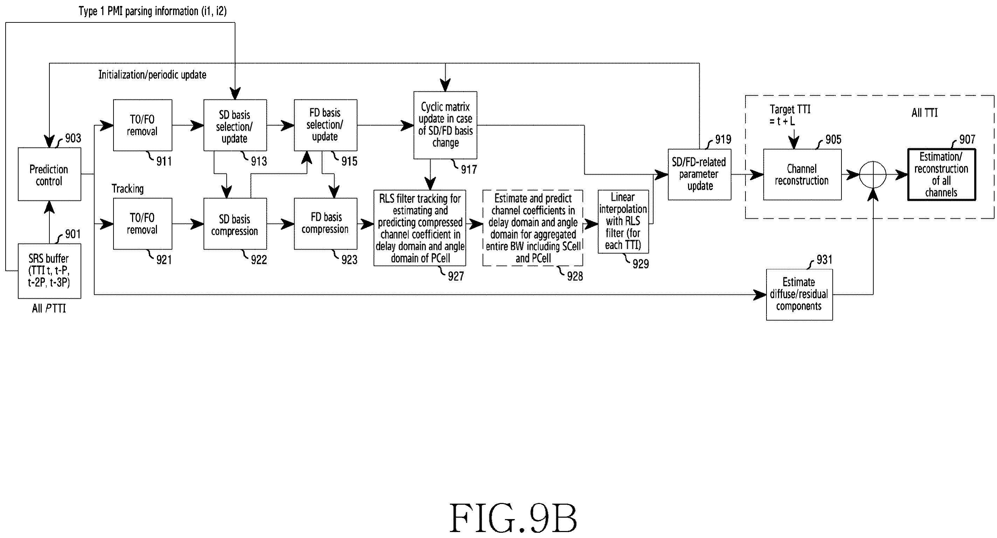

FIG. 9B illustrates a structure for generating a compressed channel and estimating and predicting channel information of an SCell in relation to various embodiments of the disclosure.

Referring to FIG. 9B, operation blocks for performing calculations so as to estimate and predict channel information for a PCell and an SCell by applying a recursive least-square (RLS) filter, unlike in FIG. 9A, may be described. Therefore, in the following description of FIG. 9B, the description overlapping the above description of FIG. 9A may be omitted.

More specifically, operation blocks for performing calculations to estimate and predict channel information for a PCell and an SCell by applying a Kalman filter (e.g., a linear Kalman filter, an extended Kalman filter, or an unscented Kalman filter) based on SRS information and PMI information are illustrated. However, these are merely for convenience of illustration, and are not intended to limit the subject matter of the disclosure. Various embodiments of the disclosure may also include a case in which some of the steps illustrated in FIG. 9B are omitted or the order thereof is changed, as long as the technical features of the disclosure are included.

In step 901, based on the received CSI, the base station may include SRS information in the SRS buffer for each time point or transmission time interval (TTI) and may include Type 1 PMI information in the PMI buffer.

In step 903, the base station may perform control for CSI prediction. Specifically, in step 901, the base station may perform a prediction control operation, based on whether channel information for a previous SRS resource has been obtained, whether PMI report (e.g., CSI feedback) information has been obtained, a basis (e.g., a beam parameter) of the spatial domain and a basis (e.g., a path parameter) of the frequency domain updated in step 919, and SRS-based compressed channel information at each time point.

In step 911, the base station may perform a removal operation for a time offset (TO) and a frequency offset (FO) for an SRS, according to predictive control.

In step 913, in case that there is no PMI dictionary information, the base station may perform a TO/FO removal operation for the SRS, and then perform a sequential search (full search) to extract a sufficient number of SD basis (spatial basis). In step 913, in case that there is PMI dictionary information, the base station may preferentially obtain information on the SD basis (spatial basis) from CSI parsing information (e.g., i1, i2) extracted from low resolution CSI feedback or from CSI parsing information (e.g., i1, i2) extracted from high resolution CSI feedback and may then, instead of performing an unnecessary full search based on SRS signals, perform SRS-based sequential partial search for the remaining principal bases excluding the SD basis (spatial basis) secured from the PMI, so as to reduce the complexity in obtaining the SD basis (spatial basis) in the spatial domain. In steps 922 and 923, the base station may extract spatial compression information for the SRS channel with low complexity by using PMI pre-knowledge of the downlink in TDD and FDD, respectively. In addition, the base station may extract the remaining spatial domain (SD) basis through additional signal processing from the SRS channel information, and may use the extracted SD basis to generate compressed channel information.

In step 915, after performing spatial domain compression in step 913, the base station may perform 2D grid search on the spatially compressed channel to extract a frequency domain basis corresponding to the spatial compression basis as a pair.

In step 917, the base station may determine a rotation matrix or a cyclic matrix reflecting the transformation of the coordinate axis according to the basis transformation, by referring to the change of the SD basis and the FD basis extracted from different slots determined in step 913 or 917 and the PMI periodically reported. A rotation matrix may refer to a matrix that is reflected in step 927 including a tracking operation for coefficients of an effective channel to which spatial/frequency compression is applied, so that effective channel coefficients having been mapped to the coordinate axes of the previous spatial/frequency compression basis are suitably mapped to the coordinate axes of a newly changed spatial/frequency compression basis. The rotation matrix may be reflected in the form of a correlation matrix of a sub-matrix corresponding to the basis vector set extracted and used in the previous step and a sub-matrix corresponding to the basis vector set extracted and used in the next step. The rotation matrix may perform a role of helping to implement a practical low-complexity channel estimation and prediction by tracking the coefficients through a Kalman filter, which is performed in a reduced dimension, based on the coefficients of the current effective channel to which spatial/frequency compression has been applied in step 927, with regard to the coordinate axes of the current basis. Of course, the description of the rotation matrix is not limited to the above example.

In step 921, the base station may perform an operation of removing the TO/FO according to the predicted control.

In step 927, the base station may track a gamma value (i.e., the previous path weight value). Specifically, the base station may perform Kalman filter tracking for estimating and predicting compressed channel coefficients in the delay domain and angle domain of a PCell.

In step 928, the base station may estimate a compressed (angle/delay) channel gain for the aggregated BW (SCell + PCell).

In step 929, the base station may update the current state, based on an RLS filter and linear interpolation, after tracking the gamma value.

In step 931, the base station may perform an adaptive sample and hold residual (A-SHRes) operation according to the predicted control. The A-SHRes may refer to an operation of adaptively processing a residual signal and may include an operation of estimating a regression coefficient, based on a difference between an estimated regression equation and an actual observed value.

In step 905, the base station may obtain a reconstruction value for channel information for each target TTI (e.g., TTI=t+L) by using the compressed channel parameters, the spatial domain (SD) basis, and the frequency domain (FD) basis information updated in step 917.

In step 907, by using a digital signal processor (DSP) and/or a pre-coding FPGA, the base station may perform signal processing for channel prediction, so as to synthesize the reconstruction value described above and the residual channel information obtained in step 931.

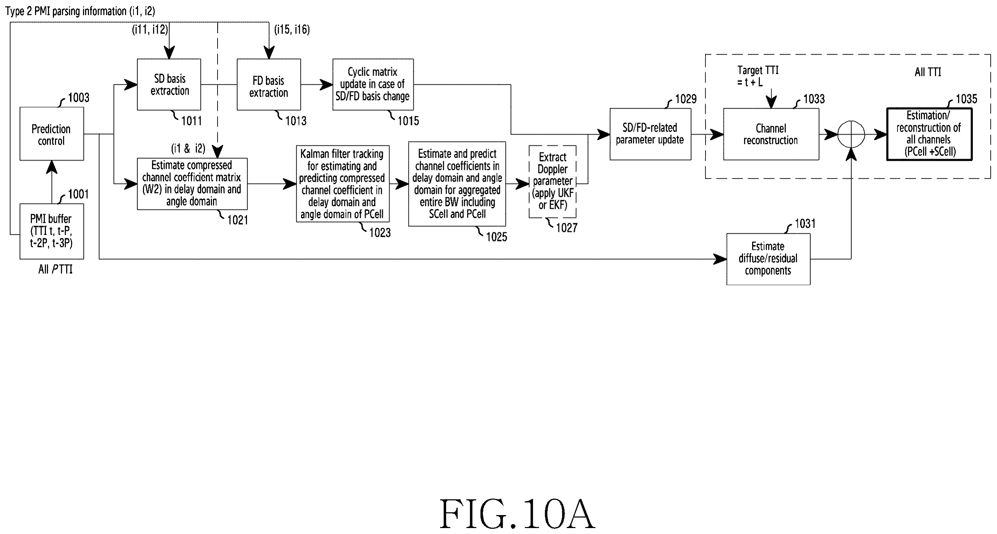

FIG. 10A illustrates a structure for generating a compressed channel and estimating and predicting channel information of a PCell and an SCell in relation to various embodiments of the disclosure.

Referring to FIG. 10A, a structure for generating a channel compressed at a low-complexity by using a high-resolution CSI feedback (etype 2 CSI feedback) in a base station, and estimating and predicting PCell and SCell channel information by using channel parameters associated therewith and by integrally considering the bandwidth (BW) of the PCell and SCell channel is illustrated.

However, the structure of FIG. 10A merely shows a sequence or operations illustrated for the sake of convenience and does not limit the disclosure, and various embodiments of the disclosure may include omission of some of the steps shown in FIG. 10A or change of the order thereof, as long as the technical features of the disclosure are included.

In step 1001, the base station may include SRS information in a PMI buffer for each time point or transmission time interval (TTI) based on received CSI.

In step 1003, the base station may perform control for CSI prediction. Specifically, the base station may perform a predicted control operation, based on a path parameter value updated in step 1029 and SRS information at each time point.

In step 1011, the base station may extract an SD basis, based on eType 2 PMI parsing information (e.g., i11 and i12).

In step 1013, the base station may extract an FD basis, based on eType 2 PMI parsing information (e.g., i15 and i16).

In step 1015, the base station may determine a rotation matrix that reflects the transformation of the coordinate axis according to the base transformation, by referring to the periodic report of the PMI and the change of the SD basis and FD basis extracted from different slots determined in step 1011 or 1013. The rotation matrix may refer to a matrix that is reflected in step 1023 including a tracking operation for coefficients of an effective channel to which spatial/frequency compression is applied, so that effective channel coefficients having been mapped to the coordinate axes of the previous spatial/frequency compression basis are suitably mapped to the coordinate axes of a newly changed spatial/frequency compression basis. The rotation matrix may be reflected in the form of a correlation matrix of a sub-matrix corresponding to the basis vector set extracted and used in the previous step and a submatrix corresponding to the basis vector set extracted and used in the next step. The rotation matrix may perform a role of helping to implement a practical low-complexity channel estimation and prediction by tracking the coefficients through a Kalman filter, which is performed in a reduced dimension, based on the coefficients of the current effective channel to which spatial/frequency compression has been applied in step 1023, with regard to the coordinate axes of the current basis. Of course, the description of the rotation matrix is not limited to the above example.

In step 1021, the base station may extract an effective channel coefficients matrix w2 compressed in the angle domain and the delay domain, according to the predicted control (or, by further considering eType 2 PMI parsing information (e.g., i1 and i2)).

In step 1023, the base station may track a gamma value (i.e., a previous path weight value). Specifically, the base station may perform Kalman filter tracking for estimating and predicting compressed channel coefficients in the delay domain and the angle domain of the PCell.

In step 1025, the base station may estimate a compressed (angle/delay) channel gain with regard to an aggregated BW (SCell + PCell).

In step 1027, the base station may track the gamma value, and then update the current state, based on a delay EKF and a Doppler EKF.

In step 1031, the base station may perform an A-SHRes (adaptive SH Residual) operation according to the predicted control. The A-SHRes refers to adaptive residual, and may include an operation of estimating a regression coefficient, based on a difference between an estimated regression equation and an actual observation value.

In step 1033, the base station may obtain a reconstruction value for channel information, for each target TTI (for example, TTI=t+L), by using the compressed channel parameter updated in step 1029, and the spatial domain (SD) basis and frequency domain (FD) basis information.

In step 1035, by using a DSP and/or a pre-coding FPGA, the base station may perform signal processing for channel prediction, so as to synthesize the reconstruction value described above and the residual channel information obtained in step 1031.

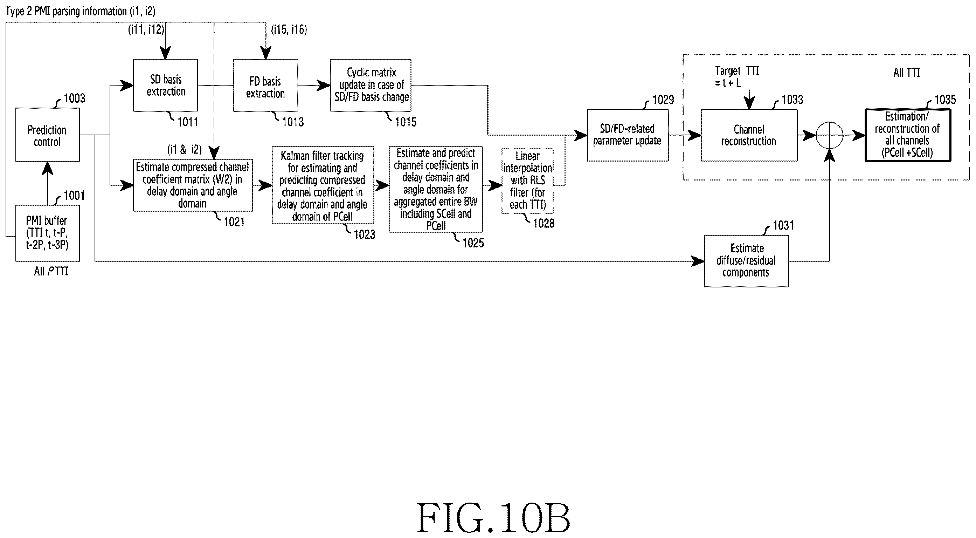

FIG. 10B illustrates a structure for generating a compressed channel and estimating and predicting channel information of a PCell and an SCell, in relation to various embodiments of the disclosure.

Referring to FIG. 10B, operation blocks for performing calculations to estimate and predict channel information for a PCell and an SCell by applying an RLS filter, unlike FIG. 10A, may be described. Therefore, in the following description of FIG. 10B, descriptions overlapping the above description of FIG. 10A may be omitted.

The embodiments of the disclosure are only for the sake of convenience in the illustrated order and operations, and are not intended to limit the subject matter of the disclosure, and various embodiments of the disclosure may include a case in which some of the steps illustrated in FIG. 10A are excluded or the order thereof is changed, as long as the technical features of the disclosure are included.

In step 1001, based on the received CSI, the base station may include SRS information in a PMI buffer for each time point or transmission time interval (TTI).

In step 1003, the base station may perform control for CSI prediction. Specifically, the base station may perform a predictive control operation, based on the path parameter value and SRS information at each time point updated in step 1029.

In step 1011, the base station may extract the SD basis, based on eType 2 PMI parsing information (e.g., i11 and i12).

In step 1013, the base station may extract an FD basis, based on eType 2 PMI parsing information (for example, i15 and i16).

In step 1015, the base station may determine a rotation matrix that reflects the coordinate axis transformation according to the basis transformation, by referring to a periodically reported PMI and the change of the SD basis and the FD basis extracted from different slots determined in step 1011 or 1013. The rotation matrix may refer to a matrix that is reflected in step 1023 including a tracking operation for coefficients of an effective channel to which spatial/frequency compression is applied, so that effective channel coefficients having been mapped to the coordinate axes of the previous spatial/frequency compression basis are suitably mapped to the coordinate axes of a newly changed spatial/frequency compression basis. The rotation matrix may be reflected in the form of a correlation matrix of a sub-matrix corresponding to the basis vector set extracted and used in the previous step and a submatrix corresponding to the basis vector set extracted and used in the next step. The rotation matrix may perform a role of helping to implement a practical low-complexity channel estimation and prediction by tracking the coefficients through a Kalman filter, which is performed in a reduced dimension, based on the coefficients of the current effective channel to which spatial/frequency compression has been applied in step 1023, with regard to the coordinate axes of the current basis. Of course, the description of the rotation matrix is not limited to the above example.

In step 1021, the base station may extract an effective channel coefficients matrix (w2) compressed in the angle domain and the delay domain, according to the prediction control (or, by additionally considering eType 2 PMI parsing information (e.g., i1 and i2)).

In step 1023, the base station may track a gamma value (i.e., a previous path weight value). Specifically, the base station may perform Kalman filter tracking for estimating and predicting the channel coefficients compressed in the delay domain and the angle domain of the PCell.

In step 1025, the base station may estimate a compressed (angle/delay) channel gain for aggregated BW (SCell + PCell).

In step 1027, the base station may apply an RLS filter to the gamma value. For example, for each path, a linear prediction coefficient of each path may be updated, based on a regularized least square using a normalization factor. The base station may extract a Doppler parameter (for example, by applying a UKF or EKF).

In step 1029, the base station may perform an A-SHRes (adaptive SH Residual) operation according to the predictive control. The A-SHRes may refer to an operation of adaptively processing a residual signal and may include an operation of estimating a regression coefficient, based on a difference between an estimated regression equation and an actual observed value.

In step 1033, the base station may obtain a reconstruction value for channel information for each target TTI (for example, TTI=t+L) by using the compressed channel parameters updated in step 1029, the SD basis, and FD basis information in the frequency domain.

In step 1035, by using the DSP and/or the precoding FPGA, the base station may perform signal processing for channel prediction in order to synthesize the reconstruction value described above and the residual channel information obtained in step 1031.

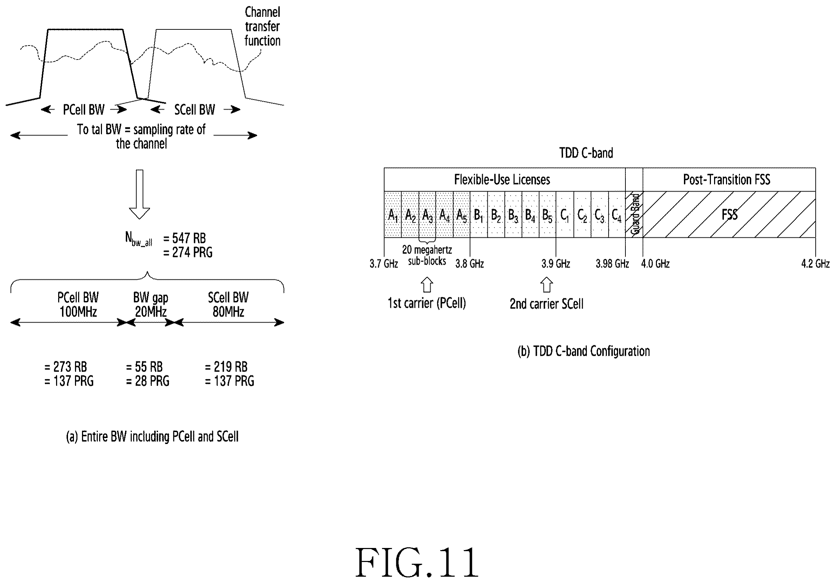

FIG. 11 illustrates a channel structure including bands of a PCell and an SCell in relation to various embodiments of the disclosure.

Referring to FIG. 11, before describing the SCell channel prediction technique according to the disclosure, a structure of the entire bandwidth including the bands of a PCell and an SCell may be described. In (a) of FIG. 11, the entire bandwidth may refer to a bandwidth including the bandwidth of PCell, the bandwidth of the SCell, and a bandwidth gap between bandwidths of the PCell and the SCell. The entire bandwidth may be determined according to a sampling rate of a channel. For example, the entire bandwidth may have a size of 200 MHz and 547 RBs (or 274 physical resource block groups (PRGs)). In other words, the size of inverse discrete Fourier transform (IDFT) for the frequency domain within the entire band may be 274 PRGs. In addition, the bandwidth of the PCell may have a size of 100 MHz and 273 RBs (or 137 PRGs). That is, the size of the IDFT for the frequency domain of the PCell may be 137 PRGs. The bandwidth of the SCell may have a size of 80 MHz and 219 RBs (or 137 PRGs). The bandwidth gap between the bandwidths of the PCell and the SCell may have a size of 20 MHz and 219 RBs (or 137 PRGs).

Referring to (b) of FIG. 11, the configuration of respective CCs for a PCell and an SCell in the C-band described above with reference to FIG. 7 may be described. For example, the first CC for the PCell having a size of 100 MHz may be positioned in the band of 3.7 GHz to 3.8 GHz (e.g., A_1 to A_5), and the second CC for the SCell having a size of 80 MHz may be positioned in the band of 3.82 GHz to 3.9 GHz (e.g., B_2 to B_5). Further, the bandwidth gap between the bandwidths of the PCell and the SCell may be located in the band of 3.8 GHz to 3.82 GHz (e.g., B_1).

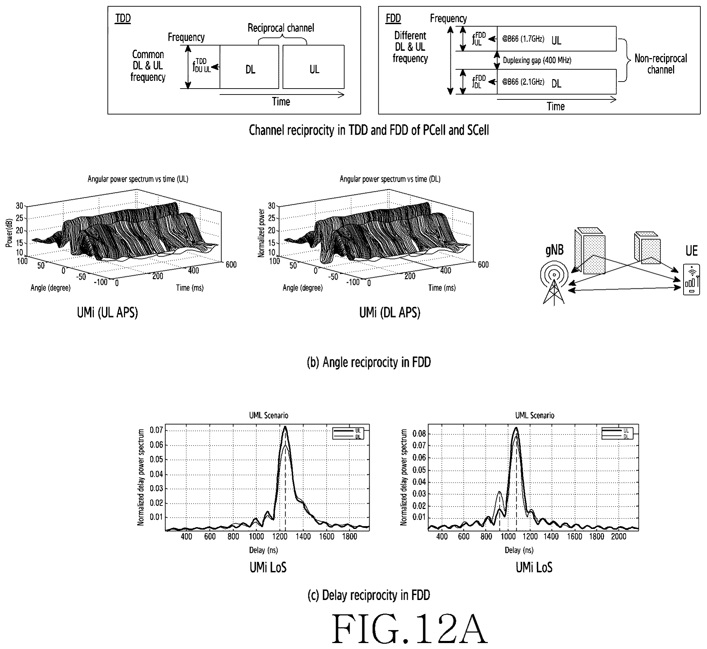

FIG. 12A illustrates the reciprocity of an angle/delay domain between an uplink channel and a downlink channel of a PCell, and the reciprocity of an angle/delay domain between a PCell and an SCell having different frequency bands, in relation to various embodiments of the disclosure.

Referring to FIG. 12A, a DL channel reciprocity between different downlink BWs of a PCell and an SCell or a channel reciprocity of downlink and uplink channels for each cell may be described. Specifically, as a premise for a technique for predicting an SCell channel from the PCell channel information, even in the case of different center frequency bands, a partial channel reciprocity that the PCell and the SCell have in the channel, angle, and delay domain may be described.

(a) of FIG. 12A may indicate a channel reciprocity of a PCell and an SCell in TDD and FDD. Specifically, in TDD, a DL channel and a UL channel use the same frequency, and thus the DL and UL channels may have partial channel reciprocity in respective frequency channels (e.g., $f_{DL/UL}^{TDD}$, the same) used for the DL and UL channels. However, in FDD, the UL channel (for example, $f_{UL}^{fDD}$) and the DL channel (for example, $f_{DL}^{fDD}$) use different frequency bands, and thus may not have full channel reciprocity in the frequency channel.

As noted from (b) of FIG. 12A, a partial channel reciprocity of a PCell and an SCell in an urban micro (UMi) channel model may be found in an angular power spectrum (APS)/time graph. For example, in each of the UL and DL channels, the amount of power according to an inner angle (e.g., angle between -100 degrees and 100 degrees) formed by a path between the base station and the UE may have partial channel reciprocity.

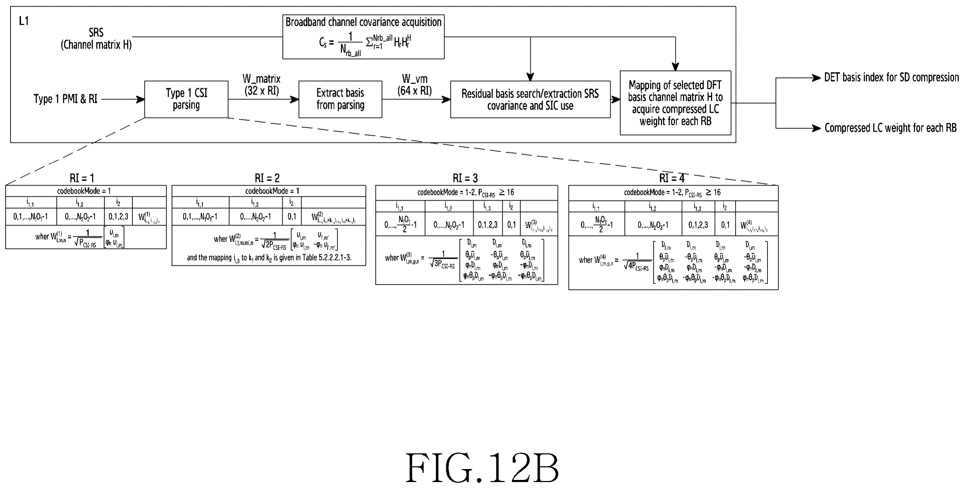

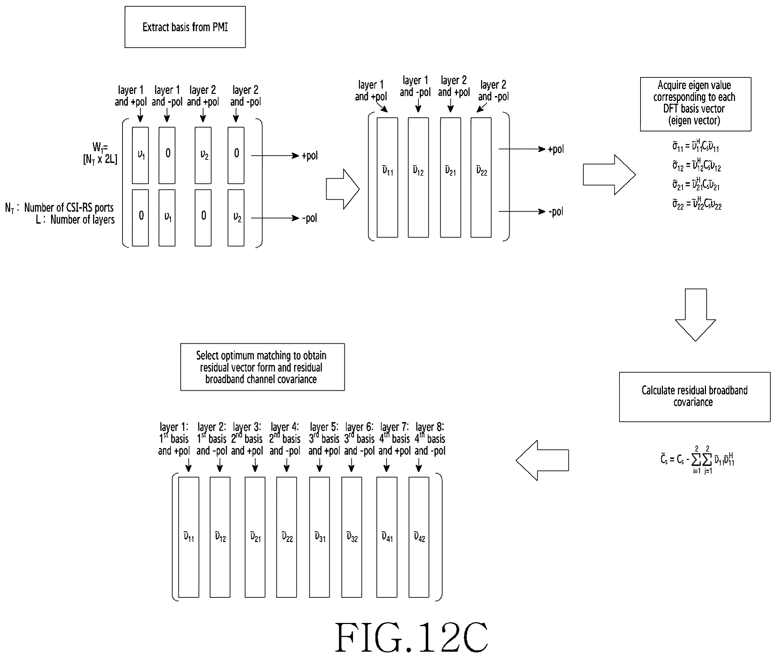

(c) of FIG. 12A may indicate the reciprocity of the delays of the PCell and the SCell in the FDD. For example, each graph in (c) of FIG. 12 may represent a UMi channel model regarding the delay power spectrum (normalized) of a DL channel and a UL channel in a line of sight (LoS) environment and a non-line of sight (NLoS) environment. Each graph may indicate that the DL channel and the UL channel have reciprocity in relation to a delay.

Although not illustrated in FIG. 12A, the DL channel and the UL channel may have reciprocity in a graph for the angle-delay of FDD. However, the DL channel and the UL channel may not have reciprocity with regard to the coefficient value. For example, the coefficient of the DL channel may have a greater value than that of the UL channel.

FIG. 12B illustrates a process in which, by using reciprocity of an angle/delay domain between an uplink and a downlink, a base station extracts a spatial domain basis that facilitates spatial domain compression of an SRS channel, from beam index (e.g., an SD beam index) information of a partially parsed spatial domain of Type 1 PMI.

Referring to FIG. 12B, in the case of TDD, downlink and uplink have full channel reciprocity, and thus the base station may directly obtain basis information for spatially compressing the SRS from PMI information that is downlink CSI feedback. In the case of FDD also, the downlink and the uplink have partial channel reciprocity, and thus the base station may directly obtain basis information for spatially compressing the SRS from the PMI information that is downlink CSI feedback.

The base station may extract main components of the channel from i11 and i12, which are PMI information of Type 1 CSI feedback. In addition, the base station may obtain a best SD beam index from the extracted main components of the channel. In addition, in case that the UE has reported up to i11, i12, and i13, a dominant SD basis vector capable of compressing the spatial information from information of two dominant SD beam indices may be expressed by $v_m$. The Type 1 codebook may be expressed by $v_m$, which is beam information of the spatial domain, and a co-phase component between the plus (+) and the minus (-) antennas.

FIG. 12C illustrates a process of extracting the remaining main bases from the channel signal components excluding the signal components of the Type 1 CSI feedback extracted from the SRS channel.

Referring to FIG. 12C, the remaining spatial domain bases (e.g., residual dominant bases) that are not extracted through the process of FIG. 12B may be extracted using a signal processing algorithm from the channel signal components excluding the signal components of the Type 1 CSI feedback basis extracted as described above from the SRS channel.

For information for compression of the SRS in the spatial domain, the co-phase information may be ignored, and $v_m$ and a zero vector may be defined between the $v_m$ and the plus (+) and the minus (-) antennas. Alternatively, the information for compression of the SRS in the spatial domain may be configured by the orthogonal vector basis as is received through the CSI report, and a combination of the $v_m$ and the co-phase.

In this case, in case that the base station knows the PMI components (e.g., i1 and i2) in advance, the base station may know the dominant basis vector in advance and may thus avoid unnecessary signal processing for extracting the dominant basis vector, thereby implementing spatial domain compression with low complexity.

The remaining spatial domain basis vectors (e.g., SD basis vector) that are not extracted may be obtained by an orthogonal matching pursuit (OMP) signal processing scheme in which the previously extracted signal components of the Type 1 CSI feedback basis are removed from the covariance channel information of the SRS channel and then the best matching vector among the remaining basis vectors is searched for.

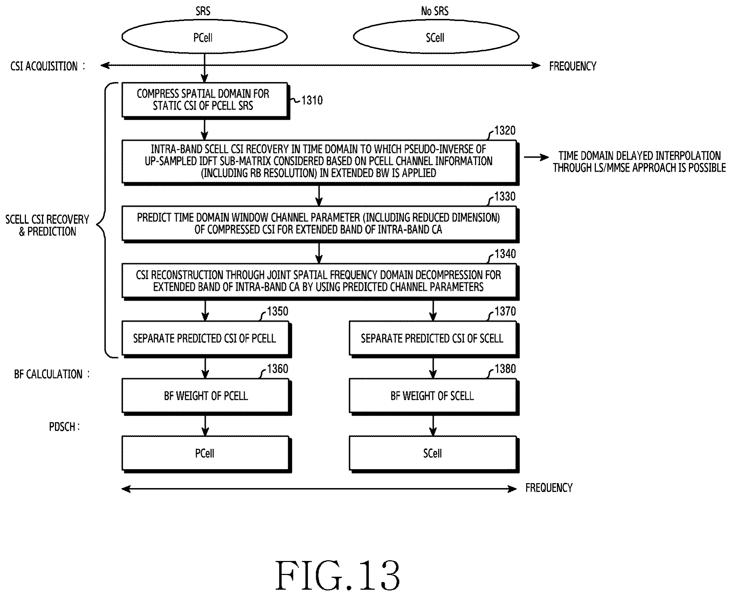

FIG. 13 illustrates a method for channel prediction of an SCell, based on a sounding reference signal (SRS) according to various embodiments of the disclosure.

Referring to FIG. 13, procedures for predicting a SCell channel based on a PCell channel information in TDD massive MIMO using an SRS, and determining beamforming weights to be applied to each cell based on the predicted channel information, may be described.

In step 1310, the base station may compress static channel information (for example, CSI) for the SRS of the PCell in a spatial domain (hereinafter, referred to also as a spatial domain or SD). As described above with reference to FIGs. 9A and 9B, and (a) and (b) of FIG. 11, the base station may perform spatial domain compression with low complexity by using a spatial domain basis (SD basis) extracted from the Type 1 PMI information reported by the UE. With regard to effective channel information in which the dimensions are reduced based on spatial domain compression, the base station may extract a frequency-domain compression basis at low complexity, so as to efficiently perform frequency-domain compression. In this case, the base station may extract a linear coefficient (LC) of the PCell which is mapped through linear combination to a joint SD/FD basis comprehensively compressed in the spatial/frequency domain with respect to the PCell, in the form of a small-sized matrix having a reduced dimensionality than the conventional SRS channel matrix. The dimensions of the rows and columns of the LC matrix may be related to the number of SD/FD bases used for SD/FD compression. While the rows and columns of the conventional SRS channel matrix are interpreted as SD/FD domain information, the dimensions of the rows and columns of the LC matrix, which is channel information compressed using the SD/FD DFT basis, may be interpreted as dimensions of the angle domain (AD) and the delay domain (DD), respectively.

In step 1320, the base station may perform CSI recovery of the SCell, based on the channel state information (CSI) of the intra-band PCell. In this case, as described above with reference to FIG. 11, the base station comprehensively considers the bandwidth of the PCell, the bandwidth of the adjacent SCell, and the BW gap between the PCell and the SCell, to reconstruct information of one extended channel interpreted as one extended bandwidth. Specifically, in order to obtain channel information (CSI) considered as one extended bandwidth by considering both the PCell and the SCell, the base station may use the LC matrix of the PCell. It may be highly complex for the base station to estimate or predict SCell channel information by using SRS channel information (e.g., FD domain information) of the Pcell. Further, and even in the case of outer-polation(extrapolation), the farther the frequency domain of the SCell is away from the PCell, the lower the accuracy of the channel estimation and channel prediction information is. In result, the performance may not be guaranteed. However, by estimating or predicting values (e.g., values obtained by interpolating up-sampled values in a DD domain) that constitute a delay domain (DD) of the LC matrix compressed by the SD/FD basis of the PCell, which is interpreted as a dimension of an angle domain (AD) and a delay domain (DD), the base station may estimate or predict, with a low complexity, the LC matrix having dimensions of an angle domain (AD) and a delay domain (DD) obtained from the viewpoint of a single extended bandwidth considering both the PCell and the SCell. However, the technique based on the interpolation method may have a problem in that the DFT basis set in the frequency domain must be excessively required for the upsampling. For example, in a case where Nrb_pcell=273RB, Nrb_gap=0RB, and Nrb_scell=273RB, the base station may extract, as a representative value of the FD basis, the dominant nonzero sample in the delay domain for 273RB from the FD domain response of the PCell. In addition, in order to obtain information of a 576RB FD domain response, in which both the PCell and the SCell are considered, the base station may reconstruct channel information regarding "Nrb_pcell +Nrb_gap + Nrb_scell=576RB" by performing a linear combination or linear summing of the LC coefficient, which is obtained through an interpolation of 2 times up-sampling values of the dominant nonzero sample and zero-sample in the delay domain obtained in the PCell, and the DFT basis vector of "Nrb_pcell +Nrb_gap + Nrb_scell=576RB" size. However, in case of configuration that Nrb_pcell=273 RB, Nrb_gap=30 RB, and Nrb_scell=273 RB, the base station may need to perform a procedure of reconstructing channel information for 3 times of 819 RBs and the LC coefficient obtained through interpolation of 3 times of the up-sampling value and then cut out the partial channel information for "Nrb_scell=273 RB".

The base station may perform CSI recovery of the SCell by using a linear combination or a linear sum of an original SD DFT basis set, an up-sampled FD DFT basis set, and an LC matrix estimated and predicted in view of one extended bandwidth. By taking into account even the BW gap between the PCell and the Scell, the base station may perform estimation and prediction of SCell channel information while minimizing the deterioration of the SCell channel estimation performance through one extended channel information, which is interpreted as one extended bandwidth.

Considering the BW gap between the PCell and SCell described above, the method for reconstructing information of one extended channel from the perspective of one extended bandwidth may be carried out at low complexity. For example, for the SD compressed channel information of the PCell obtained through SD compression using only main SD bases extracted from the channel information of the PCell, in case that the base station estimates values obtained through interpolation of values up-sampled in a delay domain after performing FD compression, the base station may use an interpolation method based on least square (LS) and/or minimum mean squared error (MMSE) approaches for time domain delay. The LS method (or LS approach) may be a technique for, in case that the intensity of the noise and the interference signal is weak, minimizing errors between the model for applying the interpolation for the time domain delay and the measured data. In addition, the base station may apply a technique for minimizing an error of a desired channel parameter by using the MMSE method (or MMSE approach).

Meanwhile, in case that the up-sampling size is unnecessarily increased by an integer multiple and interpolation is then performed, the complexity is increased, and thus the base station may apply an inverse matrix by using a pseudo-inverse of a DFT matrix of a necessary up-sampling size in consideration of both the PCell and the SCell. In addition, the base station may extract a sub-matrix for CSI recovery, to obtain information corresponding to the DD from the channel information (e.g., including an RB resolution) of the PCell, and may estimate and reconstruct the channel information of the SCell without an interpolation process. At this time, the base station may extract compressed channel information in the SD/FD domain through the sparsity of the channel matrix by using the above-described pseudo-inverse method (e.g., without applying techniques based on an interpolation-based IDFT or a matrix completion algorithm). For example, in the case where Nrb_pcell=273RB, Nrb_gap=54RB, and Nrb_scell=273RB, the method based on the above-described interpolation may require three times of up-sampling. In addition, even if the base station performs full CSI recovery for the PCell and the SCell, a problem may occur in that a frequency block of which values have been reconstructed in the frequency domain based on the interpolation of the delay domain unecessarily by an integer multiple of the PCell has an RB resolution that does not coincide with the existing RB resolution of the PCell. However, during the interpolation process, instead of extracting an FD basis for the PCell and performing FD compression, the base station may generate a DFT matrix corresponding to 600X600, which is an upsampling size required for a case where "Nrb_pcell+ Nrb_gap+Nrb_scell=600RB", and may obtain an inverse matrix by using pseudo-inverse of the DFT matrix. In addition, the base station may extract information corresponding to the delay domain of the channel information of the PCell, by using the sub-matrix obtained by extracting a sub-matrix of the PCell channel, for CSI recovery. In addition, the base station may use the DFT full matrix corresponding to 600X600 to reconstruct channel information for a single integrated channel of the PCell and SCell. The DFT full matrix and the sub matrix obtained by taking an inverse matrix thereof may be configured for each cell, because the same is determined according to at least one of the cell-specific parameters Nrb_pcell, Nrb_gap, or Nrb_scell. In addition, since the DFT full matrix and the sub matrix obtained by taking an inverse matrix thereof do not need to be configured for each UE and do not need to be calculated for each slot, the complexity can be reduced. Of course, the disclosure is not limited to the above example. In addition, the base station may obtain the compressed channel information of the SCell through the above-described CSI recovery from the compressed channel information of the compressed PCell in step 1310.

In step 1330, the base station may configure and apply a window channel parameter in order to estimate a variation in the time domain of compressed CSI for the expanded band (with a reduced dimension) of intra-band CA. In this case, the window channel parameter may be a parameter related to a window filter configured to extract at least one dominant signal in the time domain.

In step 1340, the base station may perform CSI reconstruction through decompression with respect to a joint spatial domain and frequency domain in an extended band of intra-band CA by using the predicted parameters obtained in the previous step. Specifically, the base station may reconstruct joint compressed channel information, based on a spatial basis and an extended frequency domain basis. The reconstructed channel information may include both the predicted CSI of the PCell and the predicted CSI of the SCell. In addition, the base station may obtain information regarding channel coefficients for each of delay taps obtained by intra-band upsampling from the joint compressed channel information.

In step 1350, the base station may separate the predicted CSI of the PCell from the reconstructed channel information. In this case, the predicted CSI of the PCell may be separated based on the frequency domain area of the CA band and the bandwidth gap between CCs.

In step 1360, the base station may generate (or apply) a beamforming weight suitable for the PCell, based on the predicted CSI of the PCell.

In step 1370, the base station may separate the predicted CSI of the SCell from the reconstructed channel information. In this case, the predicted CSI of the SCell may be separated, based on the frequency domain area of the CA band and the bandwidth gap between CCs.

In step 1380, the base station may generate (or apply) a beamforming weight suitable for the SCell, based on the predicted CSI of the SCell.

In the above-described procedures (e.g., steps 1310 to 1380), the CSI may include a channel parameter. For example, the channel parameter may include at least one of a Doppler parameter, a delay parameter, and a spatial vector according to an antenna.

Of course, the disclosure is not limited to the above example. In addition, in the above-described operations of the base station, at least one operation may be divided into separate operations or two or more operations may be combined into a single operation. In addition, in the above-described operations of the base station, at least one operation may be omitted, or a new operation may be added to and organically combined with the above-described operations.

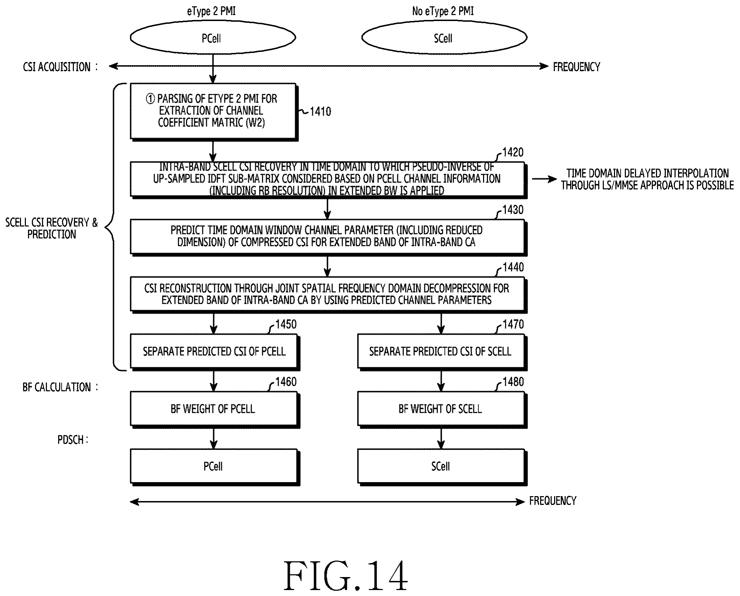

FIG. 14 illustrates a method for predicting a channel of an SCell, based on an eType-2 precoding matrix indicator (PMI) having a high resolution according to various embodiments of the disclosure.

Referring to FIG. 14, procedures for predicting a channel of an SCell based on channel information of a PCell in TDD massive MIMO using PMI, and determining a beamforming weight to be applied to each cell, based on the predicted channel information, may be described.

In step 1410, the base station may perform parsing of eType-2 PMI for extracting a channel coefficient matrix W2.

In step 1420, the base station may perform CSI recovery with regard to an intra-band SCell. According to an embodiment, the base station may perform intra-band cell CSI recovery in the time domain by applying, to the PCell channel information, a sub-matrix of an inverse matrix obtained by taking a pseudo-inverse of the up-sampled DFT matrix considering the expanded bandwidth. In this case, the submatrix may be a part of the full inverse matrix. The base station may perform a more optimized operation in comparison with the method of using IDFT and interpolation, by applying a sub-matrix of an inverse matrix obtained by taking a pseudo-inverse of the up-sampled DFT matrix considering the extended bandwidth described above. The reason why the pseudo-inverse technique for the sub-matrix provides more optimized operations may be as follows. The channels have sparsity property such that, in the overall time domain, the number of channel components having non-zero channel coefficients among the up-sampled channel components may be much smaller than the number of channel components having a zero channel coefficient. Therefore, in the case of the predicted CSI of the SCell, a sub-matrix of an inverse matrix of the up-sampled DFT matrix may be applied, and a result similar to that of the case in which IDFT and interpolation are applied can be obtained. In addition, the pseudo-inverse technique may simplify the calculation process, since it is based on a sub-matrix, unlike the case where IDFT is applied to a full matrix. According to an embodiment, for CSI recovery, a CSI recovery algorithm may be performed based on sparsity by applying at least one of the above-described pseudo-inverse technique, IDFT based on an interpolation method, or techniques based on a matrix completion algorithm. Of course, the disclosure is not limited to the above example. In addition, the base station may obtain the compressed channel information of the SCell through the above-described CSI recovery from the compressed channel information of the PCell compressed in step 1410.

In step 1430, the base station may extract a window channel parameter for the time domain of the compressed CSI for the extended bandwidth (with a reduced dimension) of the intra-band CA. In this case, the window channel parameter may be a parameter related to a window filter configured to extract at least one dominant signal in the time domain. According to an embodiment, the base station may use an interpolation method with regard to time domain delay through a least square (LS) and/or a minimum mean squared error (MMSE) approach. The LS method may be a technique for minimizing errors between a model for applying an interpolation method for a time domain delay and measured data when there is no noise or interference. In addition, the MMSE method may be a linear channel estimation technique for minimizing errors of a desired channel parameter even in the presence of noise or interference.

In step 1440, the base station may perform CSI reconstruction through decompression in the joint spatial domain and frequency domain in the extended bandwidth of the intra-band CA by using the predicted parameters. According to an embodiment, the base station may reconstruct joint compressed channel information, based on the spatial basis and the extended frequency domain basis. The reconstructed channel information may include both the predicted CSI of the PCell and the predicted CSI of the SCell. According to an embodiment, the base station may obtain information on channel coefficients for each delay tap up-sampled in the band from the joint compressed channel information.

In step 1450, the base station may separate the predicted CSI of the PCell from the reconstructed channel information. In this case, the predicted CSI of the PCell may be separated based on the frequency domain region of the CA band and the bandwidth gap between CCs.

In step 1460, the base station may generate (or apply) a beamforming weight suitable for the PCell, based on the predicted CSI of the PCell.

In step 1470, the base station may separate the predicted CSI of the SCell from the reconstructed channel information. In this case, the predicted CSI of the SCell may be separated, based on the frequency domain area of the CA band and the bandwidth gap between CCs.

In step 1480, the base station may generate (or apply) a beamforming weight suitable for the SCell, based on the predicted CSI of the SCell.

In the above-described procedures (e.g., steps 1410 to 1480), the CSI may include a channel parameter. For example, the channel parameter may include at least one of a Doppler parameter, a delay parameter, and a spatial vector according to an antenna.

Of course, the disclosure is not limited to the above examples. In addition, in the above-described operations of the base station, at least one operation may be divided into separate operations or two or more operations may be combined into a single operation. In addition, in the above-described operations of the base station, at least one operation may be omitted, or a new operation may be added to and organically combined with the above-described operations.

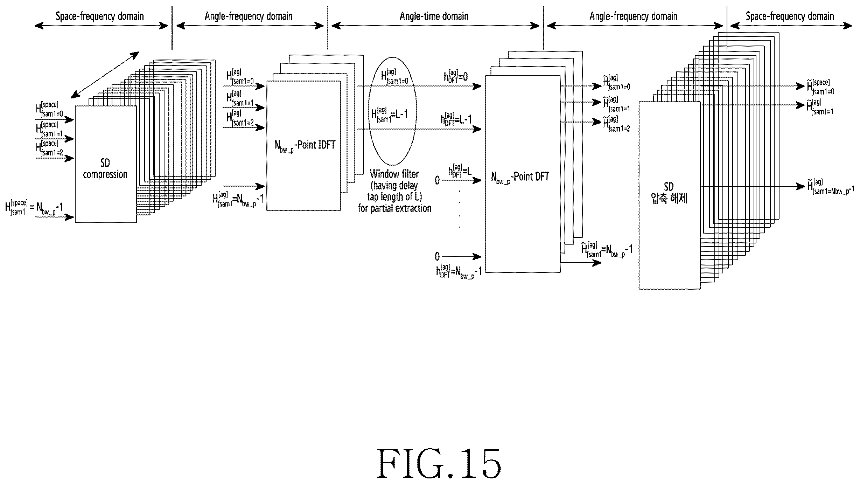

FIG. 15 illustrates a channel prediction method considering a PCell according to various embodiments of the disclosure;

Referring to FIG. 15, an example of a method for estimating and reconstructing wideband channel information including a PCell and an SCell with low complexity by extracting only some information to have low dimensionality at the time of transformation from spatial-domain/frequency-domain (SD/FD) information to angle-domain/delay domain (AD/DD) information, based on the sparsity of the SRS channel of the PCell described above with reference to FIG. 12A, may be described.

More specifically, as described above based on the channel information of the PCell, the base station may consider the bandwidth of the PCell, the bandwidth of the SCell adjacent to the PCell, and a BW gap between the PCell and the SCell. Therefore, in a procedure for estimating one extended channel information interpreted as one extended bandwidth by the base station, an embodiment of a procedure (e.g., steps 1310 to 1340) of extracting, through interpolation, an up-sampling signal in a delay domain, based on compressed channel information regarding the SRS of the PCell described above, and using the same in a CSI reconstruction operation, may be described.

According to an embodiment, the base station may compress static channel information (e.g., $N_{bw\_p}$ channel components $H^{[space]}_{f_{sam1}=0}, \cdots, H^{[space]}_{f_{sam1}=N_{bw\_p}-1}$) for the SRS of the PCell in the spatial domain. Specifically, the base station may perform compression by using a discrete Fourier transform (DFT), a singular value decomposition (SVD), or a QR (or QR decomposition) basis. The above operations may correspond to step 1310 described above. In this case, compression in the spatial domain may be represented by Equation 5 below.

[Equation 5]

$$H^{[space]} = \Phi_{SD} H^{[ag]} \rightarrow H^{[ag]} = W_1^H H^{[space]}$$

Through Equation 5 as above, the channel components in the spatial domain may be transformed, through operation with $W_1$, which is a compression matrix of the spatial domain constructed by the basis of the spatial domain, to channel vectors (e.g., $H^{[ag]}_{f_{sam1}=0}, \cdots, H^{[ag]}_{f_{sam1}=N_{bw\_p}-1}$ ) which have been transformed into the angle domain from the spatial domain so as to have low dimensionality. The dimension of a vector corresponding to each sample may be expressed by (X) 1, which is the number of bases used for spatial domain compression, and the total number of samples of the entire frequency domain may be the same as the total number of RBs of the PCell.

In addition, in order to extract the delay domain parameter of the intra-band PCell, the base station may perform an IDFT operation by performing IDFT having a size of $N_{bw\_p}$ on $N_{bw\_p}$ channel components having an RB-specific resolution or performing multiplication by configuring a DFT matrix having a size of $N_{bw\_p} \times N_{bw\_p}$.

In this case, the IDFT with regard to the $N_{bw\_p}$ channel components may be expressed by Equation 6 below.

[Equation 6]

$$h^{[ag]}_{T_{sam1}=n} = \text{IDFT} \{H^{[ag]}_{f_{sam1}=k}\} \text{ (For n=0, 1, 2, } \cdots, N_{bw\_p} - 1)$$

The base station may apply IDFT according to Equation 6 to transform the channel components (e.g., $H^{[ag]}_{f_{sam1}-0}, \cdots, H^{[ag]}_{f_{sam1}=N_{bw\_p}-1}$ ) in the frequency domain into channel components (e.g., $h^{[ag]}_{T_{sam1}=0}, \cdots, H^{[ag]}_{T_{sam1}=N_{bw\_p}-1}$ ) in the time domain.

The method for performing the IDFT operation as in Equation 6 above may be a method in which an IDFT matrix of a channel is generated in advance for use for the entire RBs allocated according to the BW of the corresponding cell. The DFT matrix may be preconfigured and prepared in advance as a cell-specific operation. On the other hand, the base station may perform, for each UE, an operation of extracting a basis, so as to perform compression for both the spatial and frequency domains, similarly to the UE internal algorithm for CSI reporting for an eType-II codebook. In the scheme in which the base station finds a base of a frequency domain for each UE, the base of the frequency domain may change in real time for each UE, and thus the base station supporting a large number of UEs may have a large burden for implementation thereof. In the method of FIG. 15, the base station need not make different configuration for each slot in the time domain, and thus may generate and prepare, in advance, a DFT matrix for compression and reconstruction in the frequency domain suitably for the total number of RBs of the BW of the corresponding cell, so as to perform the operations of Equation 5 or Equation 6 above. Then, it is possible to prevent the occurrence of implementation complexity for finding a frequency domain basis for each UE for each time slot. Therefore, after performing compression in the spatial domain in the manner as in Equation 5, if an IDFT is taken in the frequency domain for each angle-domain layer, a vector sample in each delay domain may be expressed as a set of vectors having 2L x 1 dimensions, as in Equation 6 below.

$h^{[ag]}_{T_{sam1}=0}, \cdots, h^{[ag]}_{T_{sam1}=N_{bw\_p}-1}$ . The base station may compare the norm values of the respective vectors, thereby classifying a vector set having a value close to zero norm and a vector set having a non-zero norm and, for vector samples having a non-zero norm of the PCell, may apply an interpolation method to a 2 times up-sampling value of a dominant non-zero sample and a zero sample in the delay domain obtained in the Pcell. Then, by comprehensively considering the bandwidth of the SCell and the BW gap between the PCell and SCell, the base station may complete a preparation operation for reconstructing information of one extended channel interpreted as one extended bandwidth.

According to an embodiment, as in step 1320 above, a window filter for partially extracting dominant components with regard to the channel components transformed in the time domain may include a vector sample having a non-zero norm described in the previous step.

The channel components in the time domain to which the window filter is applied may be $\{h^{[ag]}_{T_{sam1}=0}, \cdots, H^{[ag]}_{T_{sam1}=L-1}\}$ . In this case, L may refer to the length of a delay tap. Therefore, the channel components in the time domain to which the window filter is applied may include only the channel components (e.g., $h_{DFT=0}^{[ag]}, ..., h_{DFT=L-1}^{[ag]}$ ) excluding the compressed channel components (e.g., $h_{DFT=L}^{[ag]}, ..., h_{DFT=N_{bw\_p}-1}^{[ag]}$ ) having a norm value of zero. However, the present disclosure is not limited to excluding of only the components having the value of $h_{T_{sam1}=n}^{[ag]} = 0$, and may vary according to the configuration of the window filter considering the range of the dominant value to be filtered. The base station may reduce the dimension of the time domain channel coefficients required for channel prediction through a window filter for partial extraction. As described in step 1320 above, by estimating or predicting the values constituting the delay-domain (DD) of the LC matrix compressed by the SD/FD basis of the PCell, which is interpreted as a dimension of the angle-domain (AD) and delay-domain (DD), to the values up-sampled in the DD domain by applying interpolation, the base station may generate up-sampled values of the nonzero linear coefficient matrix having a dimension of the angle-domain (AD) and delay-domain (DD) obtained from the perspective of one extended bandwidth that comprehensively considers the PCell and SCell as described with reference to FIG. 13 above.

The base station may apply DFT extended in view of an extended bandwidth that considers both the PCell and SCell, to the delay to which the above-described window filter is applied, and time domain-interpolated up-sampled channel components, so as to reconstruct the frequency domain signal. In this case, the DFT of the $N_{bw\_p}$ channel components may be expressed by Equation 7 below.

[Equation 7]

$$\widetilde{H}_{f_{sam1}=k}^{[ag]}=\text{DFT} \{h_{T_{sam1}=k}^{[ag]}\} \text{ (For n=0, 1, 2, } \cdots, \; N_{bw\_p} - 1)$$

The base station may apply IDFT according to Equation 7 to transform the channel components in the time domain back to the channel components in the frequency domain (e.g., $\widetilde{H}_{f_{sam1}=0}^{[ag]}, \cdots, \widetilde{H}_{f_{sam1}=N_{bw\_p}-1}^{[ag]}$). However, in case that the extended up-sampling window filter is applied, the channel components in the time domain may be transformed into the channel components in the frequency domain, based on as many signals as the delay tap length 2L.

The base station may perform decompression by using at least one of DFT, SVD, or QR basis in the spatial domain, with respect to the channel components in the transformed frequency domain. Therefore, the channel components in the angle domain may be transformed into channel components in the spatial domain (e.g., $\widetilde{H}_{f_{sam1}=0}^{[ag]}, \cdots, \widetilde{H}_{f_{sam1}=N_{bw\_p}-1}^{[ag]}$ ) through decompression. In the above-described procedures, the IDFT size may be configured based on the total RB size of the bandwidth allocated to the Pcell. However, for the size of the DFT for CSI reconstruction, the BW gap between the PCell and the SCell may be comprehensively considered and may be interpreted as one extended bandwidth, so as to reconstruct one extended channel information in the frequency domain.

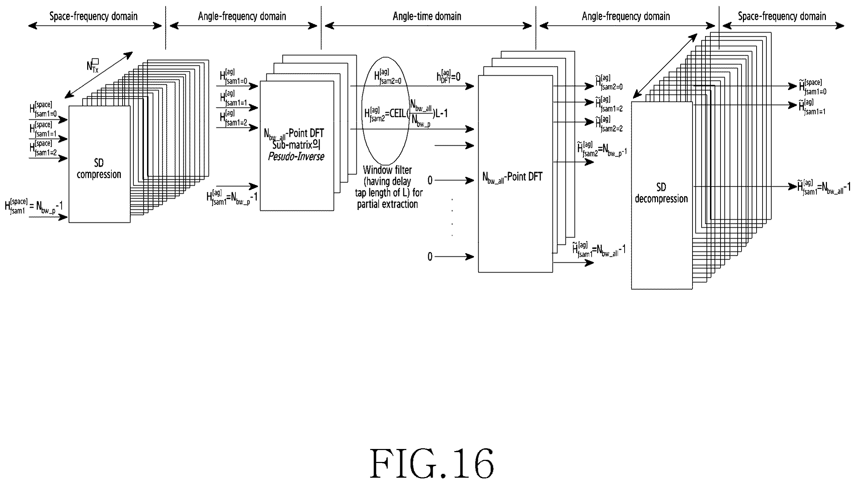

FIG. 16 illustrates a channel prediction method considering a PCell and an SCell according to various embodiments of the disclosure.

Referring to FIG. 16, an embodiment of a procedure (for example, steps 1310 to 1340) wherein, in a procedure for estimating information of one extended channel interpreted as one extended bandwidth by considering the bandwidth of the PCell, the bandwidth of the adjacent SCell, and the BW gap between the PCell and the SCell, as described above with reference to the channel information of the PCell, instead of using interpolation to obtain an up-sampled signal in the delay domain, based on the compressed channel information for the SRS of the PCell described above, the base station applies a sub-matrix of the inverse matrix obtained by applying the pseudo-inverse of the DFT matrix corresponding to the up-sampling size as large as required to consider both the PCell and the SCell, to achieve compression in the spatial domain, extracts a signal compressed in the spatial domain, and then performs a CSI reconstruction operation, may be described.

According to an embodiment, the base station may compress static channel information (e.g., $N_{bw\_p}$ channel components $H_{f_{sam1}=0}^{[space]}, \cdots, H_{f_{sam1}=N_{bw\_p}-1}^{[space]}$ ) for the SRS of the PCell in the spatial domain. Specifically, the base station may perform compression by using a discrete Fourier transform (DFT), a singular value decomposition (SVD), or a QR (or QR decomposition) basis. The above operations may correspond to step 1310 described above. In this case, compression in the spatial domain may be represented by Equation 8 below.

[Equation 8]

$$H^{[space]} = W_1 H^{[ag]} \; \rightarrow \; H^{[ag]} = W_1^H H^{[space]}$$

Through Equation 8 as above, the channel components in the spatial domain may be transformed, through operation with $W_1 W_1$ which is a compression matrix of the spatial domain constructed by the basis of the spatial domain, to channel vectors (e.g., $H_{f_{sam1}=0}^{[ag]}, \cdots, H_{f_{sam1}=N_{bw\_p}-1}^{[ag]}$) which have been transformed into the angle domain from the spatial domain so as to have low dimensionality. The dimension of a vector corresponding to each sample may be expressed by (X) 1, which is the number of bases used for spatial domain compression, and the total number of samples of the entire frequency domain may be the same as the total number of RBs of the PCell.

In addition, the base station may perform IDFT on channel components having a size of $N_{bw\_p}$ in order to perform CSI recovery for the intra-band SCell. By using a sub-matrix of a pseudo-inverse (inverse matrix) of the up-sampled DFT matrix considered for the expanded bandwidth, the base station may perform CSI recovery for the entire bandwidth, considering both the PCell and the SCell, so as to extract delay domain information from the compressed channel information in the spatial domain of the PCell. In this case, the submatrix may be a matrix of at least a part of the entire matrix. The base station may perform more optimized operations than the method of using IDFT (for example, the method described with reference to FIG. 15) through the "sub-matrix technique of the pseudo-inverse (inverse matrix) of the up-sampled DFT matrix considered for an expanded bandwidth" described above. Since the number of channel components in the up-sampled channel components in the entire time domain having a non-zero channel coefficient (e.g., in the case where $h_{DFT}^{[ag]} \neq 0$) may be very small as compared to the number of channel components having a zero channel coefficient (e.g., in the case where $h_{DFT}^{[ag]} = 0$), the predicted CSI of the SCell may also yield a result close to the case in which the IDFT is applied, even when a pseudo-inverse method for a submatrix is used. In addition, unlike the case in which the IDFT is applied on the basis of the entire matrix, the pseudo-inverse technique is based on a sub-matrix and thus may simplify the computation process. The base station may apply the above-described pseudo-inverse method to the channel components (e.g., $H_{f_{sam1}=0}^{[ag]}, \cdots, H_{f_{sam1}=N_{bw\_p}-1}^{[ag]}$) that constitute a submatrix among the channel components in the frequency domain, to transform the channel components in the frequency domain to the channel components (e.g., $h_{T_{sam2}=0}^{[ag]}, \cdots, h_{T_{sam2}=CEIL(\frac{N_{bw\_all}}{N_{bw\_p}})N_{bw\_p}-1}^{[ag]}$) in the time domain. In this case, a process of estimating up-sampled channel coefficients for the delay tap in consideration of the broadband including both the PCell and the Scell may be included.

According to an embodiment, as used by the base station in step 1320, a window filter for partially extracting dominant components with respect to the channel components transformed in the time domain may include a vector sample having the Nonzero norm in the previous step.

The channel components in the time domain to which the window filter is applied may be $\{h_{T_{sam1}=0}^{[ag]}, \cdots, H_{T_{sam1}=L-1}^{[ag]}\}$. In this case, L may refer to the length of a delay tap. Therefore, the channel components in the time domain to which the window filter is applied may include only the channel components (e.g., $h_{DFT=0}^{[ag]}, \cdots, h_{DFT=L-1}^{[ag]}$) excluding the compressed channel components (e.g., $h_{DFT=L}^{[ag]}, \cdots, h_{DFT=N_{bw\_p}-1}^{[ag]}$) having a norm value of zero. However, the present disclosure is not limited to excluding of only the components having the value of $h_{T_{sam1}=n}^{[ag]} = 0$, and may vary according to the configuration of the window filter considering the range of the dominant value to be filtered. The base station may reduce the dimension of the time domain channel coefficients required for channel prediction through a window filter for partial extraction.

Based on the compressed channel information for the SRS of the PCell described above, the base station may perform a CSI reconstruction operation by using a sub-matrix of an inverse matrix to which a pseudo-inverse of a DFT matrix corresponding to an up-sampling size as much as required, in consideration of both the PCell and the SCell, is applied.

The base station may estimate up-sampling components by comprehensively considering both the PCell and the SCell for the channel components in the time and delay domain to which the above-described window filter is applied, and may then reconstruct the signals in the entire frequency domain by using one DFT of an extended bandwidth size comprehensively considering both the PCell and SCell. In this case, DFT for the $N_{bw\_all}$ channel components considering the entire bandwidth including both the PCell and SCell may be expressed by Equation 9 below.

[Equation 9]

$$\tilde{H}^{[ag]}_{f_{sam2}=k}=\text{DFT}\{h^{[ag]}_{T_{sam2}=k}\} \text{ (For n=0, 1, 2, } \cdots, N_{bw\_all}-1)$$

The base station may apply IDFT according to Equation 9 to transform the channel components in the time and delay domains back to channel components in the frequency domain (e.g., $\tilde{H}^{[ag]}_{f_{sam1}=0}, \cdots, \tilde{H}^{[ag]}_{f_{sam1}=N_{bw\_p}-1}, \cdots, \tilde{H}^{[ag]}_{f_{sam1}=N_{bw\_all}-1}$). However, in case that the expanded up-sampling window filter is applied, as many signals as the length 2L of the delayed tap may be transformed to channel components in the frequency domain.

The base station may perform decompression using at least one of DFT, SVD, or QR basis in the spatial domain with respect to the channel components in the transformed frequency domain. Therefore, the channel components in the angle domain may be transformed into channel components in the spatial domain (for example, $\tilde{H}^{[ag]}_{f_{sam1}=0}, \cdots, \tilde{H}^{[ag]}_{f_{sam1}=N_{bw\_p}-1}$) through a decomposition.

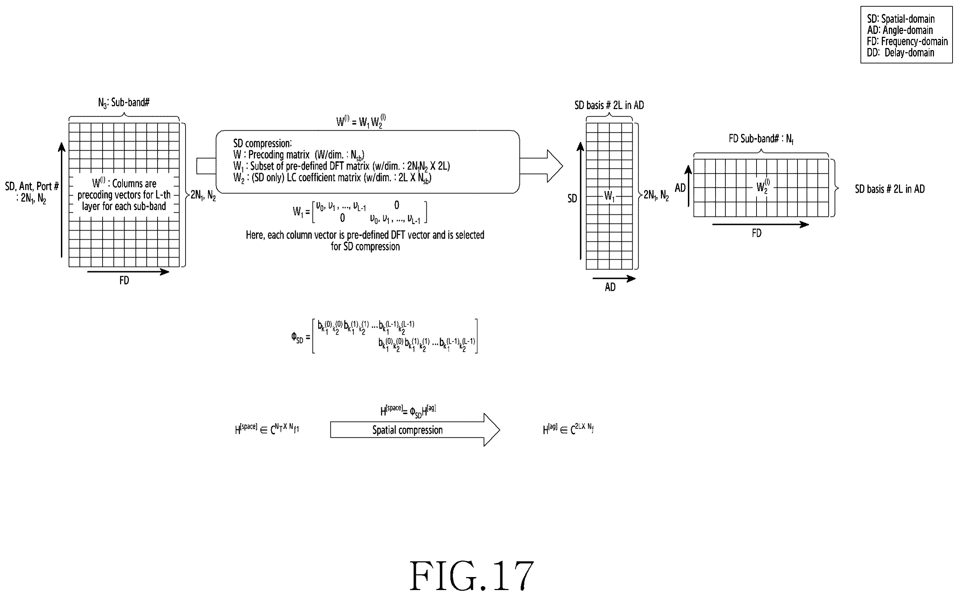

FIG. 17 illustrates a spatial domain compression method according to various embodiments of the disclosure.

Referring to FIG. 17, the operation of compressing, in the spatial domain, static channel information for the SRS of the PCell described above may be more specifically described. Static channel information regarding the SRS of the PCell in the spatial-frequency domain may be expressed as a matrix of $2N_1N_2 \times N_3$ in the spatial domain. In this case, $N_3$ may refer to a sub-band# in the frequency domain, and $2N_1N_2$ may refer to an antenna port (Ant. port#).

In addition, a precoding channel matrix $W^{(l)}$ (for example, a matrix having a dimension of (number of transmission antennas x number of sub-bands)) may be calculated from a matrix product of $W_1$ and $W_2^{(l)}$ extracted from a PMI.

[Equation 10]

$$W^{(l)} = W_1 W_2^{(l)}$$

In Equation 10, the matrix $W_1$ is an element for expressing a spatial domain with respect to a channel formed between a base station and a UE, and may be a set of 2D DFT column vectors that configure the channel and express the vertical and horizontal channel components in the spatial domain. In addition, the matrix $W_1$ may indicate a spatial domain beam component of the PMI, and may be used for compression in a spatial domain. For example, the matrix $W_1$ may include, in the form of a tall matrix, a matrix (e.g., $2N_1N_2 \times 2L$) regarding a spatial domain compression basis related to a spatial beam. The matrix $W_1$ may be expressed by Equation 11 below.

[Equation 11]

$$W_1 = \begin{bmatrix} v_0, v_1, \ldots, v_{L-1} & 0 \\ 0 & v_0, v_1, \ldots, v_{L-1} \end{bmatrix}$$

In Equation 11, each column vector $v_i$ may be a pre-defined DFT vector ($2N_1N_2 \times 1$).

The matrix $W_2^{(l)}$ may be a matrix having a channel sparsity characteristic for a joint SD/FD component of the channel. Each element of the matrix $W_2^{(l)}$ may refer to a channel coefficient value mapped to a row vector (row vector) of $W_1$ mapped to a row value of a corresponding element of $W_2^{(l)}$, a spatial domain basis (e.g., a DFT column vector of a spatial domain), and a frequency domain (FD) basis (e.g., a DFT row vector of a frequency domain) mapped to a column value. According to an embodiment, the matrix $W_2^{(l)}$ may include a matrix regarding beam angles and time-delay sparsity.

Therefore, spatial domain compression may be expressed by Equation 12 below.

[Equation 12]

$$H^{[space]} = \Phi_{SD} H^{[ag]}$$

In Equation 12, $H^{[space]} \in \mathbb{C}^{N_T \times N_{f_1}}$, $H^{[ag]} \in \mathbb{C}^{2L \times N_f}$, and $N_f$ may denote a frequency domain subband. In addition, in Equation 12, $\Phi_{SD}$ may be expressed as in Equation 13 below.

[Equation 13]

$$\Phi_{SD} = \begin{bmatrix} b_{k_1^{(0)} k_2^{(0)}} b_{k_1^{(1)} k_2^{(1)}} \dots b_{k_1^{(L-1)} k_2^{(L-1)}} & \\ & b_{k_1^{(0)} k_2^{(0)}} b_{k_1^{(1)} k_2^{(1)}} \dots b_{k_1^{(L-1)} k_2^{(L-1)}} \end{bmatrix}$$

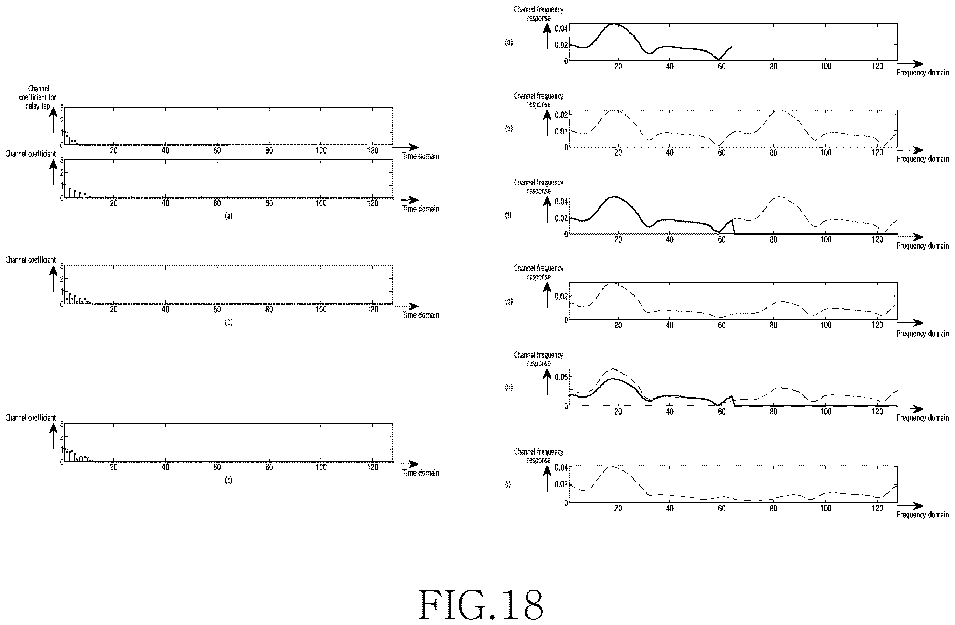

FIG. 18 illustrates a CSI recovery method according to various embodiments of the disclosure.

Referring to FIG. 18, the relationship with a channel coefficient in the time domain and the relationship of the channel frequency response in the frequency domain may be explained. Graphs (a) in FIG. 18 may include an upper graph (at the upper side of (a)) indicating channel coefficients for the delay tap and a lower graph (at the lower side of (a)) indicating channel coefficients of up-sampled channel components. That is, the channel components in the lower graph of (a) may be obtained by upsampling, by two times, the channel components in the upper graph of (a), respectively.

In graph (b) of FIG. 18, the base station may assume a value between channel components having the dominant channel coefficients in graphs (a) according to a predetermined estimation method (e.g., linear estimation). In this case, as the channel components are upsampled, the time interval between channel components having a non-zero channel coefficient (e.g., channel components having a dominant channel coefficient) may be expanded twice. In this case, the base station may track each channel component and apply an interpolation method. However, the base station may configure a range of channel components having dominant channel coefficients as one window through the window filter described above. In addition, the base station may perform CSI recovery by applying the interpolation method to only the channel components belonging to the configured window. In other words, the description with regard to graph (b) of FIG. 18 may be an example of the above-described IDFT technique in FIG. 15.

Graph (c) in FIG. 18 may illustrate channel coefficient values of the channel components to which the above-described pseudo-inverse technique has been applied, in contrast to the case of (b). That is, in case that the pseudo-inverse technique for the above-described sub-matrix is applied, the values between channel components having a dominant channel coefficient as in (a) may be represented as in graph (c). As a result, the channel components in (c) may be derived to have channel coefficient values similar to those of the channel components in (b). That is, the description with regard to (c) of FIG. 18 may be an example of the pseudo-inverse technique for the sub-matrix in FIG. 16 described above.

Graph (d) of FIG. 18 may refer to a channel frequency response graph in a frequency domain corresponding to the upper graph of (a). In addition, graph (e) of FIG. 18 may refer to a channel frequency response graph in a frequency domain corresponding to the lower graph of (a). For example, the two times up-sampled channel components may show a channel frequency response result of 1/2 times in the frequency domain. Here, compared to the channel frequency response of the PCell in (d), the predicted channel frequency response of the SCell in (e) may be close to identical. Therefore, it is noted that CSI recovery based on the two times up-sampled channel components as in (a) shows a response close to a copy of the PCell channel information.

Graph (f) in FIG. 18 may illustrate a channel frequency response of the frequency components in (d) and (e). In addition, graph (g) may indicate a combined channel frequency response form of (f), and may refer to a channel frequency response graph in the frequency domain corresponding to (b). Therefore, in case that the channel components between up-sampled channel components in (b) are assumed in accordance with estimation such as linear estimation, graph (g) may show a channel frequency response form different from the copy form of the PCell channel information in (e).

Graph (h) of FIG. 18 may illustrate a channel frequency response form of respective frequency components of (f) and (g). Further, graph (i) may represent a synthesized channel frequency response form of (h), and may refer to a channel frequency response graph in the frequency domain corresponding to (c). Therefore, in the case that the pseudo-inverse technique of (c) is applied, graph (i) may show a channel frequency response in a form similar to the channel frequency response graph of (g).

The above description regarding the CSI recovery operation of the base station may be applied to all cases based on the SRS or eType 2 PMI. In other words, the disclosure is not limited to the type of channel information of the PCell.

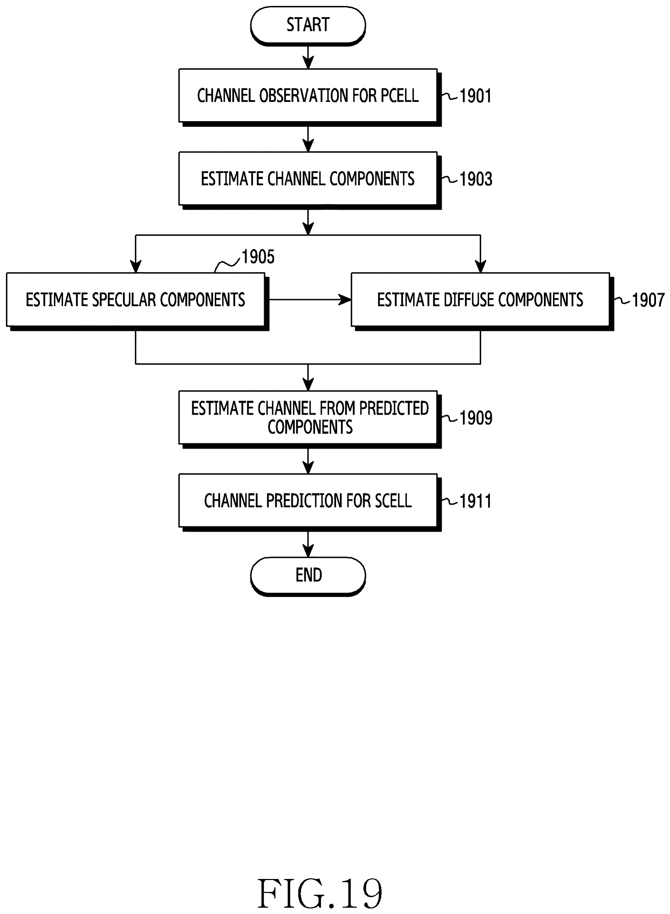

FIG. 19 illustrates a CSI recovery and channel prediction operation of a base station according to various embodiments of the disclosure.

Referring to FIG. 19, an overview of the above-described CSI recovery and CSI prediction operations may be described.

In step 1901, the base station may observe a channel for a PCell. For example, the base station may obtain channel information (e.g., SRS or PMI) of the PCell.

In step 1903, the base station may estimate channel components. In this case, the channel components may refer to at least one peak signal in the channel frequency response.

In step 1905, the base station may estimate specular components. The spectral components may have a dominant peak value in a channel frequency response and may refer to some components having specific non-zero values. Therefore, the base station may perform DFT-based estimation for a plurality of dominant peaks.

In step 1907, the base station may estimate a diffuse component. The diffuse component may refer to a statistically estimated value of a component remaining after removing the specular component in step 105. According to an embodiment, the base station may perform a diffuse component estimation operation after performing the operation of step 1905 described above. According to an embodiment, the base station may perform only the operation of step 1905 described above, and may omit the diffuse component estimation operation.

The relationship between the specular components and the diffuse component described above may be expressed as $x[n] = h[n] - s[n]$. Here, $x[n]$ may indicate a diffuse component, $h[n]$ may indicate an observation channel, and $s[n]$ may indicate a sum of specular components. Linear prediction (for example, autoregressive (AR) outerpolation(extrapolation)  )  for  characterizing  the  diffuse  component  may  be  expressed  as $\hat{x}[n] = -\sum_{k=1}^{p} a[k]x[n-k]$ . In case that variance component $x[n]$ (n=0,1,..., N-1) observed in N subcarriers of the PCell is given, the base station may need to obtain an autoregressive coefficient $a[k]$ (k= 1,..., p) for some order $p$. Further, the base station may predict the diffuse channel component $\hat{x}[n]$ in an SCell subcarrier $n$ ($n \geq N$).

In addition, an error between the predicted channel and the observed channel in PCell subcarriers may be expressed as $e[n] = x[n] - \hat{x}[n] = x[n] + \sum_{k=1}^{p} a[k]x[n-k]$ wherein n=1, 2, ..., N-1. The base station may find AR coefficients by minimizing the mean square of the errors.

For example, $\mathbf{a} = arg\ \min_{\mathbf{a}}\langle|x[n] - \hat{x}[n]|^2\rangle$, $\mathbf{a} = (a\ a\ ...\ a[p])^T$, and a Yule-Walker equation for the AR coefficients as in Equation 14 below may be used.

[Equation 14]

$$\begin{pmatrix} r_{xx}[0] & r_{xx}^*[1] & \cdots & r_{xx}[m] \\ r_{xx}[1] & r_{xx}[0] & \cdots & r_{xx}[m-1] \\ \vdots & \vdots & \ddots & \vdots \\ r_{xx}[p] & r_{xx}[p-1] & \cdots & r_{xx}[0] \end{pmatrix} \begin{pmatrix} 1 \\ a \\ \vdots \\ a[p] \end{pmatrix} = \begin{pmatrix} \rho \\ 0 \\ \vdots \\ 0 \end{pmatrix}$$

In Equation 14, $r_{xx}[k] = \langle x[n]x^*[n-k]\rangle$ may refer to an autocorrelation sequence and may be expressed as $\rho = \min\langle|e[n]|^2\rangle$.

In step 1909, the base station may perform channel reconstruction, based on the components predicted through step 1905 or steps 1905 and 1907.

In step 1911, the base station may perform channel prediction for an SCell, based on the reconstructed channel information.

Of course, the disclosure is not limited to the above example. In addition, at least one of the operations of the base station described above may be divided into separate operations, or two or more operations thereof may be combined into one operation. Also, at least one of the operations of the base station described above may be omitted, or a new operation may be added to and organically combined with the operations described above.

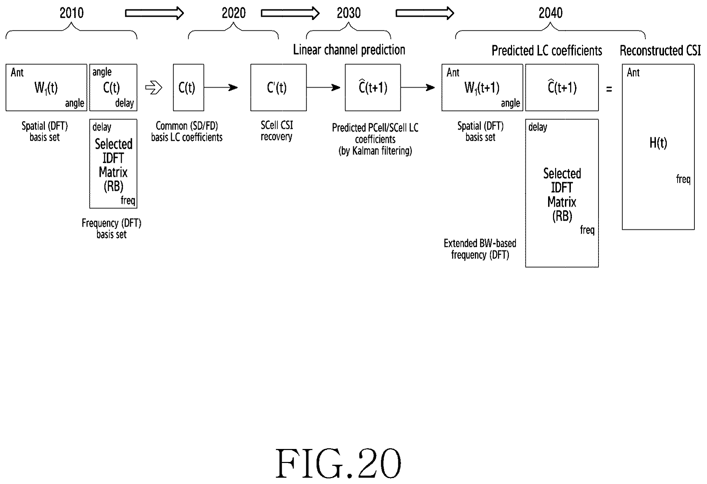

FIG. 20 illustrates a CSI recovery and channel prediction method based on an SRS according to various embodiments of the disclosure.

Referring to FIG. 20, an embodiment of operation blocks of a CSI recovery and CSI prediction procedure of an SCell using SRS may be described.

In step 2010, the base station may transform channel information (e.g., SRS) of a PCell in the spatial-frequency domain.

The matrix $W_1(t)$ is an operator for compressing spatial domain channel information regarding a channel formed between the base station and the UE to a low dimension (reduced dimension) angle domain, and may be expressed as a set of 2D DFT column vectors which configure the channel and express the spatial domain components in the vertical/horizontal directions. A part of the set of DFT column vectors used as a basis for the above-described spatial domain compression may be extracted from the Type 1 PMI information reported by the UE or other spatial domain compression information extracted from the SRS by using the Type 1 PMI information reported by the UE, as described above with reference to FIGs. 9A, 9B, 12A, and 12B.

In addition, the selected IDFT matrix in step 2010 may be expressed as a matrix $W_f(t)$, and $W_f(t)$ may be an operator that compresses a frequency domain with respect to a channel formed between the base station and the UE to a low-dimensional delay domain. In addition, the selected IDFT matrix may perform a role of enabling the compressed delay domain channel information to be obtained from the channel information having a correlation (correlation is visible) between frequency RBs, and may also be expressed as a set of 2D DFT column vectors.

In addition, the matrix $W_1(t)$ may be a matrix (e.g., $2N_1N_2 \times 2L$ ) regarding a spatial domain compression basis with regard to a spatial beam, expressed in a tall matrix form. The matrix $W_f(t)$ may be a tall matrix that expresses a matrix (e.g., $N_3 \times M$) related to a compression basis of a frequency domain of a PCell when the bandwidth corresponding to $N_3$ RBs of the PCell is compressed into M DFT basis vectors.

The base station may apply the matrix $W_1(t)$ and the matrix $W_f(t)$, which are spatial-frequency domain bases that have already been identified, to original channel information, so as to extract an LC coefficient value $C(t)$ for a joint spatial-frequency domain basis component in a compressed form of a low dimension. In this case, the base station may identify the frequency domain basis based on the IDFT matrix. The base station may recognize that, for the time-varying channel caused by movement of the UE, a joint space-frequency domain basis component is changed (e.g., the basis set constituting the matrix $W_1(t)$ and the matrix $W_f(t)$ is configured differently according to the time $t$).

In step 2020, in case that the base station recognizes a change in the joint space-frequency domain basis component with regard to the time-varying channel caused by the movement of the UE, the base station may determine that mapping to the previous joint space-frequency domain basis component has occurred and a rotation is required for the LC coefficient value $\hat{C}'(t-1)$ previously estimated by the previous filtering. The base station may calculate by applying a rotation matrix capable of reflecting changes between basis components, to $\hat{C}'(t-1)$, so as to enable expression based on a joint space-frequency domain basis component, such as the LC coefficient value $C(t)$ obtained for the current joint space-frequency domain basis component. In addition, in step 2020, in a similar manner to step 925 in FIG. 9A or step 928 in FIG. 9B, in order to estimate the channel coefficients in the delay domain and the angle domain with respect to the total BW including the SCell and the PCell, the base station may secure a $C'(t)$ matrix including up-sampled estimated values expanded in the DD domain more than the channel compression information of the PCell secured in step 2010, by performing interpolation in the delay domain or by using a similar linear filter or non-linear filter.

In step 2030, the base station may predict a low-dimensional joint LC coefficient value with respect to the time-varying channel of the calculated entire BW including the SCell and the PCell. According to an embodiment, the base station may apply a Kalman filter to the LC coefficient value $C(t)$ for the joint spatial-frequency domain base components extracted in step 2010 and the LC coefficient values $C'(t)$ that are estimated values up-sampled after rotation and are extracted in step 2020, based on the values of the previous step. According to the application of the Kalman filter, the base station may predict and calculate a predicted joint LC coefficient value $\hat{C}(t+1)$ of a low dimension.

In step 2040, the base station may reconstruct the predicted CSI in full dimensions of the spatial domain and the frequency domain. According to an embodiment, the base station may reconstruct the full-dimensional predicted CSI, based on the predicted joint LC coefficient value $\hat{C}(t+1)$. More specifically, the base station may reuse the current SD base-related value $W_1(t)$ obtained at the time of reconstructing the predicted CSI. In addition, the extended FD base-related $W'_f$ $(t)$ may be expressed as an extended DFT matrix mapped to the up-sampling LC coefficient value $\hat{C}(t+1)$ up-sampled in step 2030. For example, in case that the BW including the PCell and the SCell has twice as large BW as that of the PCell, the extended FD base-related $W'_f(t)$ may be expressed as a vector set reflecting an up-sampling size twice as large as that of the existing dominant FD bases, and may follow the order of the frequency components so as to be mapped to the up-sampling LC coefficients. The base station may obtain a reconstructed CSI matrix $H(t)$, by using the predicted up-sampling LC coefficient values $\hat{C}(t+1)$, $W_1(t)$, and $W'_f(t)$.

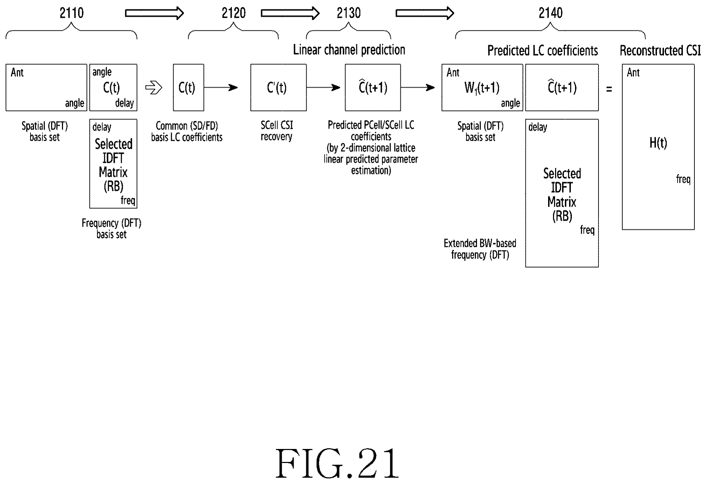

FIG. 21 illustrates a CSI recovery and channel prediction method based on an SRS according to various embodiments of the disclosure.

Referring to FIG. 21, an embodiment of operation blocks for a CSI recovery and CSI prediction procedure of an SCell using an SRS may be described.

In step 2110, the base station may transform channel information (for example, an SRS) of a PCell in a spatial-frequency domain. The matrix $W_1(t)$ and the matrix $W_f(t)$ expressed as the selected IDFT matrix in FIG. 21 may perform the same role as in step 2010 described above. The base station may recognize that, with respect to the time-variant channel caused by movement of the UE, a joint space-frequency domain base component is changed (for example, the change of a base set constituting matrices $W_1(t)$ and $W_f(t)$ is differently configured according to time $t$).

In step 2120, if the base station recognizes a change of a joint space-frequency domain basis component for a time-varying channel according to movement of the UE, the base station may determine that mapping to the previous joint space-frequency domain basis component has occurred and rotation is required for the LC coefficient value $\hat{C}'(t-1)$ previously estimated by the previous filtering. The base station may perform calculation by applying, to $\hat{C}'(t-1)$, a rotation matrix capable of reflecting change between the basis components, so that it can be expressed based on the joint space-frequency domain basis component like the LC coefficient value $C(t)$ obtained for the current joint space-frequency domain basis component. In step 2020, in a manner similar to that in step 925 of FIG. 9A or step 928 of FIG. 9B, in order to estimate the channel coefficient with respect to the entire BW including the SCell and the PCell in the delay domain and the angle domain, the base station may secure a *C'*(*t*) matrix including up-sampled estimated values expanded in the DD domain more than the channel compression information of the PCell secured in step 2010, by performing interpolation in the delay domain or by using a similar linear filter or non-linear filter.

In step 2130, the base station may predict a low-dimensional joint LC coefficient value with regard to a time-varying channel of the entire BW including the SCell and the PCell. According to an embodiment, the base station may apply two-dimensional lattice linear prediction parameter estimation by applying, in the same manner as in step 929 of FIG. 9B, an RLS filter or a filter based on a Yule-Walker equation, to the LC coefficient value *C*(*t*) for the joint space-frequency domain base component extracted in step 2010 and the LC coefficient values *C'*(*t*) which are up-sampled estimated values after rotation extracted in step 2020, based on the values of a previous step. According to the application of the 2D lattice linear prediction parameter, the base station may predict and calculate the low dimensional joint LC coefficient value $\hat{C}(t + 1)$.

In step 2140, the base station may perform an operation of reconstructing the predicted CSI in full dimensions of the spatial domain and the frequency domain, in the same or similar manner as in step 2040. Therefore, description overlapping that for step 2040 may be omitted.

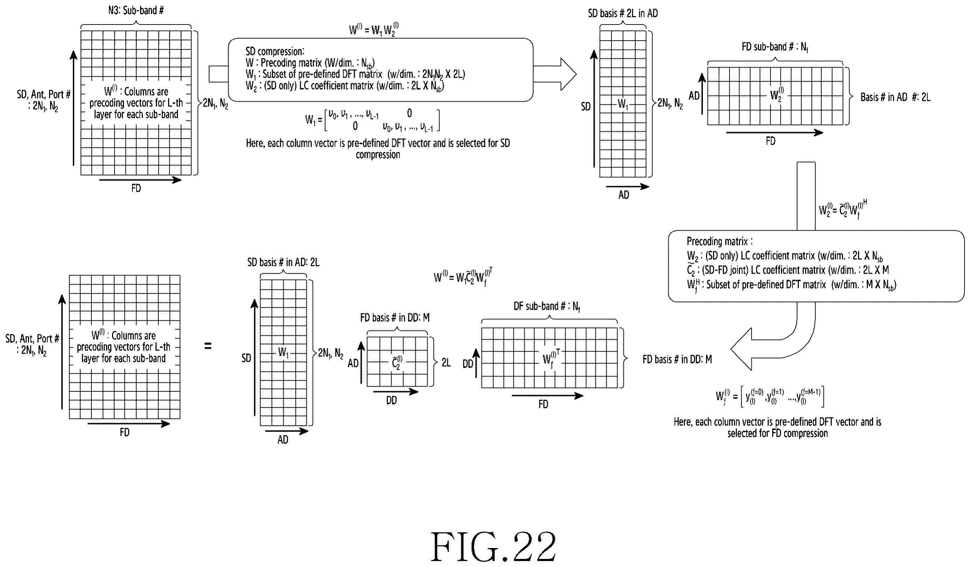

FIG. 22 illustrates a spatial domain and frequency domain compression method according to various embodiments of the disclosure.

Referring to FIG. 22, the operation of compressing static channel information for an SRS of a PCell, which has been described above, in the spatial domain and in the frequency domain, may be described in more detail.

First, spatial domain compression will be described. According to an embodiment, static channel information for an SRS of a PCell in a space-frequency domain may be expressed by a matrix of $2N_1N_2 \times N_3$ in the space domain. Here, $N_3$ may indicate a sub-band in the frequency domain, and $2N_1N_2$ may indicate an antenna port (Ant. Port#).

In addition, the precoding channel matrix *W*(*l*) (e.g., a matrix having a dimension of (number of transmission antennas x number of sub-bands)) may be calculated as $W^{(l)} = W_1 W_2^{(l)}$ from the matrix product of $W_1$, $W_2^{(l)}$ extracted from the PMI.

The matrix $W_1$ may be an element that expresses a spatial domain with respect to a channel formed between the base station and the UE, and may be a 2D DFT column vector set that configures the channel and expresses the vertical/horizontal channel components in the spatial domain. The matrix $W_1$ may indicate a spatial domain beam component of the PMI, and may be used for compression of a spatial domain area. For example, the matrix $W_1$ may include a matrix (e.g., $2N_1N_2 \times 2L$) regarding a spatial domain compression basis related to a spatial beam in the form of a tall matrix. The matrix $W_1$ may be expressed as $\begin{bmatrix} v_0, v_1, \ldots, v_{L-1} & 0 \\ 0 & v_0, v_1, \ldots, v_{L-1} \end{bmatrix}$ and each column vector $v_i$ may be a pre-defined DFT vector ($2N_1N_2 \times 1$).

The matrix $W_2^{(l)}$ may be a matrix having a channel sparsity property with regard to the joint spatial domain/frequency domain component of the channel. Each component of the matrix $W_2^{(l)}$ may refer to a channel coefficient value mapped to a row vector of $W_1$ mapped to a row value of the corresponding component of $W_2^{(l)}$ and each frequency domain (FD) basis (for example, a frequency domain DFT row vector) mapped to a column value. According to an embodiment, the matrix $W_2^{(l)}$ may include a matrix regarding the beam angle and time-delay sparsity. Therefore, the spatial domain compression may be expressed as $H^{[space]} = \Phi_{SD} H^{[ag]}$, $H^{[space]} \in \mathbb{C}^{N_T \times N_{f_1}}$, $H^{[ag]} \in \mathbb{C}^{2L \times N_f}$, and $N_f$ may indicate the number of frequency domain subbands. Further, $\Phi_{SD}$ may be expressed as follows:

$$\begin{bmatrix} b_{k_1^{(0)}k_2^{(0)}} b_{k_1^{(1)}k_2^{(1)}} \ldots b_{k_1^{(L-1)}k_2^{(L-1)}} & \\ & b_{k_1^{(0)}k_2^{(0)}} b_{k_1^{(1)}k_2^{(1)}} \ldots b_{k_1^{(L-1)}k_2^{(L-1)}} \end{bmatrix}.$$

The above-described spatial domain compression may include the same procedure as the spatial domain compression operation of FIG. 17 described above.

Next, frequency domain compression will be described. According to an embodiment, the matrix $W_2^{(l)}$ may be expressed as in Equation 15 below.

[Equation 15]

$$W_2^{(l)} = \tilde{C}_2^{(l)} W_f^{(l)^H}$$

In this case, the base station may select a frequency domain basis from the PMI, and may identify the frequency domain basis-related precoding matrix element $W_f^{(l)^H}$. That is, the precoding matrix element $W_f^{(l)^H}$ may refer to a subset of a predefined DFT matrix. In addition, the precoding matrix element $W_f^{(l)^H}$ may be expressed by an equation, $W_f^{(l)} = \left[ y_l^{(f=0)}, y_l^{(f=1)}, \dots y_l^{(f=M-1)} \right]$. Here, each column vector $y_l^{(f)}$ may be a predefined DFT vector and may be selected for frequency domain compression. In addition, the base station may identify the LC weight-related precoding matrix element $\check{C}_2$. That is, the precoding matrix element $\check{C}_2$ may refer to an LC coefficient matrix.

According to the frequency domain compression, Equation 15 may be transformed into Equation 16 below.

[Equation 16]

$$W^{(l)} = W_1 \tilde{C}_2^{(l)} W_f^{(l)^T}$$

The base station may reconstruct the predicted CSI according to Equation 15.

Referring to 3GPP 38.214 protocol, the base station may obtain information for the SD basis by performing CSI parsing of $i_{1,1}$ and $i_{1,2}$ among $i_1$ and $i_2$ corresponding to PMI in the CSI feedback reported by the UE, and may then configure the matrix $W_1$.

[Table 1]

| $i_{1,1}$ | $i_{1,2}$ |
|---|---|
| - Rotation factor $[q_1, q_2]$<br>$q_1 \in \{0, \dots, O_1 - 1\}$<br>$q_2 \in \{0, \dots, O_2 - 1\}$ | - SD Beam selection<br>- orthogonal beam basis set index<br>$i_{1,2} \in \left\{0, \dots, \binom{N_1 N_2}{L} - 1\right\}$ |

The matrix $W_1$ may be expressed as a set of 2D DFT column vectors that express the channel components in the vertical and horizontal directions in the spatial domain. The DFT column vectors of the SD domain may be known weighted vectors pre-promised between a base station and a UE, and may have a feature of being used as a basis for spatial domain CSI channel information compression.

For example, information corresponding to rotation factors of the SD beam of $q_1$, $q_2$ may be extracted from $i_{1,1}$ which is partial information of PMI(il), and $n_1^i$, $n_2^i$ : orthogonal beam indices information may be extracted from $i_{1,2}$ which is partial information of PMI(il), respectively.

[Table 2]

| Number of CSI-RS antenna ports, $P_{CSI-RS}$ | $(N_1, N_2)$ | $(O_1, O_2)$ |
|---|---|---|
| 4 | (2,1) | (4,1) |
| 8 | (2,2) | (4,4) |
| | (4,1) | (4,1) |
| 12 | (3,2) | (4,4) |
| | (6,1) | (4,1) |
| 16 | (4,2) | (4,4) |
| | (8,1) | (4,1) |

(continued)

| Number of CSI-RS antenna ports, $P_{CSI-RS}$ | $(N_1,N_2)$ | $(O_1,O_2)$ |
|---|---|---|
| 24 | (4,3) | (4,4) |
| | (6,2) | (4,4) |
| | (12,1) | (4,1) |
| 32 | (4,4) | (4,4) |
| | (8,2) | (4,4) |
| | (16,1) | (4,1) |

Finally,  $\{m_1^{(i)}, m_2^{(i)}\}$ , which is expressed by the SD basis indexes of the i-th beam, may be expressed as in Equations 17 and 18 below, by combining the information $\{q_1, q_2\}$ corresponding to the rotation factors of the beams $q_1$, $q_2$ obtained from the above-described information $i_{1,1}$, information of orthogonal beam indices obtained from information $i_{1,2}$, and the oversampling factors $\{O_1, O_2\}$ configured in the horizontal/vertical dimension according to the radio unit shape according to Table 1.

$$[\text{Equation 17}]$$

$$\boldsymbol{u}_{m_1^{(i)}} = \left[1, \ e^{j\frac{2\pi m_1^i}{O_2 N_2}}, \quad \cdots \quad, e^{j\frac{2\pi m_1^i(N_2-1)}{O_2 N_2}}\right] \ (m_1^{(i)}:$$

SD beam index for the *i*-th beam in the horizontal domain, where   $m_1^{(i)} = O_1 \cdot n_1^i + q_1$ )

$$\text{Equation 18}]$$

$$\boldsymbol{v}_{m_2^{(i)}} = \left[1, \ e^{j\frac{2\pi m_2^i}{O_1 N_1}}, \quad \cdots \quad, e^{j\frac{2\pi m_2^i(N_1-1)}{O_1 N_1}}\right] \ (m_2^{(i)}:$$

SD beam index for the *i*-th beam in the vertical domains, where   $m_2^{(i)} = O_2 \cdot n_2^i + q_2$ )

In addition, the base station may obtain information on different FD bases according to layers by CSI parsing $i_{1,5}$ and $i_{1,6,1}$ among $i_1$ and $i_2$ corresponding to the PMI in the CSI feedback reported by the UE, referring to 3GPP 38.214 protocol. In addition, the base station may configure a matrix  $W_f^{(l)^H}$  expressed as a DFT vector set in the frequency domain on a layer-by-layer basis.

[Table 3]

| $i_{1,5}$ | $i_{1,6,l}$ |
|---|---|
| - Initial set ($M_{initial}$) of when $N_3 > 19$ <br><br> $i_{1,5} \in \{0,1, \dots ,2M_V - 1\}$ | - FD component selection <br> - DFT basis set index <br> $i_{1,6,l} \in$ <br><br> $\begin{cases} \left\{0, \dots, \binom{N_3 - 1}{M_v - 1} - 1\right\}, N_3 \leq 19 \\ \left\{0, \dots, \binom{2M_v - 1}{M_v - 1} - 1\right\}, N_3 > 19 \end{cases}$ |

According to an embodiment, the codebook according to a combination of the SD beam and the FD beam may be obtained through a joint linear combination by referring to L spatial domain (SD) DFT vectors (for example, column vectors

of W1, $M_v$ frequency domain DFT vectors, and $\tilde{C}_2^{(l)}$, which is a joint linear combination coefficient expressed in Equation 15).

In the meantime, by referring to 3GPP 38.214, the base station may configure the matrix $\tilde{C}_2^{(l)}$, which is a joint linear combination coefficient, by parsing $i_{1,7,l}$, $i_{1,8,l}$, $i_{2,3,l}$, $i_{2,4,l}$, $i_{2,5,l}$ among $i_1$ and $i_2$ corresponding to the PMI in the CSI feedback reported by the UE.

[Table 4]

| | |
|---|---|
| $i_{1,7,l}$ | - Bitmap of nonzero coefficient of layer *l* <br><br> $$i_{1,7,l} = \left[k_{l,0}^{(3)}, \dots, k_{l,M_v-1}^{(3)}\right] \ , \ k_{l,f}^{(3)} = \left[k_{l,0,f}^{(3)}, \dots, k_{l,2L-1,f}^{(3)}\right] \ , \ k_{l,i,f}^{(3)} \in \{0,1\}$$ <br><br> with 1 bit |
| $i_{1,8,l}$ | - Beam index of strongest coefficient of layer *l* <br><br> $$i_{1,8,l} \in \{0,1, \dots , 2L - 1\}$$ |
| $i_{2,3,l}$ | Commmon Amplitude scaling ( $p_{l,p}^{(1)}$ ) Per polarization per layer <br><br> $$i_{2,3,l} = \left[k_{l,0}^{(1)}, k_{l,1}^{(1)}\right] \ , \ k_{l,p}^{(1)} \in \{0, \dots, 15\}$$ <br><br> with 4 bit <br><br> $$p_{l,p}^{(1)} = \left(2^{15-k_{l,p}^{(1)}}\right)^{-\frac{1}{4}}$$ |
| $i_{2,4,l}$ | $$(p_{l,i,f}^{(2)}) \ i_{2,4,l} = \left[k_{l,0}^{(2)}, \dots, k_{l,M_v-1}^{(2)}\right]$$ <br><br> Differential Amplitude scaling <br><br> $$k_{l,f}^{(2)} = \left[k_{l,0,f}^{(2)}, \dots, k_{l,2L-1,f}^{(2)}\right] \ , \ k_{l,i,f}^{(2)} \in \{0, \dots, 7\}$$ <br><br> with 3 bit <br><br> $$p_{l,i,f}^{(2)} = \left(2^{7-k_{l,i,f}^{(2)}}\right)^{-\frac{1}{2}}$$ |
| $i_{2,5,l}$ | Differential Phase for combining $(\varphi_{l,i,f})$ (16psk) $i_{2,5,l} = [c_{l,0}, \dots, c_{l,Mv-1}]$ , $c_{l,f} = [c_{l,0,f}, \dots, c_{l,N3-1,f}]$ , $c_{l,i,f} \in \{0, \dots, 15\}$ with 4 bit <br><br> $$\varphi_{l,i,f} = \exp\left(j\frac{2\pi c_{l,i,f}}{16}\right)$$ |

In Table 4, $i_{1,7,l}$ shows that a bitmap having a length of $2LM_v$ may be expressed for each first layer to indicate, by 1 bit, whether each element of the matrix $\tilde{C}_2^{(l)}$, which is a joint linear combination coefficient, is zero or non-zero. Here, $k_{l,i,f}^{(3)}$ may indicate that when the matrix $\tilde{C}_2^{(l)}$ of the l-th layer has a size of 2L by $M_v$, the element at the i-th row and f-th column is represented by a bit of 0 or 1.

In Table 4, $i_{1,8,l}$ may indicate the number of a row having the strongest value in the first column of the matrix $\tilde{C}_2^{(l)}$, which is a joint linear combination coefficient, is zero or non-zero. Here, the strongest coefficient may indicate the maximum value of the amplitude without assigning a bit to $i_{2,3,l}$, $i_{2,4,l}$, $i_{2,5,l}$, and thus can save the bit payload.

In Table 4, $i_{2,3,l}$ is a value indicating the amplitude applied in common to the same polarization antenna among the elements of the matrix $\tilde{C}_2^{(l)}$, which is a joint linear combination coefficient, and 4 bits may be used for the bit payload thereof for each layer.

In Table 4, $i_{2,4,l}$ may perform the role of informing of differential amplitudes for $i_{1,7,l}$ in the scale of 3 bits, excluding the strongest coefficient known by $i_{1,8,l}$, among the elements of the matrix $\tilde{C}_2^{(l)}$, which is a joint linear combination coefficient.

In Table 4, $i_{2,5,l}$ may perform the role of informing of differential amplitudes for $i_{1,7,l}$ in the scale of 4 bits, excluding the strongest coefficient known by $i_{1,8,l}$, among the elements of the matrix $\tilde{C}_2^{(l)}$, which is a joint linear combination coefficient.

Therefore, by appropriately parsing the CSI of the aperiodic CSI report in which the e-type-II PMI is reported, the base station may reconstruct channel information having a high resolution by configuring an SD basis, an FD basis, and the matrix $\tilde{C}_2^{(l)}$ from the compressed channel information reported by the UE.

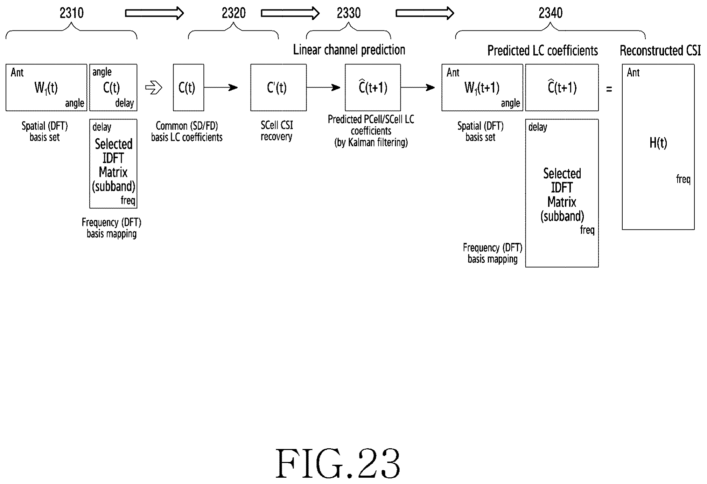

FIG. 23 illustrates a channel prediction process of an SCell, based on a PMI, according to various embodiments of the disclosure.

Referring to FIG. 23, an embodiment of operation blocks of a CSI recovery and CSI prediction procedure of an SCell based on a PMI may be described.

In step 2310, the base station may perform an operation of parsing the compressed eType 2 PMI feedback extracting a channel coefficient matrix. The matrix $W_1(t)$ is an element (e.g., a matrix including, as an element, a subband of an antenna port and a frequency domain) that expresses a spatial domain for a channel formed between a base station and a UE, and may be a set of 2D DFT column vectors that configures the channel and express channel components of the vertical and horizontal directions in the spatial domain. In addition, the matrix $W_1(t)$ may be expressed in the form of a tall matrix regarding a spatial domain compression basis (e.g., $2N_1N_2 \times 2L$) related to a spatial beam. $W_f(t)$ is an operator for compressing a frequency domain into a low-dimensional delay domain with respect to a channel formed between a base station and a UE, may perform a role of enabling channel information showing a correlation between frequency RBs to be obtained from compressed delay domain channel information, and may also be expressed as a set of 2D DFT column vectors.

The base station may identify the LC coefficient value $C(t)$ mapped to matrices $W_1(t)$ and $W_f(t)$ corresponding to already identified spatial-frequency domain bases, by parsing the information of the eType 2 PMI feedback reported by the UE. In addition, the base station may recognize that, with respect to the time-variant channel caused by movement of the UE, a joint space-frequency domain base component is changed (for example, the change of a base set constituting matrices $W_1(t)$ and $W_f(t)$ is differently configured according to time $t$). The base station may identify a change of the basis set according to the time-varying channel without separate calculation, by storing CSI-parsed information and comparing it over time, as in steps 1011, 1013, and 1015 of FIG. 10A.

In step 2320, the base station may recognize a change of a joint space-frequency domain basic component with regard to a time-varying channel generated while the UE is moving, in the parsing step for the eType 2 PMI information. In case that the spatial-frequency domain base component is changed, the base station may perform recalculation by applying a rotation matrix already defined after CSI parsing to the previous LC coefficient value mapped to a joint spatial-frequency domain base component, to obtain an LC coefficient value $C'(t - 1)$ for an updated spatial-frequency domain base component. In addition, in step 2020, the base station may perform estimation for channel coefficients in the delay domain and the angle domain with respect to the entire BW including the SCell and the PCell, as in step 1025 of FIG. 10A or step 1025 of FIG. 10B. In step 2030, based on the channel compression information of the PCell obtained in step 2010, the base station may obtain a matrix $C'(t)$, which is expanded up-sampled estimation values in the DD domain, by performing interpolation in the delay domain or by applying a linear filter or a non-linear filter.

In step 2330, the base station may predict a low-dimensional joint LC coefficient value with respect to a time-varying channel of the entire BW including the SCell and the PCell. According to an embodiment, the base station may apply a Kalman filter to to the LC coefficient value $C(t)$ for the joint space-frequency domain base component extracted in step 2310 and the LC coefficient values $C'(t)$ which are up-sampled estimated values after rotation extracted in step 2320, based on the values of the previous step. According to the application of the Kalman filter, the base station may predict and calculate a low dimensional predicted up-sampling LC coefficient value $\check{C}(t + 1)$.

In step 2340, the base station may reconstruct the predicted CSI in the full dimensions of the spatial domain and the frequency domain. According to an embodiment, the base station may reconstruct the predicted CSI of the entire dimensions, based on the predicted joint LC coefficient value $\check{C}(t + 1)$. More specifically, at the time of the predicted CSI reconstruction, the base station may reuse the SD basis-related $W_1(t)$ obtained from the current PMI. The extended FD base-related $W'_f(t)$ may be expressed as an extended DFT matrix mapped to the up-sampling LC coefficient value $\hat{C}(t + 1)$ up-sampled in step 2030. For example, in case that the BW including the PCell and the SCell has twice as large BW as that of the PCell, the predicted up-sampling LC coefficient values $\hat{C}(t + 1)$ may be expressed as a vector set reflecting an up-sampling size twice as large as that of the existing dominant FD bases, and may follow the order of the frequency components so as to be mapped to the up-sampling LC coefficients. The base station may obtain a reconstructed CSI matrix $H(t)$, by using the predicted up-sampling LC coefficient values $\hat{C}(t + 1)$, $W_{1,}(t)$, and $W'_{f}(t)$.

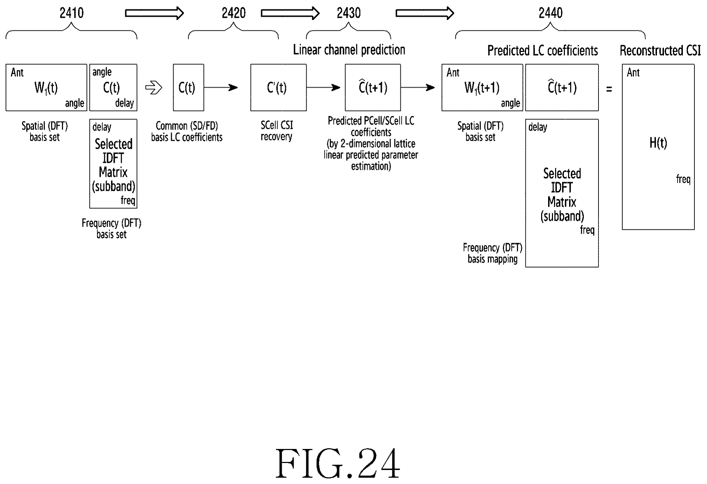

FIG. 24 illustrates a CSI recovery and channel prediction method based on a PMI according to various embodiments of the disclosure.

Referring to FIG. 24, an embodiment of operation blocks of a CSI recovery and CSI prediction process of the SCell based on the PMI may be described.

In step 2410, the base station may perform a compressed eType 2 PMI feedback parsing and a channel coefficient matrix extraction operation in the same or similar manner as in step 2310. Therefore, a description overlapping that for step 2310 may be omitted.

In step 2420, with respect to a time-varying channel occurring according to movement of the UE, the base station may perform an operation of recognizing the change of a joint space-frequency domain base component, in the same or similar manner as in step 2320. Therefore, a description overlapping that for step 2320 may be omitted.

In step 2430, the base station may predict a low-dimensional joint LC coefficient value with regard to a time-varying channel of the entire BW including the SCell and the PCell. According to an embodiment, the base station may apply two-dimensional lattice linear prediction parameter estimation by applying, in the same manner as in step 929 of FIG. 9B, an RLS filter or a filter based on a Yule-Walker equation, to the LC coefficient value $C(t)$ for the joint space-frequency domain base component extracted in step 2410 and the LC coefficient values $C'(t)$ which are up-sampled estimated values after rotation extracted in step 2420, based on the values of a previous step. According to the application of the 2D lattice linear prediction parameter, the base station may predict and calculate the low dimensional joint LC coefficient value $\hat{C}(t + 1)$.

In step 2440, the base station may perform an operation of reconstructing the predicted CSI in full dimensions of the spatial domain and the frequency domain, in the same or similar manner as in step 2340. Therefore, description overlapping that for step 2340 may be omitted.

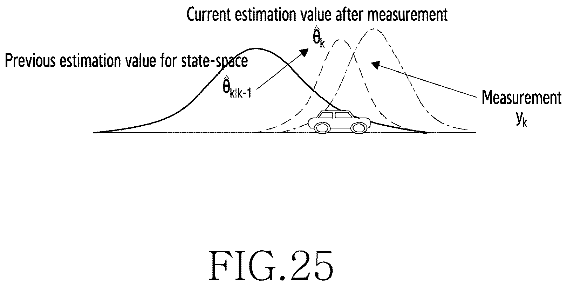

FIG. 25 illustrates a concept of a method for estimating a current state by using a Kalman filter according to various embodiments of the disclosure.

Referring to FIG. 25, an embodiment of a method of applying a linear Kalman filter to obtain an LC weight value is illustrated. The application method of the linear Kalman filter in FIG. 25 may be understood as a part of the components of the SCell channel prediction procedure described above.

The base station may determine an initial estimate. The base station may determine an initial mean value of the state vector. The base station may determine an initial covariance value of the state vector. For example, the state vector may be $\boldsymbol{\theta}_k = [\boldsymbol{\tau}_k^T,\ \boldsymbol{v}_k^T,\ \Delta\boldsymbol{\tau}_k^T,\ \Delta\boldsymbol{v}_k^T,\ \boldsymbol{\alpha}_k^T,\ \boldsymbol{\phi}_k^T]^T$ . The covariance may be $\boldsymbol{P}_k^{\theta} = E\left[\left(\boldsymbol{\theta}_k -\ \widehat{\boldsymbol{\theta}}_k\right)\left(\boldsymbol{\theta}_k - \widehat{\boldsymbol{\theta}}_k\right)^H\right]$ . The base station may determine $\hat{\theta}_0$ and $\boldsymbol{P}_0^{\theta}$ (i.e., k=0).

The base station may determine sigma point information. The sigma point information may include information on the positions of the sigma points in the UKF and information on the weight of each sigma point. The base station may calculate the sigma points. Further, the base station may calculate the weights of the sigma points. The number of sigma points is determined based on the dimensions of the covariance matrix. For example, the base station may calculate a sigma point ($\chi_i$) and the weight ($W_i$) at the corresponding sigma point, based on Equation 19 below.

[Equation 19]
$$\left(\widehat{\boldsymbol{\theta}}_{k-1},\ \boldsymbol{P}_{k-1}^{\theta},\ \kappa\ \right)\ \rightarrow\ (\chi_i,\ W_i)\ such\ that\ \boldsymbol{U}_k^T\boldsymbol{U}_k = (n + \kappa)\boldsymbol{P}_{k-1}^{\theta}$$

Here, $\hat{\theta}_{k-1}$ may represent a mean value of the previous state vector, $\boldsymbol{P}_{k-1}^{\theta}$ may represent covariance of the previous state vector, n may represent the dimension of the state, and $\kappa$ may be a constant. The base station may determine (2n+1) sigma points, and each weight may be determined based on n and $\kappa$. According to an embodiment, the Cholesky factorization may be used for deriving the sigma points and the weights.

The base station may obtain a priori estimate value and an error covariance. The priori estimate may represent a state expected at time interval k, on an assumption of a state at time interval (k-l). The priori estimate value may be determined based on Equation 20 below.

[Equation 20]
$$\left(\widehat{\boldsymbol{\theta}}_{k|k-1},\ \boldsymbol{P}_{k|k-1}^{\theta}\right) = UT(f(\chi_i),\ W_i,\ \boldsymbol{Q})$$

*with* $\quad P^{\theta}_{k|k-1} = cov\left(\theta_k - \widehat{\theta}_{k|k-1}\right)$

Here, $\left(\widehat{\theta}_{k|k-1}, \ P^{\theta}_{k|k-1}\right)$ may represent a new Gaussian distribution. $\hat{\theta}_{k|k-1}$ may indicate a predicted state and may be obtained through a combination of a state transfer function output $f(\chi_i)$ at the sigma point $\chi_i$ and the weight $W_i$. The above procedure is a procedure for estimating the state information of time interval k, based on the state information of time interval (k-1), and may be referred to as a state update procedure.

In addition, the base station may obtain measurement information. The measurement information may include a measurement result for an SRS received from a UE or may include CSI related to a measurement result for a CRS or CSI-RS. That is, the base station may obtain measurement information from the SRS buffer or the CSI buffer. The measurement information may be $y_k$. Further, the base station may determine a Kalman gain. The Kalman gain is a weight applied to a Kalman filter, and may be a gain that is repeatedly updated to minimize an error of inaccurate measurement information. First, the base station may predict the measurement information and the covariance, independently of the obtaining of the actual measurement information. For example, the base station may estimate measurement information and a covariance, based on Equation 21 below.

[Equation 21]

$$\left(\widehat{y}_k, \ P^y_k\right) = UT(h(\chi_i), \ W_i, \ R) \quad with \quad P^y_{k|k-1} = cov\left(y_k - \widehat{y}_{k|k-1}\right)$$

In Equation 21, $\left(\widehat{y}_k, \ P^y_k\right)$ may indicate a Gaussian distribution. $\hat{y}_k$ may indicate a predicted measurement state and may be obtained by combining the update function output $h(\chi_i)$ at the sigma point $\chi_i$ and the weight $W_i$. Here, the estimation procedure is a procedure of estimation before obtaining actual measurement information and may be performed before or after a measurement information acquisition procedure of a base station. That is, this procedure may be performed independently of the procedure of obtaining actual measurement information.

The base station may calculate a Kalman gain, based on the estimated information and the measured information actually obtained from the measurement information acquisition procedure. The Kalman gain is a gain determined to minimize an error of inaccurate measurement information, and the base station may calculate the Kalman gain in time interval k. For example, the base station may calculate the Kalman gain according to Equation 22 below.

[Equation 22]

$$P^{\theta y}_k = \sum_{i=1}^{2n+1} W_i \{f(\chi_i) - \widehat{\theta}_{k|k-1}\} \ \{h(\chi_i) - y_k\}^T$$

$$K_k = P^{\theta y}_k \left(P^y_k\right)^{-1}$$

$K_k$ may indicate Kalman gain in time interval k.

In addition, the base station may obtain a post-estimation value. The base station may obtain a post-estimation value, based on the Kalman gain, a priori estimated value, and measurement information difference. For example, the base station may calculate a post-estimation value according to Equation 23 below.

[Equation 23]

$$\widehat{\theta}_k = \widehat{\theta}_{k|k-1} + K_k \left(y_k - h\left(\widehat{\theta}_{k|k-1}\right)\right)$$

The post-estimation value $\hat{\theta}_k$ may indicate a state vector in time interval k. The base station may perform channel estimation, based on the channel parameters according to $\hat{\theta}_k$, from time interval k up to when the next measurement information is updated (e.g., up to when the next CSI is received).

In the next time interval (time interval (k+l)), the base station may perform again the above-described procedure for determining the sigma point information and obtaining the post-estimation value.

A procedure for obtaining measurement information or for obtaining a post-estimation value by the base station is a procedure for correcting the state information estimated from actual measurement information, and may be referred to as a measurement update procedure. In addition, in the above description, a state update procedure and a measurement update procedure are performed in one operation cycle of FIG. 25. However, the embodiments of the disclosure are not limited thereto. The measurement update procedure requires reception of actual channel information, and thus the performance frequency of each procedure may be configured to be different. In an embodiment, the measurement update procedure may be performed at a lower frequency than the state update procedure. According to an embodiment, the ratio of the number of measurement updates to the number of state updates may be configured to change according to a channel condition. This is because, in the case of a channel state having high volatility, the base station needs to minimize the possibility of an error by reflecting actual values through continuous measurement information updates.

According to an embodiment, the base station may apply an EKF to the LC weights in order to extract the Doppler parameter. The base station may operate, based on the method of applying the linear Kalman filter described above. However, the Kalman filter described above is based on a linear model, and therefore, the channel state which has high variability depending on a time resource, a frequency resource, and a space resource may not be linear depending on the movement of the UE. In particular, the channel vector includes nonlinear elements (e.g., exponential elements) such as phase parameters, delay parameters, and Doppler parameters, so that the conventional Kalman filter has difficulty in operating smoothly. Sampling based on the EKF may be different to a certain degree from the sampling result of the actual samples because it includes linear approximation performed through Taylor expansion.

According to an embodiment, the base station may perform sampling based on a UKF. The sampling based on the UKF may include an unscented transform (UT) process instead of a collective linear approximation. The unscented transformation may include a process of deriving sigma points near the mean, a process of determining weights of the sigma points, and a process of computing outputs of the sigma points through a nonlinear function. Through the above procedures, a new Gaussian distribution having UTmean and UTcovariance may be derived. Since the mean/covariance of a non-linear function is calculated instead of a linear transformation such as a Taylor expansion, channel estimation based on the UKF may provide a result similar to the actual distribution in a non-linear model. Such unscented transformation may provide a performance improvement in a nonlinear model and, at the same time, enables deriving of high-dimensional state variables in the form of a specified state vector, thereby providing low complexity.

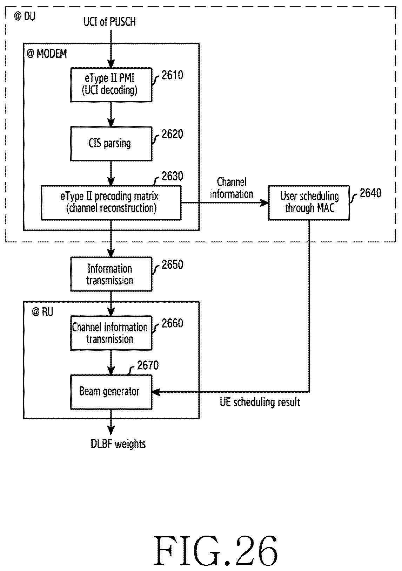

FIG. 26 illustrates a configuration of a base station associated with various embodiments of the disclosure.

In the structure illustrated in FIG. 26, a base station for SCell channel prediction performs MU (e.g., UE) scheduling by receiving a part or the entire of a channel matrix from a modem block with respect to an updated CSI report, instead of using CSI parsing information in an MACS (L2) scheduling block 2640.

In a channel prediction structure, a modem block of a distributed unit (DU) may perform CSI parsing 2620 according to the purpose of each element, after decoding uplink control information (UCI) 2610. The modem block of the DU may perform step 2630 of generating a channel matrix corresponding to CSI reconstruction, based on eType II PMI. The modem block of the DU may transmit a part or the whole of a channel matrix to the scheduling block (L2 MACS) 2640 of the DU, and a part or the whole of the transmitted channel matrix may be stored in the channel memory 2660. The scheduling block 2640 of the DU may perform MU (for example, UE) scheduling. Thereafter, the modem block of the DU may transmit the updated DL channel matrix 2650 corresponding to the reconstructed CSI to the MMU (e.g., radio unit (RU)) block, specifically to the channel memory (not illustrated) of the RU, so as to update the DL channel matrix from the transmitted slot. The scheduling block 2640 of the DU may transmit the MU-MIMO scheduling result, and an input to be input to the DL beamformer 2670 may be called from the channel memory 2660.

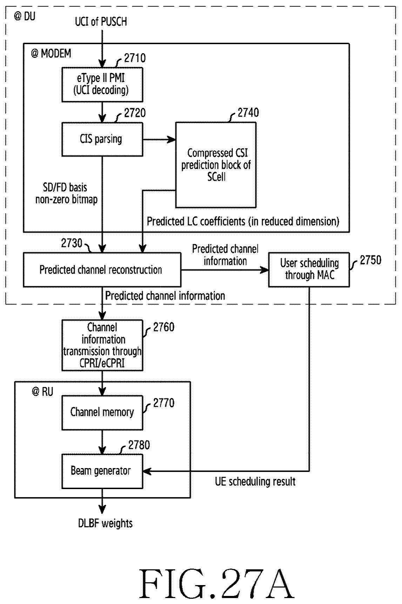

FIG. 27A illustrates a configuration of a base station which performs a channel estimation and prediction method of an SCell according to various embodiments of the disclosure.

Referring to FIG. 27A, a structure of a base station which performs a method of estimating and predicting a channel of an SCell, even in the absence of an etype-II PMI report for the SCell, in the case where a high-resolution PMI (e.g., an etype-II PMI) of a PCell is received, may be described.

More specifically, in addition to the channel prediction structure described above with reference to FIG. 26 for SCell channel prediction, the modem of the DU may further include a compressed CSI prediction block 2740 for the SCell. After decoding the UCI (2710), the modem block of the DU may transmit information regarding the linear combination (LC) coefficient of the AD/DD area reported by compressing the SD/FD basis, based on the parsing information of the etype-II PMI in the PCell, to the compressed CSI prediction block 2740 of the SCell. Further, the compressed CSI prediction block 2740 of the SCell among the modem blocks of the DU may obtain an up-sampled estimated value extended in the DD domain more than the PCell channel compression information, by considering the entire bandwidth including the PCell and adjacent SCell, by using obtaining the compressed information in the AD/DD domain of the PCell channel, generate a predicted LC weighting value corresponding to the up-sampled DD/AD in a reduced dimension, and then transmit the same to the block 2730 for CSI reconstruction. The block 2730 for CSI reconstruction may receive the spatial-frequency domain base-related value generated through CSI parsing (2720) and the predicted LC weighting value, and generate a channel matrix corresponding to CSI reconstruction. Here, the generated frequency domain basis vector may have a feature such that the dimension of the vector is extended to a dimension of the number of resource blocks (RBs) or the number of subbands considering the entire bandwidth of the PCell and the adjacent SCell, rather than the number of RBs considering the bandwidth of the PCell, so that CSI is reconstructed.

Thereafter, the DU may transmit a part or all of the channel matrix to a scheduling block (L2 MACS) 2750 of the DU, and the scheduling block 2750 of the DU may perform MU (e.g., UE) scheduling. Subsequently, the DU may transmit the updated DL channel matrix 2760 corresponding to the reconstructed CSI for an MMU (e.g., RU) block 2780, to the channel memory 2770 of the RU. The DU may update a DL channel matrix from the transmitted slot. A scheduling block 2750 of the DU may transfer the MU-MIMO scheduling result via a common public radio interface (CPRI) or eCPRI, and an input to be input to a DL beamformer (or beam generator) 2770 may be called from the channel memory 2780.

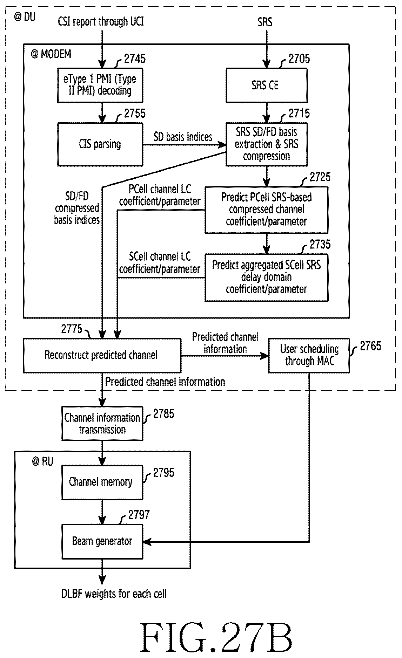

FIG. 27B illustrates a configuration of a base station which performs a method for estimating and predicting a channel of an SCell according to various embodiments of the disclosure.

Referring to FIG. 27B, a structure of a base station that performs a method for estimating and predicting an SCell channel, without SRS information of the SCell, based on an SRS and a PMI of the PCell, may be described.

Specifically, in addition to the channel prediction structure described above with reference to FIG. 26, the base station for channel prediction of the SCell may further include a compressed CSI prediction block of the SCell in a modem of a DU. The Modem of the DU may perform SRS channel estimation in the SRS CE block 2705. The Modem of the DU may decode (2745) UCI including Type 1 PMI independently of SRS channel estimation, and then provide the same as prior information to reduce the complexity of SD basis search necessary for SD compression of the SRS. The prior information may include a space-frequency domain base-related value generated through CSI parsing (2755) and a predicted LC weight value. The base station may compress (2715) the SRS channel information in the SD/FD domain by using an SD/FD basis extracted from the PMI and SRR. In addition, the base station may transmit, to an estimation and prediction block 2735 of compressed CSI of the SCell, information in which the information of the original channel is compressed by a linear coefficient in a dimension number corresponding to an AD/DD (angle-domain/delay domain).

In addition, the compressed CSI prediction block 2735 of the SCell may obtain an estimated value up-sampled more than the compressed channel information of the PCell by considering the entire bandwidth including the SCell adjacent to the PCell in the DD region, for the compressed information in the AD/DD region of the PCell channel. In addition, the compressed CSI prediction block 2735 of the SCell may generate the LC weight value predicted in a reduced dimension corresponding to the upsampled DD/AD and transmit the same to the CSI reconstruction block 2775. The CSI reconstruction block 2775 may receive a spatial-frequency domain base-related value generated through CSI parsing (2755) and a predicted LC weight value, and generate a channel matrix corresponding to CSI reconstruction. The generated frequency domain basis vector may have a feature such that the dimension of the vector is expanded to the number of RBs considering the entire bandwidth of the PCell and the adjacent SCell, rather than the number of RBs considering the bandwidth of the PCell.

Then, the DU may transmit a part or all of the channel matrix to a scheduling block (L2 MACS) 2765 of the DU, and the scheduling block 2765 of the DU may perform MU (e.g., UE) scheduling. The DU may transmit (2785) the updated DL channel matrix corresponding to the reconstructed CSI for the MMU (e.g., RU) block to the channel memory 2795 of the RU. The DU may update the DL channel matrix from the transmitted slot. The scheduling block 2765 of the DU may transfer the MU-MIMO scheduling result through CPRI or eCPRI, and an input to be input to the DL beamformer (or beam generator) 2797 may be called from the channel memory 2795.

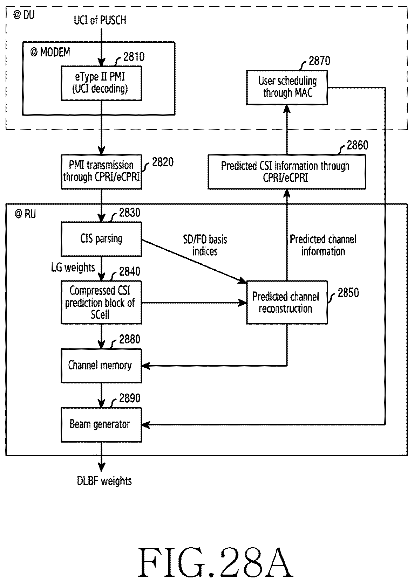

FIG. 28A illustrates a configuration of a base station performing a method for estimating and predicting a channel of an SCell, based on channel information secured in a PCell, according to various embodiments of the disclosure.

Referring to FIG. 28A, unlike the channel prediction structure described above with reference to FIG. 27A, a compressed CSI prediction block 2840 of the SCell may be located in an RU. After decoding the UCI (2810), the modem of the DU block may transmit (2820) information related to the LC weight to the RU through CPRI or eCPRI. Further, the RU may transmit the predicted LC weight value generated through CSI parsing (2830) to the compressed CSI prediction block 2840 of the SCell. In addition, the RU may transmit the spatial-frequency domain base-related value generated through CSI parsing (2830) to a CSI reconstruction block 2850. The CSI reconstruction block (2850) may receive the predicted LC weight value and the spatial-frequency domain basis-related value to generate a channel matrix corresponding to CSI reconstruction. Thereafter, the CSI reconstruction block 2850 may transmit (2860) a part or the whole of the channel matrix to the scheduling block (L2 MACS) 2870 of the DU through CPRI or eCPRI. The scheduling block 2870 of the DU may perform MU (e.g., UE) scheduling. Thereafter, the CSI reconstruction block 2850 may transfer the updated DL channel matrix corresponding to the reconstructed CSI to the channel memory 2880 of the RU. The RU may update the DL channel matrix from the transmitted slot. The scheduling block 2870 of the DU may transfer the MU-MIMO scheduling result to the DL beamformer 2890, and the input to be input to the DL beamformer 2890 may be called from the channel memory 2880.

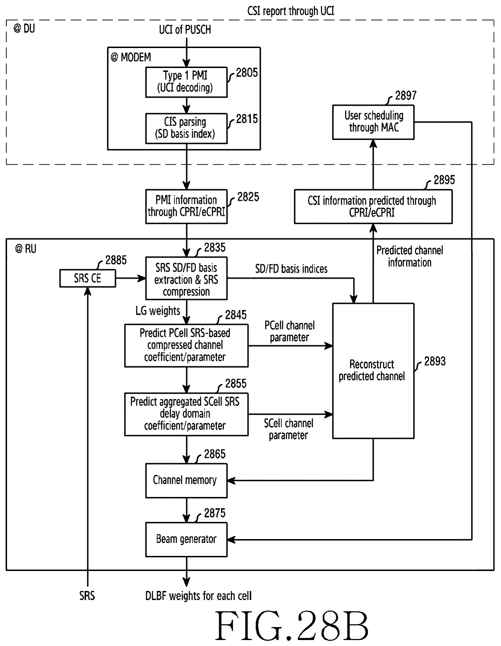

FIG. 28B illustrates a configuration of a base station for performing a method of estimating and predicting a channel of an SCell without SRS information of the SCell, based on at least one of an SRS or a PMI of a PCell, according to various embodiments of the disclosure.

Referring to FIG. 28B, unlike the channel prediction structure described above with reference to FIG. 27B, a compressed CSI prediction block 2840 of an SCell may be located in an RU.

The low-PHY block, which is a modem of the RU, may perform SRS channel estimation in the SRS CE block 2885. Independently of SRS channel estimation, the UCI including the Type 1 PMI may be decoded (2805) in the DU modem and then provided to the channel estimation and prediction block 2835 of the SCell of the RU through the CPRI/eCPRI interface 2825 as prior information to reduce the complexity of SD basis search necessary for SRS SD compression. The base station may compress the SRS channel information in the SD/FD domain by using the SD/FD basis extracted from the PMI and SRR and may transmit, to the compressed CSI estimation and prediction block 2855 of the SCell, information in which the information of the original channel is compressed by a linear coefficient in a dimension number corresponding to an AD/DD (angle-domain/delay domain). The base station may obtain an up-sampling estimated value by considering the entire band including the PCell and an SCell adjacent to the PCell in the DD area for the compressed information 2845 in the AD/DD area of the PCell channel, and the compressed CSI prediction information of the SCell may be obtained by generating an LC weight value predicted in a reduced dimension corresponding to up-sampling DD/AD in the channel prediction block of the RU. These pieces of information may be transferred to a block 2893 for CSI reconstruction located inside the RU. The CSI reconstruction block 2893 inside the RU may generate a channel matrix corresponding to CSI reconstruction by receiving a spatial-frequency domain basis-related value generated through CSI parsing (2915) and a basis vector searching process and an LC weight value integratedly predicted for the PCell and the SCell. The generated frequency domain base vector may have the feature such that the dimension of the vector is expanded to the number of RBs based on the entire bandwidth of the PCell and the adjacent SCell, rather than the number of RBs based on the bandwidth of the PCell.

Thereafter, the CSI reconstruction block 2893 may transmit a part of or all of the channel matrix to a scheduling block (L2 MACS) 2897 of the DU through CPRI or eCPRI 2895. The scheduling block 2897 of the DU may perform MU (for example, UE) scheduling. Thereafter, the CSI reconstruction block 2893 may transfer the updated DL channel matrix corresponding to the reconstructed CSI to the channel memory 2865 of the RU. The RU may update the DL channel matrix from the transferred slot. The scheduling block 2897 of the DU may transfer the MU-MIMO scheduling result to the DL beamformer 2875, and the input to be input to the DL beamformer 2875 may be called from the channel memory 2865.

According to various embodiments of the disclosure, the structures illustrated in FIG. 26, FIG. 27A, FIG. 27B, FIG. 28A, or FIG. 28B may not be limited by those in the drawings, and there may be individual implementations with regard to one of the DU and the RU in which the operation of each block is performed, as long as the blocks have the same or similar functions.

According to an embodiment, the channel prediction structure may include a structure in which, after performing CSI parsing, the modem block of the DU transmits the CSI parsing information to the scheduling block of the DU, thereby enabling more rapid initiation of MU-MIMO scheduling and more rapid acquisition of the scheduling result by performing the operation at a low complexity. The CSI reconstruction requires a product operation between large-dimensional matrices, thus having high complexity and requiring a long time for the operation. However, the above-described embodiment may have an advantage of requiring less computational complexity and time in CSI parsing, thereby enabling UCI decoding and CSI parsing to be performed more quickly and enabling MU scheduling to be secured more quickly.

According to an embodiment, the channel prediction structure may include a structure in which, for updated channel matrix information generated by performing CSI reconstruction, CSI parsing information is transmitted to the RU from the DU via a CPRI or eCPRI interface. The updated channel matrix has a large dimension, and thus may require consumption of a large amount of read & write time for transmission of the updated channel matrix (e.g., channel information) via CPRI/eCPRI. Therefore, in case that there is a resource available to reduce the implementation complexity of CSI reconstruction in RU L1 LPHY, transmitting of CSI parsing information having a smaller bit overhead to the RU through CPRI/eCPRI may reduce the entire processing time and thus enables a relatively new CSI (e.g., less outdated CSI) to be secured owing to the reduction of corresponding delay time, thereby contributing to the improvement of MU-MIMO performance.

According to an embodiment, the channel prediction structure may include a structure in which a process up to only a UCI decoding operation is performed in a modem block of the DU and a process up to a CSI reconstruction operation is performed by performing a CSI parsing operation in the L1 LPHY block inside the RU. In addition, the above-described channel prediction structure may include a structure in which the decoded UCI information is transmitted in a forward direction to the RU from the DU through a CPRI or eCPRI interface, and CSI parsing information is transmitted in a reverse direction to for the Scheduling block of the DU from the RU through a CPRI or eCPRI interface. According to an embodiment, in the above-described channel prediction structure, the decoded UCI information may be transmitted from the DU to the RU through a CPRI or eCPRI interface, to enable transfer of compressed channel information with low bit overhead.

As described above, the channel prediction structures according to various embodiments, including the structures illustrated in FIGS. 26, 27A, 27B, 28A, and 28B, may have different characteristics and advantages. Therefore, in view of the overall system design, various design options according to the above embodiments may be selected by comprehensively considering the available L1/L2/L1LPHY resources and processing time of the DU and the RU.

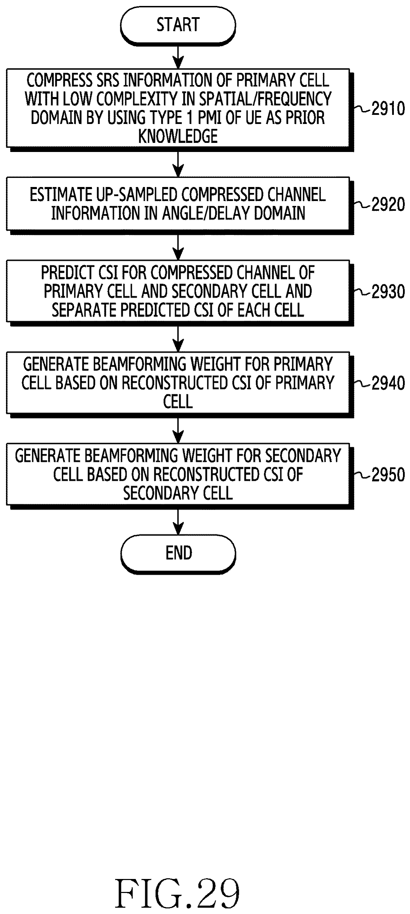

FIG. 29 illustrates a method of predicting a channel of an SCell according to various embodiments of the disclosure.

Referring to FIG. 29, a flow of operations in which a base station including a channel prediction structure predicts a channel of an SCell, based on channel information of a PCell, may be described.

In step 2910, the base station may compress SRS information of a primary cell in a space/frequency domain with low complexity by using Type 1 PMI of the UE as pre-knowledge. In addition, the base station may generate primary compressed channel information by using effective channel information and the spatial/frequency basis (SD/FD basis) in the angle/delay domain having a low dimensionality.

In step 2920, the base station may estimate up-sampled compressed channel information in the angle and/or delay domain, based on the compressed channel information of the primary cell and the integrated BW considering the primary cell to a secondary cell.

In step 2930, the base station may perform CSI prediction for a compressed channel of the primary cell and the secondary cell by considering the combined BW of the primary cell and the secondary cell, and may separate predicted CSIs of the primary cell and the secondary cell.

In step 2940, the base station may generate a beamforming weight for the primary cell, based on the reconstructed CSI of the primary cell.

In step 2950, the base station may generate a beamforming weight for the secondary cell, based on the reconstructed CSI of the secondary cell.

Operations of the above-described base station may be described based on the operations of the base station according to the embodiments described above. Therefore, description of the present embodiment overlapping that for the above-described operations of the base station may be omitted. At least one of the above-described operations of the base station may be separated into separate operations or two or more operations thereof may be combined into a single operation. In addition, at least one of the above-described operations of the base station may be omitted, or a new operation may be added to and organically combined with the above-described operations.

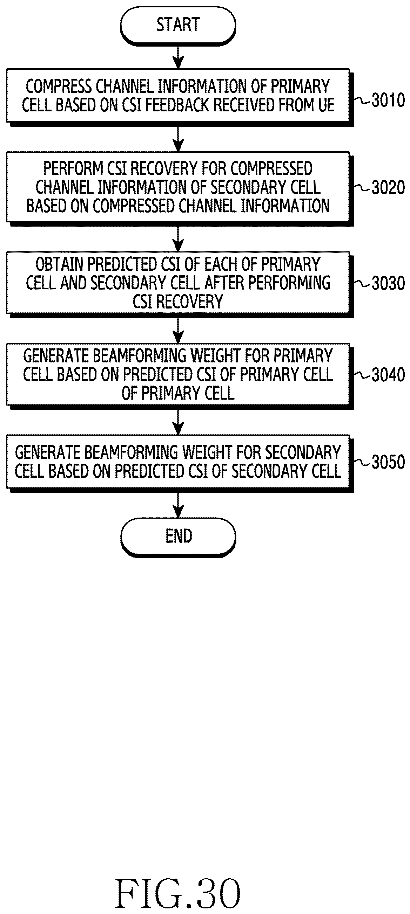

FIG. 30 illustrates a method for SCell channel prediction according to various embodiments of the disclosure;

Referring to FIG. 30, a flow of operations in which a base station including a channel prediction structure predicts a channel of an SCell, based on channel information of a PCell, may be described.

In operation 3010, the base station may compress channel information of a primary cell, based on the CSI feedback received from the UE.

In operation 3020, the base station may perform channel state information (e.g., CSI) recovery with regard to compressed channel information of a secondary cell, based on channel information of the primary cell.

In step 3030, the base station may obtain predicted CSI for each of the primary cell and the secondary cell after performing the CSI recovery.

In operation 3040, the base station may generate a beamforming weight for the primary cell, based on the predicted CSI of the primary cell.

In step 3050, the base station may generate a beamforming weight for the secondary cell, based on the predicted CSI of the secondary cell.

Operations of the above-described base station may be described based on the base station operations according to the above-described embodiments. Therefore, description of the present embodiment overlapping that for the above-described operations of the base station may be omitted. At least one of the above-described operations of the base station may be separated into separate operations or two or more operations thereof may be combined into a single operation. In addition, at least one of the above-described operations of the base station may be omitted, or a new operation may be added to and organically combined with the above-described operations.

According to various embodiments of the disclosure, a method performed by a base station in a wireless communication system is a method performed by a base station in a wireless communication system,

and may include: compressing channel information of a primary cell, based on a channel status information (CSI) feedback received from a UE; performing CSI recovery with regard to compressed channel information of a secondary cell, based on the compressed channel information; after the CSI recovery, obtaining predicted CSI for each of the primary cell and the secondary cell; generating a beamforming weight for the primary cell, based on the predicted CSI of the primary cell; and generating a beamforming weight for the secondary cell, based on the predicted CSI of the secondary cell.

According to an embodiment, the channel information is compressed in a spatial and frequency domain, and the compressed channel information of the secondary cell may be obtained by the CSI recovery from the compressed channel information of the primary cell.

According to an embodiment, the CSI recovery may be performed based on at least one sparse recovery algorithm among an inverse discrete Fourier transform (IDFT) based on interpolation, an IDFT based on a sub-matrix, and an IDFT based on a matrix completion algorithm.

According to an embodiment, the step of obtaining the predicted CSI of each of the primary cell and the secondary cell may include: reconstructing integrated compressed channel information of the primary cell and the secondary cell, based on the CSI recovery; and separating each of the predicted CSI of the primary cell and the predicted CSI of the secondary cell included in the reconstructed information.

According to an embodiment, the step of reconstructing the integrated compressed channel information may further include obtaining information on channel coefficients for each up-sampled delay tap in an intra-band from the integrated compressed channel information.

According to an embodiment, the integrated compressed channel information may be reconstructed based on a spatial basis and an extended frequency domain basis.

According to an embodiment, the predicted CSI of the primary cell and the predicted CSI of the secondary cell may be separated based on a frequency domain area of each carrier aggregation (CA) band and a bandwidth gap between carrier components.

According to an embodiment, the channel information may include information on at least one channel parameter, and the at least one channel parameter may include at least one of a Doppler parameter, a delay parameter, or a spatial vector according to an antenna.

According to an embodiment, the CSI recovery may be performed based on a window filter configured to extract at least one dominant signal in the time domain.

According to an embodiment, the CSI recovery may be performed by at least one of a distributed unit (DU) or a radio unit (RU) included in the base station.

According to various embodiments of the disclosure, in a wireless communication system, a base station may

include a transceiver, and at least one processor coupled to the transceiver, and the at least one processor may: compress channel information of a primary cell, based on channel status information (CSI) feedback received from a UE; perform CSI recovery for compressed channel information of a secondary cell, based on the compressed channel information; after performing the CSI recovery, obtain predicted CSI for each of the primary cell and the secondary cell; generate a beamforming weight for the primary cell, based on the predicted CSI of the primary cell; and generate a beamforming weight for the secondary cell, based on the predicted CSI of the secondary cell.

According to an embodiment, the channel information is compressed in a spatial and frequency domain, and the compressed channel information of the secondary cell may be obtained by CSI recovery from the compressed channel information of the primary cell.

According to an embodiment, the CSI recovery may be performed based on at least one sparse recovery algorithm among an inverse discrete Fourier transform (IDFT) based on interpolation, an IDFT based on a sub-matrix, and an IDFT based on a matrix completion algorithm.

According to an embodiment, the at least one processor may reconstruct integrated compressed channel information of the primary cell and the secondary cell, based on the CSI recovery, and may separate the predicted CSI of the primary cell and the predicted CSI of the secondary cell included in the reconstructed information.

According to an embodiment, the at least one processor may obtain information regarding a channel coefficient for each intra-band up-sampled delay tap from the integrated compressed channel information.

According to an embodiment, the integrated compressed channel information may be reconstructed based on a spatial basis and an extended frequency domain basis.

According to an embodiment, the predicted CSI of the primary cell and the predicted CSI of the secondary cell may be separated based on a frequency domain area of each carrier aggregation (CA) band and a bandwidth gap between carrier components.

According to an embodiment, the channel information may include information on at least one channel parameter, and the at least one channel parameter may include at least one of a Doppler parameter, a delay parameter, or a spatial vector according to an antenna.

According to an embodiment, the CSI recovery may be performed based on a window filter to extract at least one dominant signal in the time domain.

According to an embodiment, the CSI recovery may be performed in at least one of the distributed unit (DU) or the radio unit (RU) included in the base station.

It should be noted that the above-described configuration diagrams, illustrative diagrams of control/data signal transmission methods, illustrative diagrams of operation procedures, and structural diagrams are not intended to limit the scope of the disclosure. That is, all the constituent elements, entities, or operation steps described in the embodiments of the disclosure should not be construed as being essential elements for the implementation of the disclosure, and even when including only some of the elements, the disclosure may be implemented without impairing the true of the disclosure. Also, the above respective embodiments may be employed in combination, as necessary. For example, the methods proposed in the disclosure may be partially combined with each other to operate a network entity and a terminal.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of an entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits. Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof. That is, it will be apparent to those skilled in the art that other variants based on the technical idea of the disclosure may be implemented. Also, the above embodiments may be employed in combination, as necessary. As an example, some of the methods proposed by the disclosure may be combined with each other to operate a base station and a terminal. Moreover, although the above embodiments have been described based on the 5G NR system, other variants based on the technical idea of the embodiments may also be implemented in other communication systems such as the LTE, the LTE-A, or the LTE-A-Pro system.

Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a base station in a wireless communication system, the method comprising:

   compressing channel information of a primary cell, based on channel status information (CSI) feedback received from a UE;
   performing CSI recovery for compressed channel information of a secondary cell, based on the compressed channel information;
   after performing the CSI recovery, obtaining predicted CSI of each of the primary cell and the secondary cell;
   generating a beamforming weight for the primary cell, based on the predicted CSI of the primary cell; and
   generating a beamforming weight for the secondary cell, based on the predicted CSI of the secondary cell.

2. The method of claim 1, wherein the channel information is compressed in a spatial domain and a frequency domain, and the compressed channel information of the secondary cell is obtained by the CSI recovery from the compressed channel information of the primary cell.

3. The method of claim 1, wherein the CSI recovery is performed by at least one sparse recovery algorithm, among inverse discrete Fourier transform (IDFT) based on interpolation, IDFT based on a sub-matrix, or IDFT based on a matrix completion algorithm.

4. The method of claim 2, wherein the obtaining of the predicted CSI of each of the primary cell and the secondary cell comprises:

   reconstructing integrated compressed channel information of the primary cell and the secondary cell, based on the CSI recovery; and
   separating the predicted CSI of the primary cell and the predicted CSI of the secondary cell included in the reconstructed information.

5. The method of claim 4, wherein the reconstructing of the integrated compressed channel information comprises: obtaining, from the integrated compressed channel information, information on a channel coefficient for each intra-band up-sampled delay tap.

6. The method of claim 4, wherein the integrated compressed channel information is reconstructed based on a spatial basis and an extended frequency domain basis.

7. The method of claim 4, wherein the predicted CSI of the primary cell and the predicted CSI of the secondary cell are separated from each other, based on a frequency domain area of each carrier aggregation (CA) band and a bandwidth gap between carrier components.

8. The method of claim 1, wherein the channel information comprises information regarding at least one channel parameter, and the at least one channel parameter comprises at least one of a Doppler parameter, a delay parameter, or a spatial vector according to an antenna.

9. A base station in a wireless communication system, the base station comprising:

   a transceiver; and
   at least one processor coupled with the transceiver and configured to:

      compress channel information of a primary cell, based on a channel status information (CSI) feedback received from a UE;
      based on the compressed channel information, perform CSI recovery for the compressed channel information of a secondary cell;
      after performing the CSI recovery, obtain predicted CSI of each of the primary cell and the secondary cell;
      generate a beamforming weight for the primary cell, based on the predicted CSI of the primary cell; and
      generate a beamforming weight for the secondary cell, based on the predicted CSI of the secondary cell.

10. The base station of claim 9, wherein the channel information is compressed in a spatial domain and a frequency domain, and the compressed channel information of the secondary cell is obtained by the CSI recovery from the compressed channel information of the primary cell.

11. The base station of claim 9, wherein the CSI recovery is performed by at least one sparse recovery algorithm, among inverse discrete Fourier transform (IDFT) based on interpolation, IDFT based on a sub-matrix, or IDFT based on a matrix completion algorithm.

12. The base station of claim 10, wherein the at least one processor is configured to:

   reconstruct integrated compressed channel information of the primary cell and the secondary cell, based on the CSI recovery; and
   separate the predicted CSI of the primary cell and the predicted CSI of the secondary cell included in the reconstructed information.

13. The base station of claim 12, wherein the at least one processor is configured to:

obtain, from the integrated compressed channel information, information on a channel coefficient for each intra-band up-sampled delay tap.

14. The base station of claim 12, wherein the integrated compressed channel information is reconstructed based on a spatial basis and an extended frequency domain basis.

15. The base station of claim 12, wherein the predicted CSI of the primary cell and the predicted CSI of the secondary cell are separated from each other, based on a frequency domain area of each carrier aggregation (CA) band and a bandwidth gap between carrier components.

FIG.1

FIG.2

120 OR 130

330

CONTROLLER

310

COMMUNICATION UNIT

320

STORAGE

FIG.3

210 OR 310

| 402 | 404 | 406-1 | 408 |
|---|---|---|---|
| ENCODING-AND-MODULATING UNIT | DIGITAL BEAMFORMER | TRANSMISSION PATH | ANALOG BEAMFORMER |

:

406-N

TRANSMISSION PATH

FIG.4

RADIO FRAME (514)

SLOT (506)

RESOURCE ELEMENT (512)

$N_{SC}^{RB}$ SUBCARRIERS (510)

(504)

RESOURCE BLOCK (508)

$N_{symb}$ OFDM SYMBOLS (502)

FIG.5

| PCELL CHANNEL INFORMATION | | ? |
|---|---|---|
| PCell BW 100MHz | | SCell BW 80MHz |

| PCELL CHANNEL INFORMATION | | SCELL CHANNEL INFORMATION |
|---|---|---|

# FIG.6

FIG.7

(a) DL carrier aggregation

(b) TDD C-band CONFIGURATION

(a) SIGNAL PATH BETWEEN BASE STATION AND UE

(b) FREQUENCY CHARACTERISTICS RELATED TO DELAY VALUE

# FIG.8

Type 1 PMI parsing information (i1, i2)

Initialization/acquisition

| | | | | |
|---|---|---|---|---|
| Prediction control | TO/FO removal ⌐ 911 | SD basis selection/ update ⌐ 913 | FD basis selection/ update ⌐ 915 | Cyclic matrix update in case of SD/FD basis change ⌐ 917 |

⌐ 903

Tracking

SRS buffer (TTI t, t-P, t-2P, t-3P)

901

all PTTI

| TO/FO removal ⌐ 921 | SD basis compression ⌐ 922 | FD basis compression ⌐ 923 | Kalman filter tracking for estimating and predicting compressed channel coefficient in delay domain and angle domain of PCell ⌐ 924 | Estimate and predict channel coefficients in delay domain and angle domain for aggregated entire BW including SCell and PCell ⌐ 925 | Extract Doppler parameter (apply UKF or EKF) ⌐ 926 |
|---|---|---|---|---|---|

SD/FD-related parameter update ⌐ 919

Target TTI = t + L

Channel reconstruction ⌐ 905

All TTI

Estimation/ reconstruction of all channels ⌐ 907

Estimate diffuse/residual components ⌐ 931

EP 4 693 938 A1

FIG.9A

Type 1 PMI parsing information (i1, i2)

Initialization/periodic update

Prediction control — 903

SRS buffer (TTI t, t-P, t-2P, t-3P) — 901

All *PTTI*

TO/FO removal — 911

SD basis selection/ update — 913

FD basis selection/ update — 915

Cyclic matrix update in case of SD/FD basis change — 917

Tracking

TO/FO removal — 921

SD basis compression — 922

FD basis compression — 923

RLS filter tracking for estimating and predicting compressed channel coefficient in delay domain and angle domain of PCell — 927

Estimate and predict channel coefficients in delay domain and angle domain for aggregated entire BW including SCell and PCell — 928

Linear interpolation with RLS filter (for each TTI) — 929

SD/FD-related parameter update — 919

Target TTI = t + L

Channel reconstruction — 905

All TTI

Estimation/ reconstruction of all channels — 907

Estimate diffuse/residual components — 931

EP 4 693 938 A1

FIG.9B

FIG.10A

(i11, i12)  (i15, i16)

| SD basis extraction | FD basis extraction | Cyclic matrix update in case of SD/FD basis change |

1011  1013  1015

1003

Prediction control

(i1 & i2)

| Estimate compressed channel coefficient matrix (W2) in delay domain and angle domain | Kalman filter tracking for estimating and predicting compressed channel coefficient in delay domain and angle domain of PCell | Estimate and predict channel coefficients in delay domain and angle domain for aggregated entire BW including SCell and PCell | Linear interpolation with RLS filter (for each TTI) |

1021  1023  1025  1028

1001

PMI buffer (TTI t, t-P, t-2P, t-3P)

All PTTI

1029

SD/FD-related parameter update

Target TTI = t + L

1033

Channel reconstruction

All TTI

1035

Estimation/ reconstruction of all channels (PCell +SCell)

1031

Estimate diffuse/residual components

EP 4 693 938 A1

FIG.10B

Channel
transfer
function

$\leftarrow$ PCell BW $\rightarrow$  $\leftarrow$ SCell BW $\rightarrow$

$\leftarrow$ To tal BW = sampling rate of $\rightarrow$
the channel

$N_{bw\_all}$ = 547 RB
= 274 PRG

| PCell BW 100MHz | BW gap 20MHz | SCell BW 80MHz |
|---|---|---|
| = 273 RB = 137 PRG | = 55 RB = 28 PRG | = 219 RB = 137 PRG |

(a) Entire BW including PCell and SCell

TDD C-band

| Flexible-Use Licenses | | Post-Transition FSS |

$A_1$ $A_2$ $A_3$ $A_4$ $A_5$ $B_1$ $B_2$ $B_3$ $B_4$ $B_5$ $C_1$ $C_2$ $C_3$ $C_4$ Guard Band FSS

20 megahertz
sub-blocks

3.7 GHz    3.8 GHz    3.9 GHz    3.98 GHz  4.0 GHz    4.2 GHz

⇧                    ⇧
1st carrier (PCell)    2nd carrier SCell

(b) TDD C-band Configuration

FIG.11

EP 4 693 938 A1

TDD

Frequency

Reciprocal channel

Common DL & UL frequency

$f_{DU\,UL}^{TDD}$

DL | UL

Time

FDD | Frequency

Different DL & UL frequency

$f_{UL}^{FDD}$ | @B66 (1.7GHz) UL

Duplexing gap (400 MHz)

$f_{DL}^{FDD}$ | @B66 (2.1GHz) DL

Non-reciprocal channel

Time

Channel reciprocity in TDD and FDD of PCell and SCell

Angular power spectrum vs time (UL)

Power (dB)

Angle (degree) | Time (ms)

UMi (UL APS)

Angular power spectrum vs time (DL)

Normalized power

Angle (degree) | Time (ms)

UMi (DL APS)

gNB | UE

(b) Angle reciprocity in FDD

UML Scenario

UL
DL

Normalized delay power spectrum

Delay (ns)

UMi LoS

UML Scenario

UL
DL

Normalized delay power spectrum

Delay (ns)

UMi LoS

(c) Delay reciprocity in FDD

# FIG.12A

FIG.12B

FIG.12C

EP 4 693 938 A1

SRS

PCell

No SRS

SCell

CSI ACQUISITION : ←————————————————————→ FREQUENCY

COMPRESS SPATIAL DOMAIN FOR
STATIC CSI OF PCELL SRS ~1310

INTRA-BAND SCELL CSI RECOVERY IN TIME DOMAIN TO WHICH PSEUDO-INVERSE OF
UP-SAMPLED IDFT SUB-MATRIX CONSIDERED BASED ON PCELL CHANNEL INFORMATION
(INCLUDING RB RESOLUTION) IN EXTENDED BW IS APPLIED 1320

→ TIME DOMAIN DELAYED INTERPOLATION
THROUGH LS/MMSE APPROACH IS POSSIBLE

SCELL CSI RECOVERY
& PREDICTION

PREDICT TIME DOMAIN WINDOW CHANNEL PARAMETER (INCLUDING REDUCED DIMENSION)
OF COMPRESSED CSI FOR EXTENDED BAND OF INTRA-BAND CA 1330

CSI RECONSTRUCTION THROUGH JOINT SPATIAL FREQUENCY DOMAIN DECOMPRESSION FOR
EXTENDED BAND OF INTRA-BAND CA BY USING PREDICTED CHANNEL PARAMETERS 1340

SEPARATE PREDICTED CSI OF PCELL 1350

SEPARATE PREDICTED CSI OF SCELL 1370

BF CALCULATION :

BF WEIGHT OF PCELL 1360

BF WEIGHT OF SCELL 1380

PDSCH :

PCell

SCell

←————————————————————→ FREQUENCY

FIG.13

FIG.14

EP 4 693 938 A1

FIG.15

61

Space-frequency domain | Angle-frequency domain | Angle-time domain | Angle-frequency domain | Space-frequency domain

$N_{Tx}$

$H^{[space]}_{fsam1=0}$
$H^{[space]}_{fsam1=1}$
$H^{[space]}_{fsam1=2}$

$H^{[space]}_{fsam1} = N_{bw\_p}-1$

SD compression

$H^{[ag]}_{fsam1=0}$
$H^{[ag]}_{fsam1=1}$
$H^{[ag]}_{fsam1=2}$

$H^{[ag]}_{fsam1}=N_{bw\_p}-1$

$N_{bw\_all}$-Point DFT Sub-matrix의 *Pesudo-Inverse*

$H^{[ag]}_{fsam2=0}$

$H^{[ag]}_{fsam2}=CEIL(\frac{N_{bw\_all}}{N_{bw\_p}})L-1$

Window filter (having delay tap length of L) for partial extraction

$h^{[ag]}_{DFT}=0$

0

0

$N_{bw\_all}$-Point DFT

$\tilde{H}^{[ag]}_{fsam2=0}$
$\tilde{H}^{[ag]}_{fsam2=1}$
$\tilde{H}^{[ag]}_{fsam2=2}$

$\tilde{H}^{[ag]}_{fsam2}=N_{bw\_p}-1$

$\tilde{H}^{[ag]}_{fsam1}=N_{bw\_all}-1$

SD decompression

$\tilde{H}^{[space]}_{fsam1=0}$
$\tilde{H}^{[ag]}_{fsam1=1}$

$\tilde{H}^{[ag]}_{fsam1}=N_{bw\_all}-1$

## FIG.16

SD: Spatial-domain
AD: Angle-domain
FD: Frequency-domain
DD: Delay-domain

$N_3$: Sub-band#

SD, Ant, Port # : $2N_1$, $N_2$

$W^{(l)}$ : Columns are preceding vectors for L-th layer for each sub-band

FD

$2N_1$, $N_2$

$W^{(l)} = W_1 W_2^{(l)}$

SD compression:
W : Precoding matrix (W/dim. : $N_{sb}$)
$W_1$ : Subset of pre-defined DFT matrix (w/dim. : $2N_1N_2 \times 2L$)
$W_2$ : (SD only) LC coefficient matrix (w/dim. : $2L \times N_{sb}$)

$$W_1 = \begin{bmatrix} v_0, v_1, ..., v_{L-1} & 0 \\ 0 & v_0, v_1, ..., v_{L-1} \end{bmatrix}$$

Here, each column vector is pre-defined DFT vector and is selected for SD compression

SD basis # 2L in AD

SD $W_1$ $2N_1$, $N_2$

AD

AD

FD Sub-band# : $N_f$

$W_2^{(l)}$

FD

SD basis # 2L in AD

$$\Phi_{SD} = \begin{bmatrix} b_{k_1^{(0)} k_2^{(0)}} b_{k_1^{(1)} k_2^{(1)}} ... b_{k_1^{(L-1)} k_2^{(L-1)}} \\ b_{k_1^{(0)} k_2^{(0)}} b_{k_1^{(1)} k_2^{(1)}} ... b_{k_1^{(L-1)} k_2^{(L-1)}} \end{bmatrix}$$

$H^{[space]} = \Phi_{SD} H^{[ag]}$

$H^{[space]} \in C^{N_T \times N_{f1}}$

Spatial compression

$H^{[ag]} \in C^{2L \times N_f}$

FIG.17

FIG.18

EP 4 693 938 A1

START

CHANNEL OBSERVATION FOR PCELL ~1901

ESTIMATE CHANNEL COMPONENTS ~1903

~1905
ESTIMATE SPECULAR COMPONENTS → ESTIMATE DIFFUSE COMPONENTS ~1907

ESTIMATE CHANNEL FROM PREDICTED COMPONENTS ~1909

CHANNEL PREDICTION FOR SCELL ~1911

END

FIG.19

FIG.20

FIG.21

FIG.22

FIG.23

2410 ⟹ 2420 ⟹ 2430 ⟹ 2440

Linear channel prediction    Predicted LC coefficients    Reconstructed CSI

| Ant $W_1(t)$ angle | angle $C(t)$ delay |
|---|---|

⟹

$C(t)$ → $C'(t)$ → $\hat{C}(t+1)$ →

| Ant $W_1(t+1)$ angle | $\hat{C}(t+1)$ |
|---|---|

= 

| Ant H(t) freq |
|---|

Spatial (DFT)
basis set

delay
Selected
IDFT
Matrix
(subband)
freq

Frequency (DFT)
basis set

Common (SD/FD)
basis LC coefficients

SCell CSI
recovery

Predicted PCell/SCell LC
coefficients
(by 2-dimensional lattice
linear predicted parameter
estimation)

Spatial (DFT)
basis set

delay
Selected
IDFT
Matrix
(subband)
freq

Frequency (DFT)
basis mapping

FIG.24

FIG.25

@ DU

UCI of PUSCH

@ MODEM

eType II PMI
(UCI decoding) — 2610

CIS parsing — 2620

eType II precoding matrix
(channel reconstruction) — 2630

Channel information

User scheduling
through MAC — 2640

Information
transmission — 2650

@ RU

Channel information
transmission — 2660

Beam generator — 2670

UE scheduling result

DLBF weights

FIG.26

@ DU

UCI of PUSCH

@ MODEM

eType II PMI
(UCI decoding)  2710

CIS parsing  2720

Compressed CSI
prediction block of
SCell  2740

SD/FD basis
non-zero bitmap

Predicted LC coefficients (in reduced dimension)

2730

Predicted channel reconstruction

Predicted channel
information

User scheduling
through MAC  2750

Predicted channel information

Channel
information
transmission through
CPRI/eCPRI  2760

@ RU

Channel memory  2770

Beam generator  2780

UE scheduling result

DLBF weights

FIG.27A

FIG.27B

FIG.28A

FIG.28B

CSI report through UCI

@ DU

UCI of PUSCH

@ MODEM

Type 1 PMI (UCI decoding) — 2805

CIS parsing (SD basis index) — 2815

PMI information through CPRI/eCPRI — 2825

2897 — User scheduling through MAC

2895 — CSI information predicted through CPRI/eCPRI

Predicted channel information

2893 — Reconstruct predicted channel

@ RU

2835 — SRS SD/FD basis extraction & SRS compression

SD/FD basis indices

LG weights

2885 — SRS CE

2845 — Predict PCell SRS-based compressed channel coefficient/parameter

PCell channel parameter

2855 — Predict aggregated SCell SRS delay domain coefficient/parameter

SCell channel parameter

2865 — Channel memory

2875 — Beam generator

DLBF weights for each cell

SRS

START

COMPRESS SRS INFORMATION OF PRIMARY CELL WITH LOW COMPLEXITY IN SPATIAL/FREQUENCY DOMAIN BY USING TYPE 1 PMI OF UE AS PRIOR KNOWLEDGE ~2910

ESTIMATE UP-SAMPLED COMPRESSED CHANNEL INFORMATION IN ANGLE/DELAY DOMAIN ~2920

PREDICT CSI FOR COMPRESSED CHANNEL OF PRIMARY CELL AND SECONDARY CELL AND SEPARATE PREDICTED CSI OF EACH CELL ~2930

GENERATE BEAMFORMING WEIGHT FOR PRIMARY CELL BASED ON RECONSTRUCTED CSI OF PRIMARY CELL ~2940

GENERATE BEAMFORMING WEIGHT FOR SECONDARY CELL BASED ON RECONSTRUCTED CSI OF SECONDARY CELL ~2950

END

FIG.29

START

COMPRESS CHANNEL INFORMATION OF PRIMARY CELL BASED ON CSI FEEDBACK RECEIVED FROM UE — 3010

PERFORM CSI RECOVERY FOR COMPRESSED CHANNEL INFORMATION OF SECONDARY CELL BASED ON COMPRESSED CHANNEL INFORMATION — 3020

OBTAIN PREDICTED CSI OF EACH OF PRIMARY CELL AND SECONDARY CELL AFTER PERFORMING CSI RECOVERY — 3030

GENERATE BEAMFORMING WEIGHT FOR PRIMARY CELL BASED ON PREDICTED CSI OF PRIMARY CELL OF PRIMARY CELL — 3040

GENERATE BEAMFORMING WEIGHT FOR SECONDARY CELL BASED ON PREDICTED CSI OF SECONDARY CELL — 3050

END

# FIG.30

# INTERNATIONAL SEARCH REPORT

| | International application No. |
|---|---|
| | **PCT/KR2024/003548** |

| A. | CLASSIFICATION OF SUBJECT MATTER |
|---|---|

**H04B 7/06**(2006.01)i; **H04B 17/364**(2015.01)i; **H04B 17/373**(2015.01)i; **H04L 5/00**(2006.01)i; **H04L 27/26**(2006.01)i

According to International Patent Classification (IPC) or to both national classification and IPC

| B. | FIELDS SEARCHED |
|---|---|

Minimum documentation searched (classification system followed by classification symbols)

H04B 7/06(2006.01); H04B 7/01(2006.01); H04B 7/0417(2017.01); H04B 7/0456(2017.01); H04L 25/02(2006.01); H04L 5/00(2006.01); H04L 5/14(2006.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), 프라이머리 셀(primary cell), 세컨더리 셀 (secondary cell), 압축(compress), CSI 리커버리(CSI recovery), 예측(prediction), 빔포밍 가중치(beamforming weight)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2021-0105155 A1 (COHERE TECHNOLOGIES, INC.) 08 April 2021 (2021-04-08)<br>See paragraphs [0347]-[0736]; and figures 45-70. | 1-15 |
| A | US 2022-0131579 A1 (HUAWEI TECHNOLOGIES CO., LTD.) 28 April 2022 (2022-04-28)<br>See paragraphs [0045]-[0076]; and figure 2. | 1-15 |
| A | US 2023-0038585 A1 (AT&T INTELLECTUAL PROPERTY I, L.P.) 09 February 2023 (2023-02-09)<br>See paragraphs [0121]-[0134]; and figures 7A-7B. | 1-15 |
| A | US 2021-0258991 A1 (QUALCOMM INCORPORATED) 19 August 2021 (2021-08-19)<br>See paragraphs [0120]-[0129]; and figure 9. | 1-15 |
| A | WO 2021-007695 A1 (QUALCOMM INCORPORATED et al.) 21 January 2021 (2021-01-21)<br>See paragraphs [0057]-[0185]; and figures 4-6. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 July 2024** | **04 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/003548**

| Patent document cited in search report | | | Publication date (day/month/year) | Patent family member(s) | | | Publication date (day/month/year) |
|---|---|---|---|---|---|---|---|
| US | 2021-0105155 | A1 | 08 April 2021 | EP | 3750252 | A1 | 16 December 2020 |
| | | | | EP | 3750252 | A4 | 11 August 2021 |
| | | | | US | 11632270 | B2 | 18 April 2023 |
| | | | | WO | 2019-157230 | A1 | 15 August 2019 |
| US | 2022-0131579 | A1 | 28 April 2022 | CN | 112217550 | A | 12 January 2021 |
| | | | | CN | 112217550 | B | 29 March 2022 |
| | | | | EP | 3993281 | A1 | 04 May 2022 |
| | | | | US | 11804884 | B2 | 31 October 2023 |
| | | | | WO | 2021-008477 | A1 | 21 January 2021 |
| | | | | WO | 2021-008477 | A9 | 04 March 2021 |
| US | 2023-0038585 | A1 | 09 February 2023 | US | 11496201 | B2 | 08 November 2022 |
| | | | | US | 11523396 | B2 | 06 December 2022 |
| | | | | US | 11532882 | B2 | 20 December 2022 |
| | | | | US | 11533199 | B2 | 20 December 2022 |
| | | | | US | 11582070 | B2 | 14 February 2023 |
| | | | | US | 11611456 | B2 | 21 March 2023 |
| | | | | US | 11843480 | B2 | 12 December 2023 |
| | | | | US | 2022-0278448 | A1 | 01 September 2022 |
| | | | | US | 2022-0278713 | A1 | 01 September 2022 |
| | | | | US | 2022-0278714 | A1 | 01 September 2022 |
| | | | | US | 2022-0278715 | A1 | 01 September 2022 |
| | | | | US | 2022-0278717 | A1 | 01 September 2022 |
| | | | | US | 2022-0278729 | A1 | 01 September 2022 |
| | | | | US | 2022-0278730 | A1 | 01 September 2022 |
| | | | | US | 2022-0278792 | A1 | 01 September 2022 |
| | | | | US | 2022-0278793 | A1 | 01 September 2022 |
| | | | | US | 2022-0278875 | A1 | 01 September 2022 |
| | | | | US | 2022-0279452 | A1 | 01 September 2022 |
| | | | | US | 2022-0279501 | A1 | 01 September 2022 |
| | | | | US | 2022-0279520 | A1 | 01 September 2022 |
| | | | | US | 2022-0279535 | A1 | 01 September 2022 |
| | | | | US | 2023-0029375 | A1 | 26 January 2023 |
| | | | | US | 2023-0044335 | A1 | 09 February 2023 |
| | | | | US | 2023-0050488 | A1 | 16 February 2023 |
| | | | | US | 2023-0164003 | A1 | 25 May 2023 |
| | | | | US | 2023-0198813 | A1 | 22 June 2023 |
| US | 2021-0258991 | A1 | 19 August 2021 | CN | 115152175 | A | 04 October 2022 |
| | | | | EP | 4104374 | A1 | 21 December 2022 |
| | | | | US | 11743889 | B2 | 29 August 2023 |
| | | | | WO | 2021-162859 | A1 | 19 August 2021 |
| WO | 2021-007695 | A1 | 21 January 2021 | WO | 2021-008007 | A1 | 21 January 2021 |
| | | | | WO | 2021-008450 | A1 | 21 January 2021 |

Form PCT/ISA/210 (patent family annex) (July 2022)